# EUROPEAN PATENT APPLICATION

(11) **EP 4 575 714 A1**
(43) Date of publication of application: **25.06.2025**
(21) Application number: 24783549.9
(22) Date of filing: 08.10.2024
(51) Int. Cl.: G06F 1/16

(54) **FOLDABLE HOUSING AND ELECTRONIC DEVICE COMPRISING SAME**

(30) Priority: 17.10.2023 KR 20230138992; 27.11.2023 KR 20230167174
(71) Applicant: Samsung Electronics Co., Ltd., Suwon-si, Gyeonggi-do 16677 (KR)
(72) Inventor: RYU, Jooyeol, Suwon-si, Gyeonggi-do 16677 (KR); KIM, Byoungjun, Suwon-si, Gyeonggi-do 16677 (KR); KIM, Sunglak, Suwon-si, Gyeonggi-do 16677 (KR); KIM, Hyunmuk, Suwon-si, Gyeonggi-do 16677 (KR); JANG, Gyudae, Suwon-si, Gyeonggi-do 16677 (KR); JUN, Jaeyoung, Suwon-si, Gyeonggi-do 16677 (KR); CHOI, Sunyong, Suwon-si, Gyeonggi-do 16677 (KR); CHOI, Junyoung, Suwon-si, Gyeonggi-do 16677 (KR); CHOI, Jinwook, Suwon-si, Gyeonggi-do 16677 (KR); YOON, Shinhyuk, Suwon-si, Gyeonggi-do 16677 (KR)
(74) Representative: Gulde & Partner
(86) International application number: PCT/KR2024/015296
(87) International publication number: WO 2025/084695

(57) **Abstract**

According to an embodiment of the disclosure, an electronic device may comprise a first housing, a second housing, a hinge structure, a hinge cover, a magnetically permeable member, a detecting sensor, or a magnetic member. The hinge structure may be connected to the first housing and the second housing. The hinge cover may cover the hinge structure. The magnetically permeable member may be disposed on the hinge cover. The magnetically permeable member may include a magnetically permeable material. The magnetic member may be disposed on the second housing. The magnetic member may be spaced apart from the detecting sensor. Other various embodiments are possible.

## Description

### [Technical Field]

Various embodiments of the disclosure relate to an electronic device, e.g., a foldable housing and an electronic device in the same.

### [Background Art]

Advancing information communication technologies and semiconductor technologies accelerate the spread and use of various electronic devices. In particular, recent electronic devices are being developed to carry out communication while carried on.

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with the integrated functionality, including an entertainment function, such as playing video games, a multimedia function, such as replaying music/videos, a communication and security function for mobile banking, and a scheduling or e-wallet function. These electronic devices have been downsized to be conveniently carried by users.

As mobile communication services extend up to multimedia service sectors, the display of the electronic device may be increased to allow the user satisfactory use of multimedia services as well as voice call or text messaging services. Accordingly, a foldable flexible display may be disposed on the entire area of the housing structure separated to be foldable.

The foregoing information is provided solely as related art to aid understanding of the disclosure, and none of the foregoing content is claimed as prior art related to the disclosure or may be used in making decisions related to the prior art.

### [Disclosure of Invention]

### [Solution to Problems]

The present invention is set out in the appended set of claims. Further embodiments lying outside the scope of the claims serve comparative and illustrative purpose.

According to an embodiment of the disclosure, an electronic device may comprise a first housing, a second housing, a hinge structure, a hinge cover, a magnetically permeable member, a detecting sensor, or a magnetic member. The hinge structure may be connected to the first housing and the second housing. The hinge cover may cover the hinge structure. The magnetically permeable member may be disposed on the hinge cover. The magnetically permeable member may include a magnetically permeable material. The magnetic member may be disposed on the second housing. The magnetic member may be spaced apart from the detecting sensor. When the first housing is positioned at a first position with respect to the second housing, the magnetically permeable member may be located to be aligned with the detecting sensor and the magnetic member. When the first housing is positioned at a second position different from the first position with respect to the second housing, the magnetically permeable member may be located to be not aligned with the detecting sensor and the magnetic member.

According to an embodiment of the disclosure, an electronic device may comprise a foldable housing, a hinge structure, a flexible display, a hinge cover, a magnetic permeable member, a detecting sensor, or a magnetic member. The foldable housing may include a first housing or a second housing. The hinge structure may be connected to the first housing and the second housing. The hinge structure may be at least partially positioned between the first housing and the second housing. The flexible display may be disposed on the foldable housing. The flexible display may include a first display area, a second display area, or a folding area. The first display area may be disposed on the first housing. The second display area may be disposed on the second housing. The folding area may be connected to the first display area and the second display area. The hinge cover may cover at least a portion of the hinge structure. The magnetically permeable member may be disposed on the hinge cover. The magnetically permeable member may include a magnetically permeable material. The detecting sensor may be disposed on the second housing. The magnetic member may be disposed on the second housing. The magnetic member may be spaced apart from the detecting sensor. When the first housing is positioned at a first position with respect to the second housing, an intensity of magnetic flux detected by the detecting sensor may be a designated threshold or more. When the first housing is positioned at a second position different from the first position with respect to the second housing, the intensity of the magnetic flux detected by the detecting sensor may be less than the designated threshold.

According to an embodiment of the disclosure, an electronic device may comprise a multi-foldable housing, a first hinge assembly, a second hinge assembly, a flexible display, a first detecting sensor, a first magnetic member, or a first magnetically permeable member. The multi-foldable housing may include a first housing, a second housing, or a third housing. The second housing may be connected to be rotatable with respect to the first housing. The third housing may be connected to be rotatable with respect to the first housing. The first hinge assembly may be connected to the first housing and the second housing. The first hinge assembly may be at least partially positioned on the first housing and the second housing. The second hinge assembly may be connected to the first housing and the third housing. The second hinge assembly may be at least partially positioned on the second housing and the third housing. The flexible display may be disposed on the multi-foldable housing. The first detection sensor may be disposed in an area adjacent to the first hinge assembly. The first magnetic member may be disposed in an area adjacent to the first hinge assembly. The first magnetically permeable member may be disposed on the first hinge assembly. When the second housing is positioned at a first position with respect to the first housing, an intensity of magnetic flux detected by the first detecting sensor may be a designated threshold or more. When the second housing is positioned at a second position different from the first position with respect to the first housing, the intensity of the magnetic flux detected by the first detecting sensor may be less than the designated threshold.

### [Brief Description of Drawings]

FIG. 1 is a block diagram illustrating an electronic device in a network environment according to an embodiment;
FIG. 2 is a view illustrating an unfolded state of an electronic device according to an embodiment of the disclosure;
FIG. 3 is a view illustrating a folded state of an electronic device according to an embodiment of the disclosure;
FIG. 4 is an exploded perspective view illustrating an electronic device according to an embodiment of the disclosure;
FIG. 5 is a plan view illustrating an electronic device according to an embodiment of the disclosure;
FIG. 6 is an exploded perspective view illustrating an electronic device, a magnetic member, and a detecting sensor according to an embodiment of the disclosure;
FIG. 7 is an assembled perspective view illustrating an electronic device, a magnetic member, and a detecting sensor according to an embodiment of the disclosure;
FIG. 8 is an exploded view illustrating a hinge cover and a magnetically permeable member according to an embodiment of the disclosure;
FIG. 9 is a view illustrating a hinge cover and a magnetically permeable member coupled together, according to an embodiment of the disclosure;
FIG. 10 is a view illustrating an arrangement relationship between a detecting sensor, a magnetic member, and a magnetically permeable member according to an embodiment of the disclosure;
FIG. 11 is a cross-sectional view illustrating an electronic device according to an embodiment of the disclosure;
FIG. 12 is a view schematically illustrating a state in which a magnetically permeable member is located to be aligned with a magnetic member and a detecting sensor according to an embodiment of the disclosure;
FIG. 13 is a view schematically illustrating a state in which a magnetically permeable member is located to be not aligned with a magnetic member and a detecting sensor according to an embodiment of the disclosure;
FIG. 14 is a view illustrating a relative positional relationship between a detecting sensor, a magnetic member, and a magnetically permeable member according to an embodiment of the disclosure;
FIG. 15 is a cross-sectional view illustrating a state in which a detecting sensor and a magnetically permeable member are aligned with each other according to an embodiment of the disclosure;
FIG. 16 is a cross-sectional view illustrating a state in which a detecting sensor and a magnetically permeable member are not aligned with each other according to an embodiment of the disclosure;
FIG. 17 is a cross-sectional view illustrating a state in which a detecting sensor and a magnetically permeable member are not aligned with each other according to an embodiment of the disclosure;
FIG. 18 is a cross-sectional view illustrating a state in which a detecting sensor and a magnetically permeable member are not aligned with each other according to an embodiment of the disclosure;
FIG. 19 is a cross-sectional view illustrating a state in which a detecting sensor and a magnetically permeable member are aligned with each other according to an embodiment of the disclosure;
FIG. 20 is a cross-sectional view illustrating an electronic device according to an embodiment of the disclosure;
FIG. 21 is a graph illustrating a magnetic force detected by a detecting sensor according to an embodiment of the disclosure;
FIG. 22 is a cross-sectional view illustrating an electronic device according to an embodiment of the disclosure;
FIG. 23 is a cross-sectional view illustrating an electronic device according to an embodiment of the disclosure;
FIG. 24 is a cross-sectional view illustrating an electronic device according to an embodiment of the disclosure;
FIG. 25 is a cross-sectional view illustrating an electronic device according to an embodiment of the disclosure;
FIG. 26 is a graph illustrating a magnetic force detected by a detecting sensor according to an embodiment of the disclosure;
FIG. 27 is a cross-sectional view illustrating an electronic device according to an embodiment of the disclosure;
FIGS. 28, 29, 30, and 31 are views schematically illustrating a relative positional relationship between a detecting sensor, a magnetic member, and a magnetically permeable member according to an embodiment of the disclosure;
FIG. 32 is a perspective view illustrating an unfolded state of an electronic device according to an embodiment of the disclosure;
FIG. 33 is a perspective view illustrating an unfolded state of an electronic device according to an embodiment of the disclosure;
FIG. 34 is a perspective view illustrating a folded state of an electronic device according to an embodiment of the disclosure;
FIG. 35 is a side view illustrating the electronic device of FIG. 34 viewed from one direction (e.g., -Y direction) to another direction (e.g., +Y direction);
FIG. 36 is a partially exploded view illustrating an electronic device according to an embodiment of the disclosure;
FIGS. 37A and 37B are plan views illustrating an electronic device according to an embodiment of the disclosure;
FIGS. 38, 39, and 40 are views schematically illustrating a user input is input as a housing of an electronic device is folded according to an embodiment of the disclosure;
FIG. 41 is a view schematically illustrating a change in user interface according to a user input according to an embodiment of the disclosure;
FIG. 42 is a view schematically illustrating a change in user interface according to a user input according to an embodiment of the disclosure;
FIG. 43 is a view schematically illustrating a change in user interface according to a user input according to an embodiment of the disclosure;
FIG. 44 is a block diagram illustrating an electronic device according to an embodiment of the disclosure; and
FIG. 45 is a cross-sectional view illustrating an electronic device according to an embodiment of the disclosure.

### [Mode for the Invention]

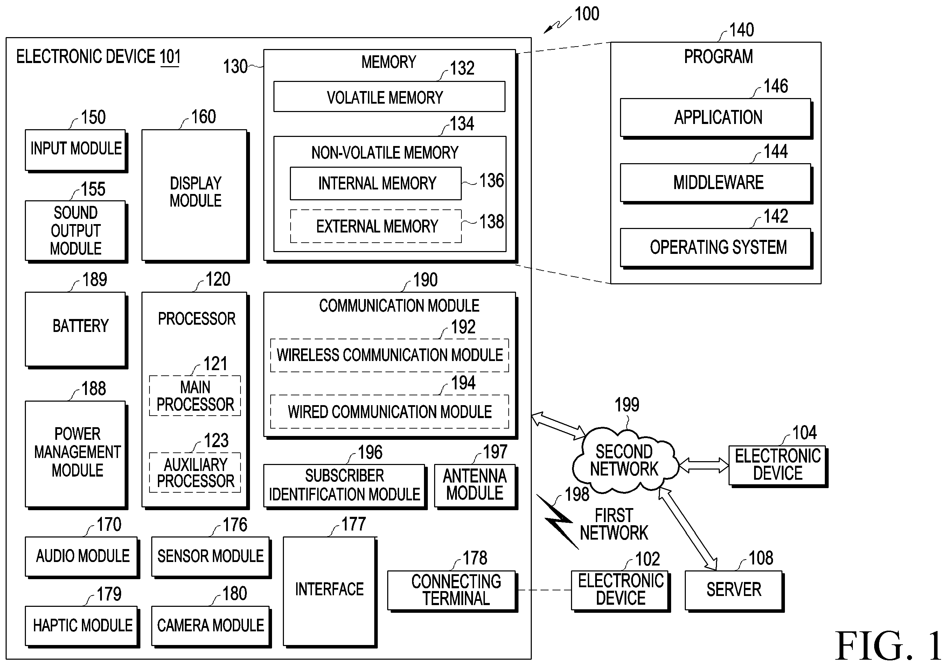

FIG. 1 is a block diagram illustrating an electronic device 101 in a network environment 100 according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

In the description of the drawings below, a spatial coordinate system (e.g., a Cartesian coordinate system) is shown, which are defined by the X, Y and Z axes orthogonal to each other. Here, the X-axis may indicate the width direction of the components of the electronic device or the electronic device, the Y-axis may indicate the length direction of the components of the electronic device or the electronic device, and the Z-axis may indicate the height (or thickness) direction of the components of the electronic device or the electronic device, but the disclosure is not limited thereto.

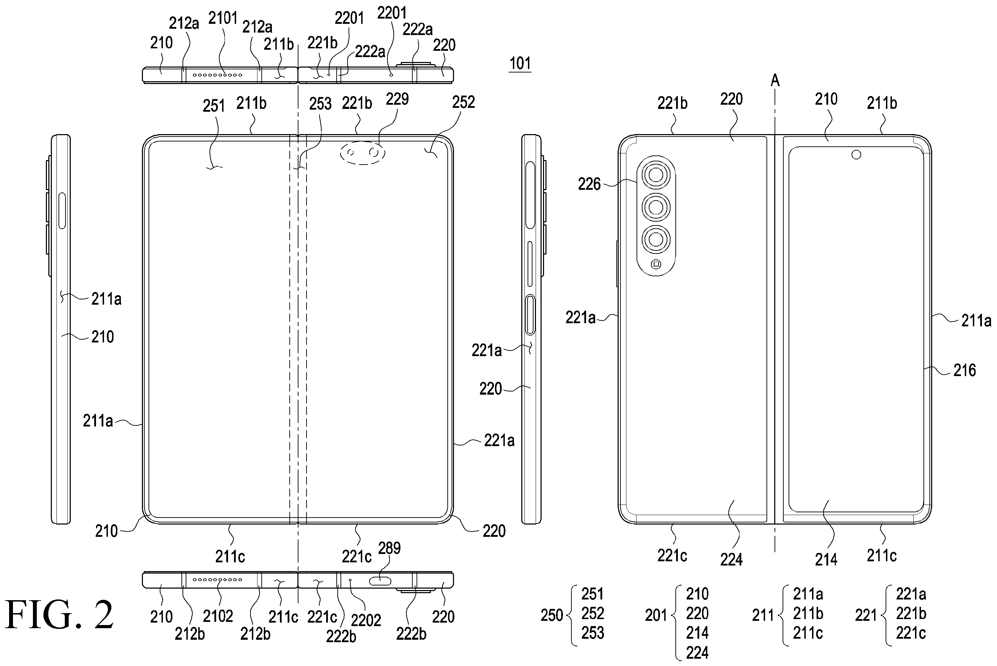

FIG. 2 is a view illustrating an unfolded state of an electronic device according to an embodiment of the disclosure.

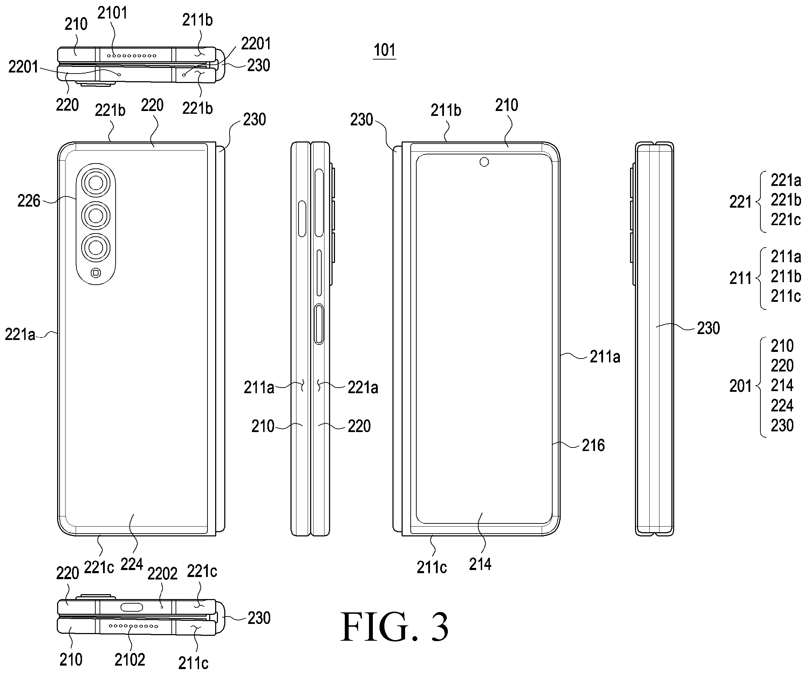

FIG. 3 is a view illustrating a folded state of an electronic device according to an embodiment of the disclosure.

FIG. 2 is a view illustrating an unfolded state among folding states of an electronic device (e.g., a foldable electronic device) according to an embodiment of the disclosure. FIG. 3 is a view illustrating a folded state among folding states of an electronic device (e.g., a foldable electronic device) according to an embodiment of the disclosure. The electronic device 101 of FIGS. 2 and 3, as an example of the electronic device 101 shown in FIG. 1, may be a foldable or bendable electronic device.

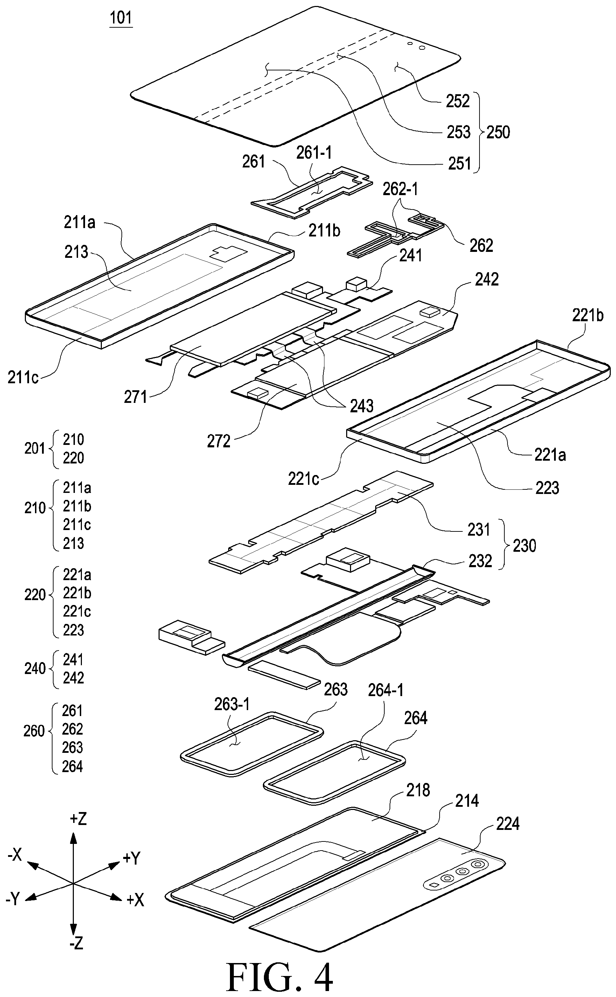

The embodiments of FIGS. 2 and 3 may be combined with the embodiment of FIG. 1 or the embodiments of FIGS. 4 to 45.

The configuration of the electronic device 101 of FIGS. 2 and 3 may be identical in whole or part to the configuration of the electronic device 101 of FIG. 1. The electronic device 101 of FIGS. 2 and 3 may be defined and/or referred to as a foldable electronic device.

Referring to FIGS. 2 and 3, an electronic device 101 may include a foldable housing 201 and a flexible or foldable display 250 (hereinafter, simply " flexible display 250") (e.g., the display module 160 of FIG. 1) disposed in a space formed by the foldable housing 201. According to an embodiment, the surface where the flexible display 250 is disposed (e.g., the surface where the flexible display 250 is viewed from the outside of the electronic device 101) may be defined as the front surface of the electronic device 101. The opposite surface of the front surface may be defined as a rear surface of the electronic device 101. The surface surrounding the space between the front and rear surfaces may be defined as a side surface of the electronic device 101. The foldable housing 201 may be defined and/or referred to as a housing.

According to an embodiment, the foldable housing 201 may include a first housing 210, a second housing 220 including a sensor area 229, a first rear cover 214, a second rear cover 224, or a hinge assembly 230. According to an embodiment, the hinge assembly 230 may include a hinge structure (e.g., the hinge structure 231 of FIG. 4) connected to the first housing 210 and the second housing 220. The hinge assembly 230 may include a hinge cover (e.g., the hinge cover 232 of FIG. 4) covering the hinge structure or a foldable portion of the foldable housing 201. The foldable housing 201 of the electronic device 101 are not limited to the shape and coupling shown in FIGS. 2 and 3 but may rather be implemented in other shapes or via a combination and/or coupling of other components. For example, in an embodiment, the first housing 210 and the first rear cover 214 may be integrally formed with each other, and the second housing 220 and the second rear cover 224 may be integrally formed with each other. The first housing 210 may be defined and/or referred to as a first housing portion. The second housing 220 may be defined and/or referred to as a second housing portion.

According to an embodiment, the foldable housing 201 may include a plurality of housings (e.g., the first housing 210 and the second housing 220) that are rotatable with respect to each other and are separable. According to an embodiment, the foldable housing 201 is an integrated housing structure and may include a plurality of housing areas that are rotatable with respect to each other and are not separated. According to an embodiment, the hinge cover (e.g., the hinge cover 232 in FIG. 4) may form a portion of the foldable housing 201 composed of an integrated housing structure. For example, the hinged cover may form an integrated structure with a plurality of non-separable housing areas that are rotatable with respect to each other. According to an embodiment, the hinge cover (e.g., the hinge cover 232 of FIG. 4) may form some of a plurality of housings (e.g., the first housing 210 and the second housing 220) that are rotatable with respect to each other and are separable. For example, the hinge cover may form an integrated structure with the first housing 210 or an integrated structure with the second housing 220.

According to an embodiment, an illuminance sensor and an image sensor may be disposed in the sensor area 222. The illuminance sensor may detect the amount of light around the electronic device 101. The image sensor may convert the light incident through the camera lens into a digital signal. The illuminance sensor and the image sensor may be visually exposed to the flexible display 250. According to an embodiment, the illuminance sensor and the image sensor may not be visually exposed. For example, the camera may be configured as an under display camera (UDC). Pixels in one area of the flexible display 250 corresponding to the location of the UDC may be configured to differ from pixels in other areas, so that the image sensor and/or camera may not be visually exposed.

According to an embodiment, the first housing 210 may be connected to the hinge assembly 230 and may include a first front surface facing in a first front direction and a first rear surface facing in a direction opposite to the first front direction. The second housing 220 may be connected to the hinge assembly 230 and may include a second front surface facing in a second front direction and a second rear surface facing in a direction opposite to the second front direction. The first housing 210 may rotate about the hinge assembly 230 with respect to the second housing 220. The second housing 220 may rotate about the hinge assembly 230 with respect to the first housing 210. The electronic device 101 may transform to a folded state or an unfolded state. For example, the folded state of the electronic device 101 may be defined and/or referred to as a folded state of the foldable housing 201. The unfolded state of the electronic device 101 may be defined and/or referred to as an unfolded state of the foldable housing 201.

According to an embodiment, the first housing 210 may include a 1-1th side surface 211a disposed to be spaced apart from and in parallel to the folding axis A of the hinge assembly 230 between the first front surface and the first rear surface, and the second housing 220 may include a 2-1th side surface 221a disposed to be spaced apart from and in parallel to the folding axis A of the hinge assembly 230 between the second front surface and the second rear surface. Further, the first housing 210 may include a 1-2th side surface 121b perpendicular to the 1-1th side surface 211a and having an end connected with the 1-1th side surface 211a and another end connected with the hinge assembly 230 and a 1-3th side surface 211c perpendicular to the 1-1th side surface 211a and having an end connected with the 1-1th side surface 211a and another end connected with the hinge assembly 230 and spaced apart from and in parallel to the 1-2th side surface 211b. The second housing 220 may include a 2-2th side surface 221b perpendicular to the 2-1th side surface 221a and having an end connected with the 2-1th side surface 221a and another end connected with the hinge assembly 230 and a 2-3th side surface 221c perpendicular to the 2-1th side surface 221a and having an end connected with the 2-1th side surface 221a and another end connected with the hinge assembly 230 and spaced apart from and in parallel to the 2-2th side surface 221b. When the first housing 210 is folded about the hinge assembly 230 with respect to the second housing 220 (e.g., FIG. 3), the 1-1th side surface 211a may approach the 2-1th side surface 221a and, when the first housing 210 is unfolded about the hinge assembly 230 with respect to the second housing 220 (e.g., FIG. 2), the 1-1th side surface 211a may move away from the 2-1th side surface 221a.

According to an embodiment, in the fully folded state among folded states of the electronic device 101, the first front surface may face the second front surface and, in the fully unfolded state among unfolded states, the first front direction may be identical to the second front direction. In the fully unfolded state, the distance between the 1-1th side surface 211a and the 2-1th side surface 221a may be the largest.

According to an embodiment, the first housing 210 and the second housing 220 are disposed on two opposite sides of the folding axis A and be overall symmetrical in shape with respect to the folding axis A. As described below, the angle or distance between the first housing 210 and the second housing 220 may be varied depending on whether the electronic device 101 is in the unfolded state, the folded state, or the partially unfolded (or partially folded) intermediate state. For example, the folding state of the electronic device 101 and/or the foldable housing 201 may include a folded state, an unfolded state, or an intermediate state.

According to an embodiment, as shown in FIG. 2, the first housing 210 and the second housing 220 together may form a recess to receive the flexible display 250. According to an embodiment, at least a portion of the first housing 210 and the second housing 220 may be formed of a metallic material or a non-metallic material having rigidity of a selected size for supporting the flexible display 250. According to an embodiment, at least a portion of the first housing 210 (e.g., at least a portion of the metal portion formed of a metallic material of the first housing 210) may be provided as a portion of an antenna (e.g., sidewall antenna) or a portion of a sensor of the electronic device 101. At least a portion of the second housing 220 (e.g., at least a portion of the metal portion formed of a metallic material of the second housing 220) may be provided as a portion of an antenna (e.g., sidewall antenna) or a portion of a sensor of the electronic device 101. At least a portion formed of a metallic material may provide at least a portion of an electrical ground of the electronic device 101 and may be electrically connected with a ground line or a ground plane formed on the printed circuit board disposed in the foldable housing 201.

According to an embodiment, a protection member may be disposed outside the flexible display 250. The protection member may be formed integrally with the side surface of the foldable housing 201 or as a separate structure. The flexible display 250 may not adhere to the side surface of the foldable housing 201 and/or the protection member. A gap may be formed between the flexible display 250 and the protection member. The protection member may be configured to cover the internal configuration of the electronic device 101 from the outside or to protect the internal configuration of the electronic device 101 from external impact. According to an embodiment, the protection member may be configured to cover the line disposed on the flexible display 250 from the outside or to protect it from an external impact.

According to an embodiment, the first rear cover 214 may be disposed on one side of the folding axis A on the rear surface of the electronic device 101 and have, e.g., a substantially rectangular periphery which may be surrounded by the first housing 210. Similarly, the second rear cover 224 may be disposed on the opposite side of the folding axis A on the rear surface of the electronic device 101 and its periphery may be surrounded by the second housing 220.

According to an embodiment, the first rear cover 214 and the second rear cover 224 may be substantially symmetrical in shape with respect to the folding axis A. However, the first rear cover 214 and the second rear cover 224 are not necessarily symmetrical in shape. In an embodiment, the electronic device 101 may include the first rear cover 214 and the second rear cover 224 in various shapes. In an embodiment, the first rear cover 214 may be integrally formed with the first housing 210, and the second rear cover 224 may be integrally formed with the second housing 220.

According to an embodiment, the first rear cover 214, the second rear cover 224, the first housing 210, and the second housing 220 may form a space where various components (e.g., a printed circuit board or battery) of the electronic device 101 may be disposed. According to an embodiment, one or more components may be arranged or visually exposed on/through the rear surface of the electronic device 101. For example, at least a portion of a sub display (e.g., the sub display 218 of FIG. 4) may be visually exposed through a first rear surface area 216 of the first rear cover 214. For example, one or more components or sensors may be visually exposed through a second rear surface area 226 of the second rear cover 224. In an embodiment, the sensor may include a proximity sensor and/or a rear camera.

According to an embodiment, the front camera disposed on the front surface (e.g., the second front surface) of the electronic device 101 or the rear camera exposed through the second rear area 226 of the second rear cover 224 may include one or more lenses, an image sensor, and/or an image signal processor. The flash may include, e.g., a light emitting diode (LED) or a xenon lamp. In an embodiment, two or more lenses (an infrared (IR) camera, a wide-angle lens, and a telescopic lens) and image sensors may be disposed on one surface of the electronic device 101.

Referring to FIG. 3, the hinge cover (e.g., the hinge cover 232 of FIG. 4) included in the hinge assembly 230 may be disposed between the first housing 210 and the second housing 220 to hide the internal components (e.g., the hinge structure 231 of FIG. 4). According to an embodiment, the hinge assembly 230 may be hidden by a portion of the first housing 210 and second housing 220 or be exposed to the outside depending on the state (the unfolded state, intermediate state, or folded state) of the electronic device 101.

According to an embodiment of the present invention, as shown in FIG. 2, in the unfolded state (e.g., a fully unfolded state) of the electronic device 101, the hinge assembly 230 may be hidden not to be exposed by the first housing 210 and the second housing 220. According to an embodiment, as shown in FIG. 3, in the folded state (e.g., a fully folded state) of the electronic device 101, the hinge assembly 230 may be exposed to the outside between the first housing 210 and the second housing 220. As an embodiment, in the intermediate state in which the first housing 210 and the second housing 220 are folded with a certain angle, the hinge assembly 230 may be partially exposed to the outside between the first housing 210 and the second housing 220. However, in this case, the exposed area may be smaller than that in the completely folded state. In an embodiment, the hinge assembly 230 may include a curved surface.

In an embodiment, the flexible display 250 may be disposed in a space formed by the foldable housing 201. For example, the flexible display 250 may be seated in a recess formed by the foldable housing 201 and may be seen from the outside through the front surface (e.g., the first front surface and/or the second front surface) of the electronic device 101. According to an embodiment, the flexible display 250 may constitute most of the front surface (e.g., the first front surface and/or the second front surface) of the electronic device 101. Accordingly, the front surface (e.g., the first front surface and/or the second front surface) of the electronic device 101 may include the flexible display 250 and a partial area of the first housing 210 and a partial area of the second housing 220 adjacent to the flexible display 250. The rear surface (e.g., the first rear surface and/or second rear surface) of the electronic device 101 may include the first rear cover 214, a partial area of the first housing 210 adjacent to the first rear cover 214, the second rear cover 224, and a partial area of the second housing 220 adjacent to the second rear cover 224.

According to an embodiment, the flexible display 250 may refer to a display in which at least a partial area thereof may be deformed into a flat surface or a curved surface. According to an embodiment, the flexible display 250 may include a folding area 253, a first display area 251 disposed on one side of the folding area 253 (e.g., the left side of the folding area 253 of FIG. 2), and a second display area 252 disposed on the opposite side of the folding area 253 (e.g., the right side of the folding area 1203 of FIG. 2).

According to an embodiment, the first display area 251 may be disposed on the first housing 210, and the second display area 252 may be disposed on the second housing 220. According to an embodiment, the folding area 253 may connect the first display area 251 and the second display area 252, and may be disposed on the hinge assembly 230.

The segmentation of the flexible display 250 as shown in FIG. 2 is merely an example, and the display 250 may be divided into a plurality of (e.g., four or more, or two) areas depending on the structure or function of the display 200. For example, in the embodiment illustrated in FIG. 2, the area of the flexible display 250 may be divided by the folding area 253 extending parallel to the folding axis A, but the area of the flexible display 250 may be divided by another folding axis (e.g., a folding axis parallel to the width direction of the electronic device).

According to an embodiment, the flexible display 250 may be coupled to or disposed adjacent to a touch panel having a pressure sensor capable of measuring the intensity (pressure) of touch or a touch sensing circuit. For example, as an example of the touch panel, the flexible display 250 may be coupled to or disposed adjacent to an electromagnetic induction panel for detecting an electromagnetic resonance (EMR)-type stylus pen (e.g., the input module 150 of FIG. 1).

According to an embodiment, the first display area 251 and the second display area 252 may be overall symmetrical in shape with respect to the folding area 253.

Described below are the operation of the first housing 210 and the second housing 220 and each area of the flexible display 250 depending on the state (e.g., the folded state, unfolded state, or intermediate state) of the electronic device 101.

According to an embodiment, when the electronic device 101 is in the unfolded state (e.g., FIG. 2), the first housing 210 and the second housing 220 may be disposed to face in the same direction while forming an angle of 180 degrees. The surface of the first display area 251 and the surface of the second display area 252 of the flexible display 250 may be angled at 180 degrees therebetween while facing in the same direction (e.g., forward of the front surface of the electronic device). In this case, the folding area 253 may form the same plane with the first display area 251 and the second display area 252.

According to an embodiment, when the electronic device 101 is in the folded state (e.g., FIG. 3), the first housing 210 and the second housing 220 may be disposed to face each other. The surface of the first display area 251 and the surface of the second display area 252 of the flexible display 250 may face each other while forming a narrow angle (e.g., between 0 degrees and 10 degrees). At least a portion of the folding area 253 may be formed as a curve having a predetermined curvature.

According to an embodiment, when the electronic device 101 is in the intermediate state, the first housing 210 and the second housing 220 may be disposed at a certain angle. The surface of the first display area 251 and the surface of the second display area 252 of the flexible display 250 may form an angle larger than that in the folded state and smaller than that in the unfolded state. The folding area 253 may at least partially have a curved surface with a predetermined curvature and, in this case, the curvature may be smaller than that when it is in the folded state.

According to an embodiment, the first housing 210 may include first housing holes 2101 and 2102. According to an embodiment, the first housing holes 2101 and 2102 may include a1-1th housing hole 2101 formed in the 1-2th side surface 211b of the first housing 210 and a 1-2th housing hole 2102 formed in the 1-3th side surface 211c of the first housing 210.

According to an embodiment, the 1-2th side surface 211b of the first housing 210 may include a 1-1th segmenter 212a formed of a non-metallic material. According to an embodiment, a pair of 1-1th segmenters 212a spaced apart from each other may be provided. According to an embodiment, the 1-1th housing hole 2101 may be formed between the pair of 1-1th segmenters 212a.

According to an embodiment, the 1-3th side surface 211c of the first housing 210 may include a 1-2th segmenter 212b formed of a non-metallic material. According to an embodiment, a pair of 1-2th segmenters 212b spaced apart from each other may be provided. According to an embodiment, the 12th housing hole 2102 may be formed between the pair of 1-2th segmenters 212b.

According to an embodiment, the number of at least one 1-1th housing hole 2101 may be equal to the number of at least one 1-2th housing hole 2102.

According to an embodiment, the 1-2th side surface 211b and the 1-3th side surface 211c may be disposed in parallel. According to an embodiment, the plurality of 1-1th housing holes 2101 and the plurality of 1-2th housing holes 2102 may be disposed to overlap each other with respect to the length direction (e.g., Y-axis direction of FIG. 4) of the electronic device 101. For example, the plurality of 1-1th housing holes 2101 may be disposed to correspond to the plurality of 1-2th housing holes 2102, respectively, in the length direction (e.g., the Y axis direction of FIG. 4) of the electronic device 101.

According to an embodiment, the plurality of 1-1th housing holes 2101 may be disposed on a straight line with respect to the width direction (e.g., the X axis direction of FIG. 4) of the electronic device 101 (e.g., first housing 210). According to an embodiment, the plurality of 1-2th housing holes 2102 may be disposed on a straight line with respect to the width direction (e.g., the X axis direction of FIG. 4) of the electronic device 101 (e.g., first housing 210).

According to an embodiment, the second housing 220 may include second housing holes 2201 and 2204. According to an embodiment, the second housing holes 2201 and 2204 may include a 2-1th housing hole 2201 formed in the 2-2th side surface 221b of the second housing 220 and a 2-2th housing hole 2204 formed in the 2-3th side surface 211c of the second housing 220.

According to an embodiment, the 2-2th side surface 221b of the second housing 220 may include a 2-1th segmenter 222a formed of a non-metallic material. According to an embodiment, a pair of 2-1th segmenters 222a spaced apart from each other may be provided. According to an embodiment, a portion of the 2-1th housing hole 2201 may be formed between the pair of 2-1th segmenters 222a, and the remaining portion of the 2-1th housing hole 2201 may be formed between the folding axis A (or the hinge assembly 230) and any one of the 2-1th segmenters 222a.

According to an embodiment, the 2-3th side surface 221c of the second housing 220 may include a 2-2th segmenter 222b formed of a non-metallic material. According to an embodiment, a pair of 2-2th segmenters 222b spaced apart from each other may be provided. According to an embodiment, the 2-1th housing hole 2201 may be formed between the pair of 2-2th segmenters 222b.

According to an embodiment, the 2-3th side surface 221c of the second housing 220 may include a connection terminal 289 (e.g., the connection terminal 178 of FIG. 1).

FIG. 4 is an exploded perspective view illustrating an electronic device according to an embodiment of the disclosure.

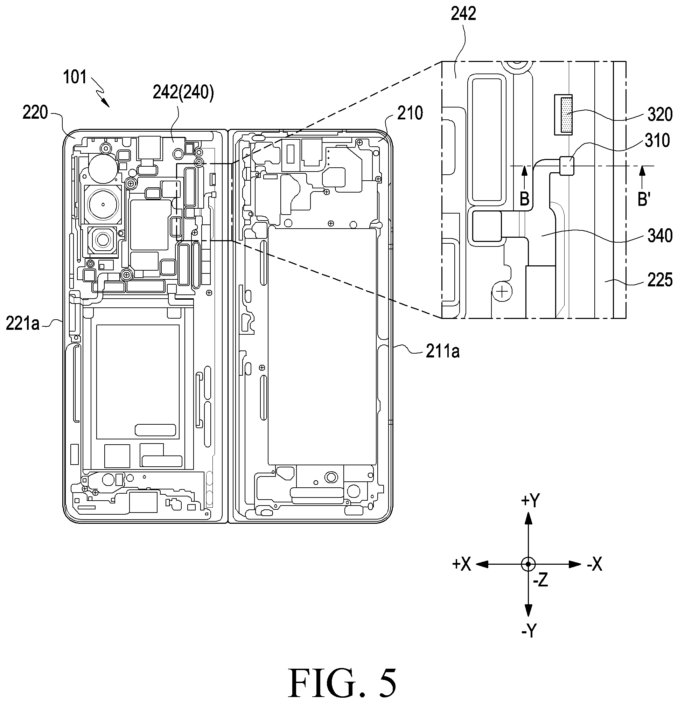

The embodiment of FIG. 4 may be combined with the embodiments of FIGS. 1 to 3 or the embodiments of FIGS. 5 to 45.

Referring to FIG. 4, an electronic device 101 (e.g., the electronic device 101 of FIG. 1, or the electronic device 101 of FIGS. 2 and 3) may include a foldable housing 201, a first housing 210, a second housing 220, a hinge assembly 230, a flexible display 250, a circuit board 240, a waterproofing member 260, a first battery 271, or a second battery 272.

The configuration of the foldable housing 201, the first housing 210, the second housing 220, the hinge assembly 230, or the flexible display 250 of FIG. 4 may be identical in whole or part to the configuration of the foldable housing 201, the first housing 210, the second housing 220, the hinge assembly 230, or the flexible display 250 of FIGS. 2 and 3.

According to an embodiment, the electronic device 101 may include various electronic/electrical components disposed inside or outside the first housing 210 and the second housing 220. The various electronic/electrical components may include, e.g., a processor (e.g., the processor 120 of FIG. 1), memory (e.g., the memory 130 of FIG. 1), an input module (e.g., the input module 150 of FIG. 1), a sound output module (e.g., sound output module 155 of FIG. 1), a display 250 (e.g., the display module 160 of FIG. 1), an audio module (e.g., the audio module 170 of FIG. 1), a sensor (e.g., the sensor module 176 of FIG. 1), an interface (e.g., the interface 177 of FIG. 1), a connecting terminal (e.g., the connecting terminal 178 of FIG. 1 or the connecting terminal 289 of FIG. 2), a haptic module (e.g., the haptic module 179 of FIG. 1), a camera module (e.g., the camera module 180 of FIG. 1), a power management module (e.g., the power management module 188 of FIG. 1), batteries 271 and 272 (e.g., the battery 189 of FIG. 1), a communication module (e.g., the communication module 190 of FIG. 1), a subscriber identification module (e.g., the subscriber identification module 196 of FIG. 1), or an antenna module (e.g., the antenna module 197 of FIG. 1). The electronic components may be appropriately separated and disposed in the inner or outer space of the first housing 210 and the second housing 220. At least one (e.g., the connecting terminal 178) of the components may be omitted from the electronic device 101, or one or more other components may be added in the electronic device 101. Further, some of these components may be integrated into one component.

According to an embodiment, the electronic device 101 is a foldable electronic device, and may include a plurality of batteries to supply and store power required for driving to electronic components. For example, the electronic device 101 may include a first battery 271 and a second battery 272 disposed in the first housing 210 and the second housing 220, respectively.

According to an embodiment, the first battery 271 may be disposed inside the first housing 210. The second battery 272 may be disposed inside the second housing 220. According to an embodiment, the first battery 271 may be disposed inside the first housing 210 including the first rear cover 214. The first battery 271 may be positioned between the first plate 213 and the first rear cover 214. The second battery 272 may be disposed inside the second housing 220 including the second rear cover 224. The second battery 272 may be positioned between the second plate 223 and the second rear cover 224.

According to an embodiment, the foldable housing 201 may be defined and/or referred to as a housing or a deformable housing. The first housing 210 may be defined and/or referred to as a first housing portion. The second housing 220 may be defined and/or referred to as a second housing portion.

According to an embodiment, the first housing 210 may include a 1-1th side surface 211a (e.g., the 1-1th side surface 211a of FIGS. 2 to 3), a 1-2th side surface 211b (e.g., the 1-2th side surface 211b of FIGS. 2 to 3), a 1-3th side surface 211c (e.g., the 1-3th side surface 211c of FIGS. 2 to 3), and/or a first plate 213.

According to an embodiment, the second housing 220 may include a 2-1th side surface 221a (e.g., the 2-1th side surface 221a of FIGS. 2 to 3), a 2-2th side surface 221b (e.g., the 2-2th side surface 221b of FIGS. 2 to 3), a 2-3th side surface 221c (e.g., the 2-3th side surface 221c of FIGS. 2 to 3), and/or a second plate 223.

According to an embodiment, the electronic device 101 is a foldable electronic device, and may include a first plate 213 and/or a second plate 223 for disposing components in the first housing 210 and the second housing 220. In an embodiment, the first plate 213 may be interpreted as a component of the first housing 210, and the second plate 223 may be interpreted as a component of the second housing 220. In an embodiment, the first plate 213 may be interpreted as a separate component from the first housing 210, and the second plate 223 may be interpreted as a separate component from the second housing 220. Various electronic components and/or the circuit board 240 may be disposed on the first plate 213 and/or the second plate 223.

According to an embodiment, the electronic device 101 may include a circuit board 240. The circuit board 240 may be disposed inside the foldable housing 201. The circuit board 240 may include a printed circuit board (PCB), a flexible printed circuit board (FPCB), or a rigid-flexible PCB (RF-PCB). The circuit board 240 may include a first circuit board 241 disposed in the first housing 210 or a second circuit board 242 disposed in the second housing 220.

According to an embodiment, the first plate 213 and the first circuit board 241 may be disposed in the first housing 210. The second plate 223 and the second circuit board 242 may be disposed in the second housing 220. The first plate 213 may include a first surface facing in a first front direction (e.g., the +Z direction of FIG. 4), and the second plate 223 may include a second surface facing in a second front direction (e.g., the +Z direction of FIG. 4). The first plate 213 and the second plate 223 may be folded or unfolded with respect to each other by the hinge structure 231 formed corresponding to the folding area 253 of the flexible display 250 and be formed to face each other in the folded state and, in the unfolded state, be formed so that the first surface and the second surface face in the same direction.

According to an embodiment, the first circuit board 241 may be disposed in the first waterproof area 261-1 formed by the first waterproof member 261.

According to an embodiment, the flexible display 250 may be disposed in the first housing 210 and the second housing 220. According to an embodiment, the first display area 251 may be disposed on the first housing 210 (e.g., the first plate 213), and the second display area 252 may be disposed on the second housing 220 (e.g., the second plate 223). According to an embodiment, the folding area 253 may connect the first display area 251 and the second display area 252 and may be disposed on the hinge structure 231.

According to an embodiment, the first circuit board 241 may be disposed under the first plate 213 (in the -Z-axis direction), and the second circuit board 242 may be disposed under the second plate 223 (in the -Z-axis direction).

According to an embodiment, signals of a processor for implementing various functions and operations of the electronic device 101 may be transferred to electronic components through various conductive lines and/or connectors formed on the circuit board 240.

According to an embodiment, the foldable housing 201 may include a first housing 210, a second housing 220, a first rear cover 214, a second rear cover 224, and a hinge assembly 230.

According to an embodiment, the first rear cover 214 may be defined and/or interpreted as a component of the first housing 210. For example, the first housing 210 may include a first rear cover 214. The second rear cover 224 may be defined and/or interpreted as a component of the second housing 220. For example, the second housing 220 may include a second rear cover 224.

According to an embodiment, the flexible display 250 may include a display panel. In an embodiment, the first plate 213 and the second plate 223 may be disposed between the display panel and the first circuit board 241 and the second circuit board 242. For example, at least a portion of the first plate 213 may be disposed between the display panel and the first circuit board 241. At least a portion of the second plate 223 may be disposed between the display panel and the second circuit board 242. The hinge assembly 230 may be disposed between the first plate 213 and the second plate 223.

According to an embodiment, the electronic device 101 may include a flexible printed circuit board 243 (FPCB) that electrically connects the first circuit board 241 and the second circuit board 242. At least a portion of the flexible printed circuit board 243 may be disposed on the hinge assembly 230 (e.g., the hinge structure 231).

According to an embodiment, the electronic device 101 may further include a sub display 218 (e.g., the display module 160 of FIG. 1) disposed between the first housing 210 (e.g., the first plate 213) and the first rear cover 214. According to an embodiment, the sub display 218 may include a display panel. According to an embodiment, the sub display 218 may be coupled to the first rear cover 214. According to an embodiment, the sub display 218 may be coupled to the first circuit board 241. For example, the sub display 218 may be visually exposed to the outside of the electronic device 101 through a first rear area (e.g., the first rear area 216 of FIG. 2) of the first rear cover 214.

According to an embodiment, the hinge assembly 230 may include a hinge structure 231 and a hinge cover 232. According to an embodiment, the first housing 210 and the second housing 220 may be connected to each other through the hinge structure 231, and may rotate relative to each other. According to an embodiment, the hinge cover 232 may cover the hinge structure 231. The hinge cover 232 may be defined and/or referred to as a hinge housing.

According to an embodiment, the hinge assembly 230 (e.g., the hinge structure 231) may connect the first housing 210 and the second housing 220 to be rotatable relative to each other.

According to an embodiment, the electronic device 101 may include a first circuit board 241 and a second circuit board 242. The first circuit board 241 and the second circuit board 242 may be disposed in a space formed by the first plate 213, the second plate 223, the first housing 210, the second housing 220, the first rear cover 214, and the second rear cover 224. Components for implementing various functions of the electronic device 101 may be disposed on the first circuit board 241 and the second circuit board 242. According to an embodiment, each of the first circuit board 241 and the second circuit board 242 may include any one of a printed circuit board (PCB), a flexible printed circuit board (FPCB), or a rigid-flexible PCB (RF-PCB).

According to an embodiment, the first housing 210 and the second housing 220 may be assembled to be coupled to two opposite sides of the hinge assembly 230 in a state in which the first plate 213 and the second plate 223 and the flexible display 250 are coupled. For example, the first housing 210 may slide and couple from one side of the hinge assembly 230, and the second housing 220 may slide and couple from another side of the hinge assembly 230.

According to an embodiment, the waterproof member 260 may be disposed inside the electronic device 101. According to an embodiment, the waterproof member 260 may include a first waterproof member 261, a second waterproof member 262, a third waterproof member 263, and/or a fourth waterproof member 264.

According to an embodiment, the first waterproof member 261 may be disposed between the first housing 210 and the flexible display 250. According to an embodiment, the first waterproof member 261 may be disposed between the first plate 213 and the first display area 251. According to an embodiment, the first waterproof member 261 may be formed of a waterproof tape. According to an embodiment, the first waterproof member 261 may be bonded to the first housing 210 and/or the first plate 213, and may be bonded to the flexible display 250 (e.g., the first display area 251). According to an embodiment, the first waterproof member 261 may have a closed loop shape. For example, the first waterproof member 261 may include at least one closed loop area. According to an embodiment, the first waterproof member 261 may include a waterproof tape, and may restrict liquid inflow from the outside of the closed loop area of the first waterproof member 261 to the inside of the closed loop area.

According to an embodiment, the first waterproof member 261 may include at least one first waterproof area 261-1. According to an embodiment, the at least one first waterproof area 261-1 may be defined and interpreted as an inside of the closed loop area of the first waterproof member 261.

According to an embodiment, the second waterproof member 262 may be disposed between the second housing 220 and the flexible display 250. According to an embodiment, the second waterproof member 262 may be disposed between the second plate 223 and the second display area 252. According to an embodiment, the second waterproof member 262 may be formed of a waterproof tape. According to an embodiment, the second waterproof member 262 may be bonded to the second housing 220 and/or the second plate 223, and may be bonded to the flexible display 250 (e.g., the second display area 252). According to an embodiment, the second waterproof member 262 may have a closed loop shape. For example, the second waterproof member 262 may include at least one closed loop area. According to an embodiment, the second waterproof member 262 may include a waterproof tape, and may restrict liquid inflow from the outside of the closed loop area of the second waterproof member 262 to the inside of the closed loop area.

According to an embodiment, the second waterproof member 262 may include at least one second waterproof area 262-1. According to an embodiment, the at least one second waterproof area 262-1 may be defined and interpreted as the inside of a closed loop area of the second waterproof member 262.

According to an embodiment, the third waterproof member 263 may be disposed between the first housing 210 and the first rear cover 214. According to an embodiment, the third waterproof member 263 may be disposed between the first plate 213 and the sub display 218. According to an embodiment, the third waterproof member 263 may be formed of a waterproof tape. According to an embodiment, the third waterproof member 263 may be bonded to the first housing 210 and/or the first plate 213, and may be bonded to the first rear cover 214 and/or the sub display 218. According to an embodiment, the third waterproof member 263 may have a closed loop shape. For example, the third waterproof member 263 may include at least one closed loop area. According to an embodiment, the third waterproof member 263 may include a waterproof tape, and may restrict liquid inflow from the outside of the closed loop area of the third waterproof member 263 to the inside of the closed loop area.

According to an embodiment, the third waterproof member 263 may include at least one third waterproof area 263-1. According to an embodiment, the at least one third waterproof area 263-1 may be defined and interpreted as an inside of the closed loop area of the third waterproof member 263.

According to an embodiment, the fourth waterproof member 264 may be disposed between the second housing 220 and the second rear cover 224. According to an embodiment, the fourth waterproof member 264 may be disposed between the second plate 223 and the second rear cover 224. According to an embodiment, the fourth waterproof member 264 may be formed of a waterproof tape. According to an embodiment, the fourth waterproof member 264 may be bonded to the second housing 220 and/or the second plate 223, and may be bonded to the second rear cover 224. According to an embodiment, the fourth waterproof member 264 may have a closed loop shape. For example, the fourth waterproof member 264 may include at least one closed loop area. According to an embodiment, the fourth waterproof member 264 may include a waterproof tape, and may restrict liquid inflow from the outside of the closed loop area of the fourth waterproof member 264 to the inside of the closed loop area.

According to an embodiment, the fourth waterproof member 264 may include at least one fourth waterproof area 264-1. According to an embodiment, the at least one fourth waterproof area 264-1 may be defined and interpreted as an inside of the closed loop area of the fourth waterproof member 264.

According to an embodiment, the first waterproof member 261, the second waterproof member 262, the third waterproof member 263, and the fourth waterproof member 264 may be disposed not to contact the hinge assembly 230.

According to an embodiment, as the waterproof member 260 is disposed inside the electronic device 101, the electronic device 101 may restrict or reduce the inflow of liquid from the outside of the electronic device 101 into the electronic device 101.

FIG. 5 is a plan view illustrating an electronic device according to an embodiment of the disclosure.

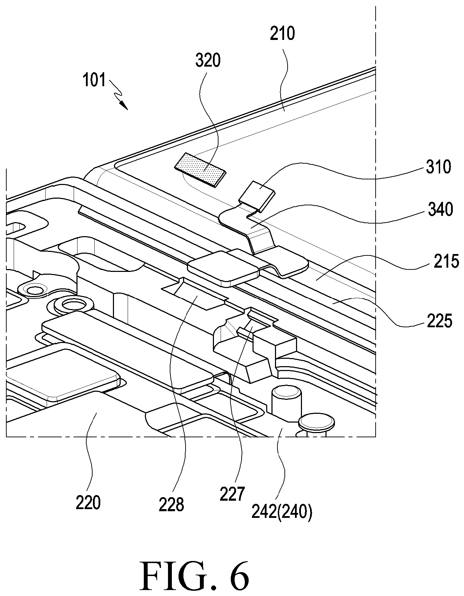

FIG. 6 is an exploded perspective view illustrating an electronic device, a magnetic member, and a detecting sensor according to an embodiment of the disclosure.

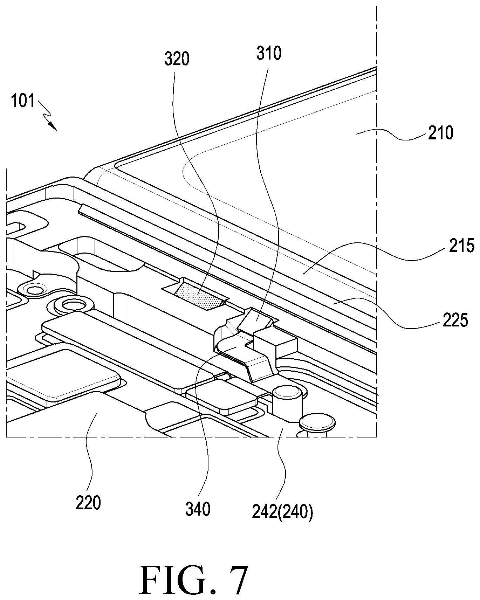

FIG. 7 is an assembled perspective view illustrating an electronic device, a magnetic member, and a detecting sensor according to an embodiment of the disclosure.

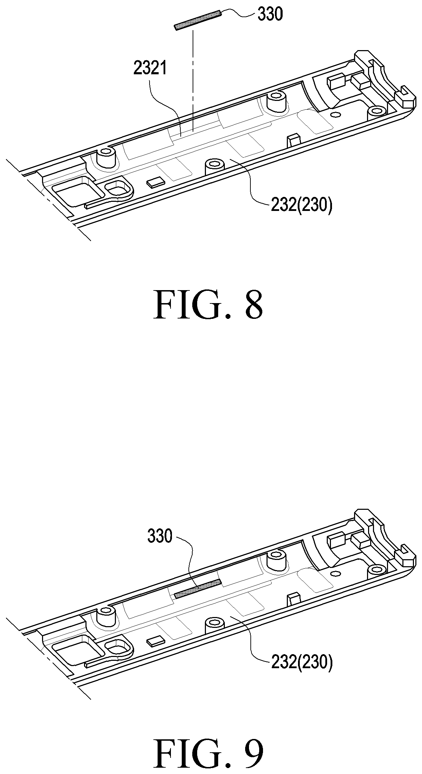

FIG. 8 is an exploded view illustrating a hinge cover and a magnetically permeable member according to an embodiment of the disclosure.

FIG. 9 is a view illustrating a hinge cover and a magnetically permeable member coupled together, according to an embodiment of the disclosure.

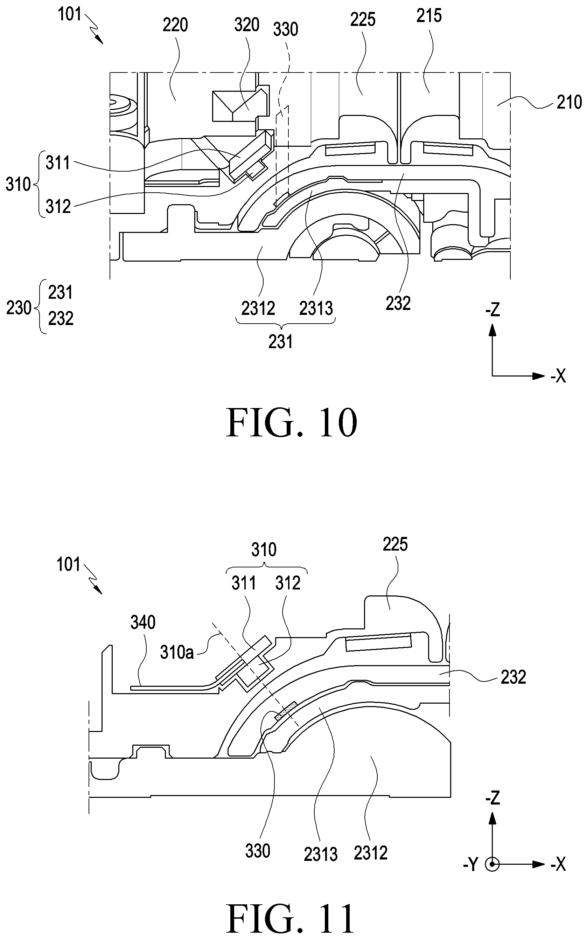

The embodiments of FIGS. 5 to 9 may be combined with the embodiments of FIGS. 1 to 4, or the embodiments of FIGS. 10 to 45.

Referring to FIGS. 5 to 9, an electronic device 101 (e.g., the electronic device 101 of FIG. 1 or the electronic device 101 of FIGS. 2 to 4) may include a first housing 210, a second housing 220, a hinge assembly 230, a circuit board 240, a detecting sensor 310, a magnetic member 320, a magnetically permeable member 330, or a connection board 340.

The configuration of the first housing 210, the second housing 220, the hinge assembly 230, or the circuit board 240 of FIGS. 5 to 9 may be identical in whole or part to the configuration of the first housing 210, the second housing 220, the hinge assembly 230, or the circuit board 240 of FIG. 4.

According to an embodiment, the first housing 210 may include a 1-1th side surface (e.g., the 1-1th side surface 211a of FIGS. 2 to 4) or a first inner portion 215. The first inner portion 215 may face in a direction opposite to the 1-1th side surface in 211a. The first inner portion 215 may be substantially parallel to the 1-1th side surface 211a. For example, the 1-1th side surface 211a may be a portion of the first housing 210 that is relatively far from the hinge structure (e.g., the hinge structure 231 of FIG. 4). The first inner portion 215 may be a portion of the first housing 210 connected to or coupled to the hinge structure. The first inner portion 215 may be a portion of the first housing 210 that faces the hinge assembly 230 or a portion adjacent to the hinge assembly 230.

According to an embodiment, the second housing 220 may include a 2-1th side surface (e.g., the 2-1th side surface 221a of FIGS. 2 to 4) or a second inner portion 225. The second inner portion 225 may face in a direction opposite to the 2-1th side surface in 221a. The second inner portion 225 may be substantially parallel to the 2-1th side surface 221a. For example, the 2-1th side surface 221a may be a portion of the second housing 220 that is relatively far from the hinge structure (e.g., the hinge structure 231 of FIG. 4). The second inner portion 225 may be a portion of the second housing 220 connected to or coupled to the hinge structure. The second inner portion 225 may be a portion of the second housing 220 that faces the hinge assembly 230 or a portion adjacent to the hinge assembly 230.

According to an embodiment, when the electronic device 101 is in the unfolded state (e.g., FIG. 2, FIG. 5, or FIG. 6), the second inner portion 225 may face the first inner portion 215 (e.g., FIG. 6).

According to an embodiment, the hinge assembly 230 may include a hinge structure (e.g., the hinge structure 231 of FIG. 4) or a hinge cover 232 (e.g., the hinge cover 232 of FIG. 4).

According to an embodiment, the circuit board 240 may include a second circuit board 242 disposed inside the second housing 220.

According to an embodiment, the electronic device 101 may include a detecting sensor 310, a magnetic member 320, a magnetically permeable member 330, or a connection board 340.

Hereinafter, the description of the detecting sensor, the magnetic member, and the magnetically permeable member described with reference to FIGS. 5 to 45 may be applied to an electronic device including a flexible display and a foldable housing, but is not limited thereto. For example, the description of the detecting sensor, the magnetic member, and the magnetically permeable member described with reference to FIGS. 5 to 45 as an example may be equally applied and/or understood to an electronic device including a plurality of housings that are rotatable with respect to each other and in which separate displays are disposed.

According to an embodiment, the detecting sensor 310 and/or the magnetic member 320 may be disposed in the second housing 220. Although not illustrated, the detecting sensor 310 and/or the magnetic member 320 may be disposed in the first housing 210.

According to an embodiment, the detecting sensor 310 may be disposed on the first seating portion 227 of the second housing 220. The first seating portion 227 may be formed on a surface of the second plate (e.g., the second plate 223 of FIG. 4) facing the rear surface (e.g., the -Z direction of FIGS. 4 to 5) of the electronic device 101 or the second rear cover 224. According to an embodiment, the first seating portion 227 may be formed on a surface of the second plate (e.g., the second plate 223 of FIG. 4) facing the front surface (e.g., the +Z direction of FIG. 4) or the second display area (e.g., the second display area 252 of FIG. 4) of the electronic device 101. The first seating portion 227 may be disposed adjacent to the second inner portion 225. For example, the first seating portion 227 may be defined as a groove recessed in a portion of the second plate (e.g., the second plate 223 of FIG. 4) adjacent to the second inner portion 225. Accordingly, the detecting sensor 310 positioned in the first seating portion 227 may be disposed adjacent to the second inner portion 225. The bottom surface of the first seating portion 227 may be inclined with respect to the second plate (e.g., the second plate 223 of FIG. 4) of the second housing 220. Accordingly, the detecting sensor 310 disposed on the first seating portion 227 may be disposed to be inclined with respect to the second plate of the second housing 220. The angle at which the detecting sensor 310 is inclined with respect to the second plate may be changed to various angles according to the arrangement position of the detecting sensor 310, the type of the detecting sensor 310, the relative distance to the magnetic member 320, or the relative distance to the magnetically permeable member 330.

According to an embodiment, the detecting sensor 310 may include a hall sensor, a magneto resistance sensor (MR sensor), a geomagnetic sensor, a coil, or a reed switch. The detecting sensor 310 may be configured to detect a magnetic field generated from the magnetic member 320 or a magnetic field generated from the magnetically permeable member 330.

According to an embodiment, the detecting sensor 310 may be electrically connected to the second circuit board 242 through the connection board 340. The connection board 340 may include a flexible printed circuit board (FPCB). The detecting sensor 310 may be electrically connected to a processor (e.g., the processor 120 of FIG. 1) and/or memory (e.g., the memory 130 of FIG. 1) disposed on the second circuit board 242 through the connection board 340.

According to an embodiment, the magnetic member 320 may be disposed on the second seating portion 228 of the second housing 220. The second seating portion 228 may be formed on a surface of the second plate (e.g., the second plate 223 of FIG. 4) facing the rear surface (e.g., the -Z direction of FIGS. 4 to 5) of the electronic device 101 or the second rear cover 224. According to an embodiment, the second seating portion 228 may be formed on a surface of the second plate (e.g., the second plate 223 of FIG. 4) facing the front surface (e.g., the +Z direction of FIG. 4) or the second display area (e.g., the second display area 252 of FIG. 4) of the electronic device 101. The second seating portion 228 may be disposed adjacent to the second inner portion 225. For example, the second seating portion 228 may be defined as a groove recessed in a portion of the second plate (e.g., the second plate 223 of FIG. 4) adjacent to the second inner portion 225. Accordingly, the magnetic member 320 positioned on the second seating portion 228 may be disposed adjacent to the second inner portion 225. The bottom surface of the second seating portion 228 may be inclined with respect to the second plate (e.g., the second plate 223 of FIG. 4) of the second housing 220. Accordingly, the magnetic member 320 disposed on the second seating portion 228 may be disposed to be inclined with respect to the second plate of the second housing 220. The angle at which the magnetic member 320 is inclined with respect to the second plate may be changed to various angles according to the arrangement position of the magnetic member 320, the type of the magnetic member 320, the relative distance to the detecting sensor 310, or the relative distance to the magnetically permeable member 330.

According to an embodiment, the direction in which the detecting sensor 310 and the magnetic member 320 face may be inclined with respect to the second plate 223 and/or the second display area (e.g., the second display area 252 of FIG. 4).

According to an embodiment, the detecting sensor 310 and the magnetic member 320 may be disposed on one surface of the second plate (e.g., the second plate 223 of FIG. 4). According to an embodiment, the detecting sensor 310 may be disposed on one surface of the second plate (e.g., the second plate 223 of FIG. 4), and the magnetic member 320 may be disposed on the other surface of the second plate.

According to an embodiment, the angles at which the detecting sensor 310 and the magnetic member 320 are inclined with respect to the second plate (e.g., the second plate 223 of FIG. 4) may be substantially the same. According to an embodiment, the angle at which the detecting sensor 310 is inclined with respect to the second plate may be different from the angle at which the magnetic member 320 is inclined with respect to the second plate.

According to an embodiment, the magnetic member 320 may be spaced apart from the detecting sensor 310. For example, the magnetic member 320 may be spaced apart from the detecting sensor 310 in the length direction (e.g., the Y-axis direction of FIG. 5) of the electronic device 101.

According to an embodiment, the magnetic member 320 may include a magnet, an electromagnet, or a magnetic material. The magnetic field (or magnetic force) generated from the magnetic member 320 may be configured to reach the detecting sensor 310 through the magnetically permeable member 330.

According to an embodiment, when the first housing 210 and the second housing 220 are in the unfolded state (e.g., FIG. 2), the detecting sensor 310 and/or the magnetic member 320 may be disposed below the folding area (e.g., the folding area 253 of FIGS. 2 to 4). According to an embodiment, when the first housing 210 and the second housing 220 are in the unfolded state (e.g., FIG. 2), the detecting sensor 310 and/or the magnetic member 320 may be disposed below an adjacent portion of the folding area in the second display area (e.g., the second display area 252 of FIGS. 2 to 4).

According to an embodiment, the magnetically permeable member 330 may be disposed on the hinge cover 232. For example, the magnetically permeable member 330 may be disposed on the third seating portion 2321 formed in the hinge cover 232. The third seating portion 2321 may be defined as a groove recessed in the hinge cover 232. The magnetically permeable member 330 may include a magnetically permeable material. The magnetically permeable member 330 may be defined and/or referred to as a magnetically permeable core, a magnetic shield sheet, a shield sheet, or a conductive member.

According to an embodiment, the magnetically permeable member 330 may be configured to form a more powerful magnetic field by concentrating a magnetic flux generated from the magnetic member 320. For example, the magnetically permeable member 330 may allow the magnetic field generated from the magnetic member 320 to reach or not reach the detecting sensor 310 according to a relative position with respect to the magnetic member 320. According to an embodiment, the magnetically permeable member 330 may change the path through which the magnetic flux generated from the magnetic member 320 flows or adjust the area affected by the magnetic field, so that the magnetic flux or the magnetic field generated from the magnetic member 320 is detected or not detected by the detecting sensor 310. For example, the magnetically permeable member 330 may allow the magnetic flux or magnetic field generated from the magnetic member 320 to be detected or not detected by the detecting sensor 310 according to a relative positional relationship between the detecting sensor 310 and the magnetic member 320.

According to an embodiment, the magnetically permeable member 330 may have a designated relative magnetic permeability. The magnetically permeable member 330 may include a material having a magnetic permeability larger than or equal to 1 which is the magnetic permeability of vacuum. The relative magnetic permeability of the magnetically permeable member 330 may be preferably (about) 1000 or more. The relative magnetic permeability of the magnetically permeable member 330 may be (about) 250 or more. The relative magnetic permeability of the magnetically permeable member 330 may be (about) 250 to 1000, preferably, (about) 500 to 750. The magnetically permeable member 330 may include a metallic material or a non-metallic material. The magnetically permeable member 330 may include a conductive material. The magnetically permeable member may include a magnetic material. The magnetically permeable member 330 may include iron (Fe), cobalt (Co), nickel (Ni), silicon steel, or ferrite. The magnetically permeable member 330 is not limited thereto, and may include various materials capable of forming a stronger magnetic field by concentrating magnetic flux generated from the magnetic member 320. The magnetically permeable member 330 may be referred to as a shielding sheet.

According to an embodiment, the relative magnetic permeability of the magnetically permeable member 330 may be larger than the relative magnetic permeability of the first housing 210. The relative magnetic permeability of the magnetically permeable member 330 may be larger than that of the second housing 220. The relative magnetic permeability of the magnetically permeable member 330 may be larger than the relative magnetic permeability of the hinge cover 232. The relative magnetic permeability of the magnetically permeable member 330 may be larger than the relative magnetic permeability of the hinge structure 231. Accordingly, a change in the intensity value of the magnetic flux detected by the detecting sensor 310 may occur according to a change in the relative position of the magnetically permeable member 330 having a relatively larger relative magnetic permeability than the other components 210, 220, and 232.

According to an embodiment, the magnetically permeable member 330 may extend in the length direction (e.g., the Y-axis direction of FIG. 5) of the electronic device 101. For example, the magnetically permeable member 330 may extend in a first direction (e.g., the Y-axis direction of FIG. 5). The detecting sensor 310 may be spaced apart from the magnetic member 320 in the first direction. The first direction may be substantially parallel to an axis (e.g., the folding axis A of FIG. 2) of the hinge structure (e.g., the hinge structure 231 of FIG. 4).

According to an embodiment, when the magnetically permeable member 330 and the magnetic member 320 are positioned to be aligned with each other, the magnetic field (or magnetic force) generated from the magnetic member 320 may reach the detecting sensor 310 through the magnetically permeable member 330. When the magnetically permeable member 330 and the magnetic member 320 are positioned to be not aligned, the magnetic field (or magnetic force) generated from the magnetic member 320 may not reach the detecting sensor 310.

According to an embodiment, the positional relationship or the distance relationship between the detecting sensor 310, the magnetic member 320, and the magnetically permeable member 330, in which the magnetic field generated from the magnetic member 320 may be detected, as a threshold or more, by the detecting sensor 310, may be defined and/or referred to as an "aligned state". The positional relationship or the distance relationship between the detecting sensor 310, the magnetic member 320, and the magnetically permeable member 330, in which the magnetic field generated from the magnetic member 320 may not be detected by the detecting sensor 310 or may be detected as less than the threshold, may be defined and/or referred to as an "not aligned state".

According to an embodiment, at least one of the detecting sensor 310, the magnetic member 320, or the magnetically permeable member 330 may be omitted, or positions thereof may be changed.

According to an embodiment, the threshold of the detecting sensor 310 may be a value set in the detecting sensor 310 or a value set in a processor (e.g., the processor 120 of FIG. 1). The threshold of the detection sensor 310 may be changed by the application where the threshold is used or user settings.

FIG. 10 is a view illustrating an arrangement relationship between a detecting sensor, a magnetic member, and a magnetically permeable member according to an embodiment of the disclosure. FIG. 10 is a perspective cross-sectional view of an electronic device taken along line B-B' of FIG. 2 according to an embodiment of the disclosure.

FIG. 11 is a cross-sectional view illustrating an electronic device according to an embodiment of the disclosure.

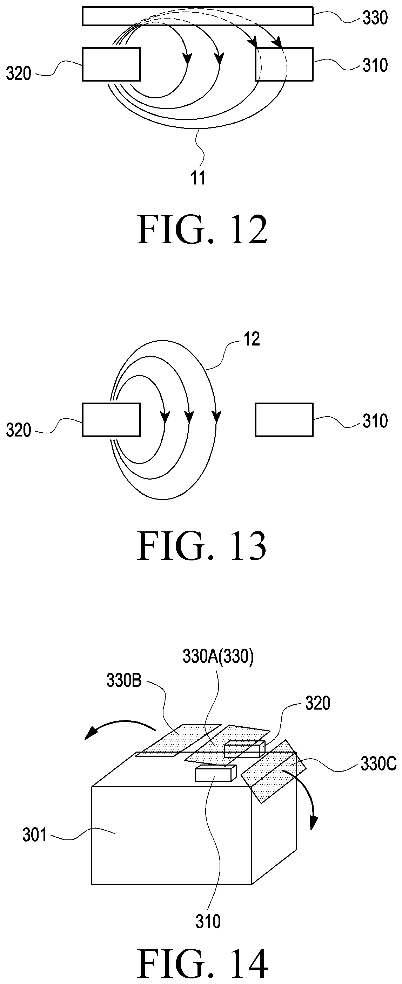

FIG. 12 is a view schematically illustrating a state in which a magnetically permeable member is located to be aligned with a magnetic member and a detecting sensor according to an embodiment of the disclosure.

FIG. 13 is a view schematically illustrating a state in which a magnetically permeable member is located to be not aligned with a magnetic member and a detecting sensor according to an embodiment of the disclosure.

FIG. 14 is a view illustrating a relative positional relationship between a detecting sensor, a magnetic member, and a magnetically permeable member according to an embodiment of the disclosure.

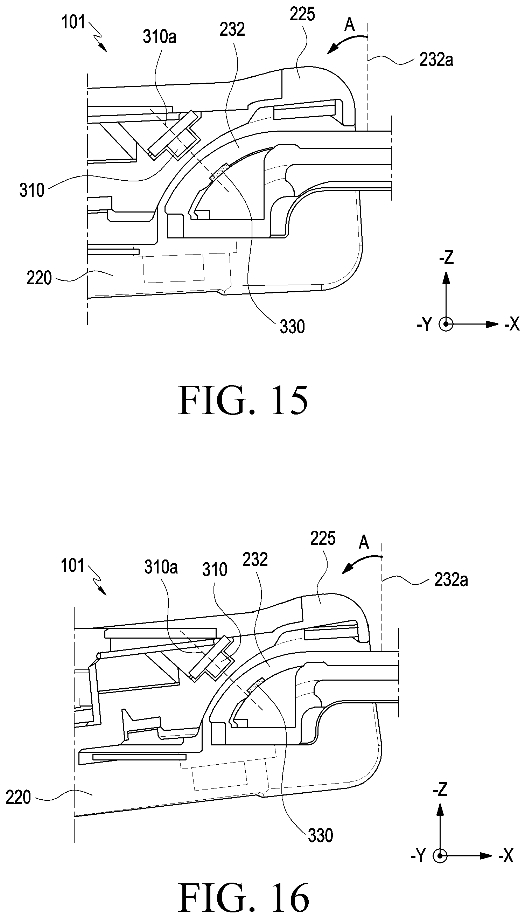

The embodiments of FIGS. 10 to 14 may be combined with the embodiments of FIGS. 1 to 9, or the embodiments of FIGS. 15 to 45.

Referring to FIGS. 10 to 14, an electronic device 101 (e.g., the electronic device 101 of FIG. 1, the electronic device 101 of FIGS. 2 to 4, or the electronic device 101 of FIGS. 5 to 10) may include a first housing 210, a second housing 220, a hinge assembly 230, a detecting sensor 310, a magnetic member 320, a magnetically permeable member 330, or a connection board 340.

The configuration of the first housing 210, the second housing 220, the detecting sensor 310, the magnetic member 320, the hinge magnetically permeable member 330, or the connection board 340 of FIGS. 10 to 14 may be identical in whole or part to the configuration of the first housing 210, the second housing 220, the detecting sensor 310, the magnetic member 320, the magnetically permeable member 330, or the connection board 340 of FIGS. 5 to 9.

According to an embodiment, the hinge structure 231 may include a hinge structure 231 (e.g., the hinge structure 231 of FIG. 4) or a hinge cover 232 (e.g., the hinge cover 232 of FIG. 4 or the hinge cover 232 of FIGS. 8 to 9).

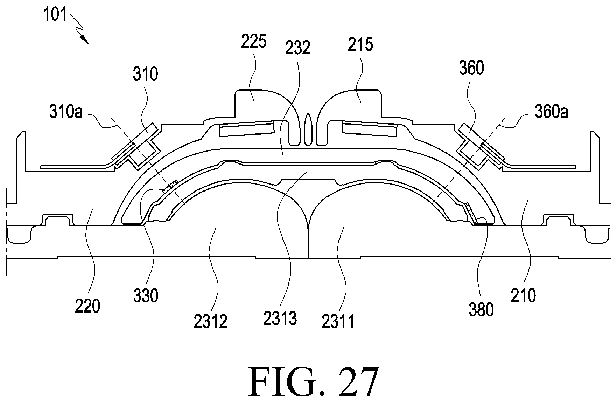

According to an embodiment, the hinge structure 231 may include a hinge bracket 2313, a first rotation member (e.g., the first rotation member 2311 of FIG. 27), or a second rotation member 2312.

According to an embodiment, the hinge bracket 2313 may be disposed on the hinge cover 232. The hinge bracket 2313 may be fixed to the hinge cover 232. The first rotation member or the second rotation member 2312 may be rotatably coupled to the hinge bracket 2313.

According to an embodiment, the first rotation member may be connected to the first housing 210 and the hinge bracket 2313. The first rotation member may be fixed to at least a portion of the first housing 210. The first rotation member may be rotatably connected to the hinge bracket 2313. As the first housing 210 is coupled to the first rotation member, the first housing 210 may be rotated relative to the hinge bracket 2313 or the hinge cover 232.

According to an embodiment, the second rotation member 2312 may be connected to the second housing 220 and the hinge bracket 2313. The second rotation member 2312 may be fixed to at least a portion of the second housing 220. The second rotation member 2312 may be rotatably connected to the hinge bracket 2313. As the second housing 220 is coupled to the second rotation member, the second housing 220 may be rotated relative to the hinge bracket 2313 or the hinge cover 232.

According to an embodiment, the hinge cover 232 may cover the hinge structure 231 so that the hinge structure 231 is not exposed to the outside of the electronic device 101. The hinge cover 232 may be defined and/or referred to as a hinge housing receiving at least a portion of the hinge structure 231.

According to an embodiment, the magnetically permeable member 330 may be disposed on the hinge cover 232. The magnetically permeable member 330 may be disposed on or seated on a third seating portion (e.g., the third seating portion 2321 of FIG. 8) formed on the hinge cover 232. The magnetically permeable member 330 may be positioned between the hinge cover 232 and the hinge bracket 2313. Although not illustrated, the magnetically permeable member 330 may be disposed in a groove recessed in an outer surface (e.g., a surface facing the hinge cover 232) of the hinge bracket 2313.

According to an embodiment, the detecting sensor 310 may be disposed in a first seating portion (e.g., the first seating portion 227 of FIG. 6) formed in the second housing 220. The magnetic member 320 may be disposed in a second seating portion (e.g., the second seating portion 228 of FIG. 6) formed in the second housing 220.

Although not illustrated, the detecting sensor 310 and/or the magnetic member 320 may be disposed on a seating portion formed adjacent to the first inner portion 215 of the first housing 210.

According to an embodiment, the detecting sensor 310 may include a board 311 or a detecting sensor component 312. For example, the detecting sensor component 312 may be disposed or mounted on the board 311. The board 311 may be electrically connected to a second circuit board (e.g., the second circuit board 242 of FIGS. 5 to 7) through the connection board 340. The board 311 may be physically and/or electrically connected to the connection board 340.

According to an embodiment, the detecting sensor component 312 may include a hall sensor chip or a hall sensor circuit. The detecting sensor component 312 may be disposed or mounted on one surface of the board 311. For example, the one surface of the board 311 on which the detecting sensor module 312 is disposed may be defined as a surface facing the hinge cover 232 or a surface facing the hinge cover 232 in the board 311.

According to an embodiment, the detecting sensor component 312 may be configured to sense a magnetic field generated from the magnetic member 320. For example, the detecting sensor component 312 may be configured to sense a magnetic flux generated by the magnetic member 320.

According to an embodiment, the magnetic member 320 may face in substantially the same direction as the detecting sensor component 312. For example, the magnetic member 320 may face in substantially the same direction as the direction in which one surface of the board 311 of the detecting sensor 310 faces. The magnetic member 320 may face the hinge cover 232. For example, the N pole of the magnetic member 320 may face the hinge cover 232. According to an embodiment, the S pole of the magnetic member 320 may face the hinge cover 232.

According to an embodiment, the electronic device 101 (or the processor 120 of FIG. 1) may be configured to obtain a folding angle, a folding degree, or a folding state of the electronic device 101 through the detecting sensor 310, the magnetic member 320, and the magnetically permeable member 330. The folding angle of the electronic device 101 may be defined and/or interpreted as a relative angle between the first housing 210 and the second housing 220 or a folding angle between the first housing 210 and the second housing 220. For example, the electronic device 101 (or the processor 120 of FIG. 1) may be configured to obtain an angle between the first housing 210 and the second housing 220 based on the intensity of the magnetic flux sensed by the detecting sensor 310.

According to an embodiment, the electronic device 101 may include memory (e.g., the memory 130 of FIG. 1) for storing instructions related to the operation of the electronic device 101.

According to an embodiment, when the first housing 210 is positioned at a first position with respect to the second housing 220, the detecting sensor 310 and the magnetic member 320 may be positioned to be aligned with the magnetically permeable member 330. For example, when the electronic device 101 or the foldable housing (e.g., the foldable housing 201 of FIGS. 2 to 4) is in the unfolded state (e.g., FIG. 2), the first housing 210 may be positioned at the first position relative to the second housing 220. When the first housing 210 is positioned at a second position different from the first position with respect to the second housing 220, the detecting sensor 310 and the magnetic member 320 may be positioned to be not aligned with the magnetically permeable member 330. The first housing 210 positioned at the second position with respect to the second housing 220 may be defined as a state in which the electronic device 101 or the foldable housing 201 is folded at a predetermined angle. The detecting sensor 310 may have a relatively fixed position with respect to the magnetic member 320. The relative position of the detecting sensor 310 with respect to the magnetic member 320 is fixed, but the relative position of the detecting sensor 310 and the magnetically permeable member 330 with respect to the magnetic member 320 may be changed. Magnetic flux or magnetic force generated from the magnetic member 320 may or may not be detected by the detecting sensor 310 according to a change in relative positions of the magnetically permeable member 330 with respect to the detecting sensor 310 and the magnetic member 320. This is described below. According to an embodiment, the electronic device 101 (or the processor 120 of FIG. 1) may be configured to detect and/or obtain a change in the folding angle of the electronic device 101 or the foldable housing (e.g., the foldable housing 201 of FIGS. 2 to 4). For example, the electronic device 101 may be configured to obtain a change of that the first housing 210 from the first position to the second position with respect to the second housing 220 or a change from the second position to the first position.

Referring to FIG. 11, a state in which the detecting sensor 310 is positioned to be aligned with the magnetically permeable member 330 is illustrated. For example, when the detecting sensor 310 is positioned to be aligned with the magnetically permeable member 330, the magnetic member 320 may also be positioned to be aligned with the magnetically permeable member 330. When the detecting sensor 310 is positioned to be aligned with the magnetically permeable member 330, it may be defined that at least a portion of the magnetically permeable member 330 is disposed on one surface of the board 311 or in a direction in which the detecting sensor component 312 faces. For example, 310a illustrated in FIG. 11 may be a virtual line 310a illustrated in a vertical direction with respect to one surface of the board 311 or the detecting sensor component 312. When at least a portion of the magnetically permeable member 330 is positioned on the virtual line 310a, it may be defined and/or interpreted that the detecting sensor 310 and the magnetic member 320 are aligned with the magnetically permeable member 330. The alignment of the detecting sensor 310 and the magnetic member 320 with the magnetically permeable member 330 may be defined as a state in which one surface of the detecting sensor component 312 and one surface of the magnetic member 320 at least partially face one surface of the magnetically permeable member 330. Further, the alignment of the detecting sensor 310 and the magnetic member 320 with the magnetically permeable member 330 may be defined as a position where a magnetic flux or a magnetic force generated from the magnetic member 320 by the magnetically permeable member 330 is detected by the detecting sensor 310. The detection of the magnetic flux or the magnetic force by the detecting sensor 310 may be defined and/or interpreted as the detection of the magnetic flux or the magnetic force by a threshold or more by the detecting sensor 310.

According to an embodiment, when the first housing 210 is positioned at a first position with respect to the second housing 220, the detecting sensor 310 and the magnetic member 320 may be positioned to be aligned with the magnetically permeable member 330. For example, the first position may be defined as a position at which the detecting sensor 310 and the magnetic member 320 are aligned with the magnetically permeable member 330. For example, when the first housing 210 and the second housing 220 are in the fully unfolded state (e.g., FIG. 2) or when the first housing 210 and the second housing 220 are folded at a designated angle or less, the detecting sensor 310 and the magnetic member 320 may be positioned to be aligned with the magnetically permeable member 330.

According to an embodiment (e.g., FIG. 12), when the detecting sensor 310 and the magnetic member 320 are positioned to be aligned with the magnetically permeable member 330, the detecting sensor 310 may detect the magnetic flux 11 generated from the magnetic member 320. For example, as the magnetically permeable member 330 is aligned with the magnetic member 320, the magnetic flux 11 generated from the magnetic member 320 becomes stronger by the magnetically permeable member 330, and thus the detecting sensor 310 may detect the magnetic flux 11. For example, at least a portion of the magnetic flux 11 generated from the magnetic member 320, rather than passing through the magnetically permeable member 330 and exiting in the opposite direction where the detecting sensor 310 is positioned, may be led for its transfer direction by the magnetically permeable member 330, so that a magnetic flux/magnetic force of the threshold or more may reach the detecting sensor 310. When the detecting sensor 310 detects the magnetic flux 11, it may be defined that the intensity of the magnetic flux 11 in the detecting sensor 310 is larger than or equal to a threshold set in the detecting sensor 310. According to an embodiment, even if the detecting sensor 310 and the magnetic member 320 are not completely aligned with the magnetically permeable member 330 and the surface viewed by the detecting sensor 310 and the surface viewed by the magnetically permeable member 330 partially overlap each other, the positional relationship between the first housing 210 and the second housing 220 may be determined through the setting of the threshold.

According to an embodiment, when the first housing 210 is positioned at the second position with respect to the second housing 220, the detecting sensor 310 and the magnetic member 320 may be positioned to be not aligned with the magnetically permeable member 330. For example, the second position may be defined as a position at which the detecting sensor 310 and the magnetic member 320 are not aligned with the magnetically permeable member 330. For example, when the first housing 210 and the second housing 220 are in a state of being folded by more than the designated angle, the detecting sensor 310 and the magnetic member 320 may be positioned to be not aligned with the magnetically permeable member 330.

According to an embodiment (e.g., FIG. 13), when the detecting sensor 310 and the magnetic member 320 are positioned to be not aligned with the magnetically permeable member 330, the magnetic flux 12 generated from the magnetic member 320 may not be detected by the detecting sensor 310. The non-alignment of the detecting sensor 310 and the magnetic member 320 with the magnetically permeable member 330 may be defined as a state in which one surface of the detecting sensor component 312 and one surface of the magnetic member 320 do not face one surface of the magnetically permeable member 330. Further, the non-alignment of the detecting sensor 310 and the magnetic member 320 with the magnetically permeable member 330 may be defined as a position where a magnetic flux or a magnetic force generated from the magnetic member 320 by the magnetically permeable member 330 is not detected by the detecting sensor 310. The non-detection of the magnetic flux or the magnetic force by the detecting sensor 310 may be defined and/or interpreted as a case where the magnetic flux or the magnetic force is not detected by the detecting sensor 310 or is detected as less than threshold. For example, as the magnetically permeable member 330 is not aligned with the magnetic member 320, the magnetic flux 12 generated from the magnetic member 320 may not be concentrated by the magnetically permeable member 330, and thus the magnetic flux 12 may not be detected by the detecting sensor 310. When the magnetic flux 12 is not detected by the detecting sensor 310, it may be defined that the intensity of the magnetic flux 12 in the detecting sensor 310 is less than the threshold set in the detecting sensor 310. For example, depending on the degree to which the magnetically permeable member 330 is aligned with the magnetic member 320, the intensity of the magnetic flux 12 may be detected as different by the detecting sensor 310. For example, when the magnetically permeable member 330 is aligned in a straight line with the magnetic member 320, the magnetic flux 12 may be detected as larger in intensity than when the magnetic member 320 is not aligned with the magnetic member 330.

Although not illustrated, when the electronic device 101 or the foldable housing (e.g., the foldable housing 201 of FIGS. 2 to 4) is in the fully unfolded state (e.g., FIG. 2), the detecting sensor 310 and the magnetic member 320 may be positioned to be not aligned with the magnetically permeable member 330, and when the electronic device 101 or the foldable housing is in the folded state at a specific angle or more, the detecting sensor 310 and the magnetic member 320 may be positioned to be aligned with the magnetically permeable member 330.

According to an embodiment, when the detecting sensor 310 and the magnetic member 320 move from the aligned position to the non-aligned position with respect to the magnetically permeable member 330, it may be defined that the state of the electronic device 101 or the foldable housing 201 is changed from the fully unfolded state to the partially folded state. According to an embodiment, when the detecting sensor 310 and the magnetic member 320 move from the aligned position to the non-aligned position with respect to the magnetically permeable member 330, it may be defined that the folding angle of the electronic device 101 or the foldable housing 201 changes from the first angle to the second angle. The second angle may be smaller than the first angle. The first angle may have a value of 180 degrees or 180 degrees or less.

Referring to FIG. 14, a relative positional relationship of the magnetically permeable member 330 with respect to the detecting sensor 310 and the magnetic member 320 is described. The detecting sensor 310 and the magnetic member 320 may have substantially the same positional relationship with respect to the component 301 of the electronic device 101. For example, the element 301 may be the second housing 220. For example, even when the states of the first housing 210 and the second housing 220 are changed from the unfolded state to the folded state or from the folded state to the unfolded state, the detecting sensor 310 and the magnetic member 320 may have substantially the same positional relationship. For example, the detecting sensor 310 may have a fixed position with respect to the magnetic member 320. When the state of the electronic device 101 is changed, the relative position of the magnetically permeable member 330 with respect to the sensor 310 and the magnetic member 320 may be changed. For example, when the second housing 220 is rotated with respect to the hinge bracket 2313 or the hinge cover 232, the magnetically permeable member 330 disposed on the hinge cover 232 may be relatively rotated with respect to the sensor 310 and the magnetic member 320. In this case, it may be defined and/or interpreted that the detecting sensor 310 and the magnetic member 320 are relatively rotated with respect to the magnetically permeable member 330. For example, as the second housing 220 rotates, the magnetically permeable member 330 may be aligned with the detecting sensor 310 and the magnetic member 320 (e.g., 330A in FIG. 14), or may be not aligned with the detecting sensor 310 and the magnetic member 320 (e.g., 330B or 330C in FIG. 14). When the magnetically permeable member 330 is positioned at a position (e.g., 330A of FIG. 14) aligned with the detecting sensor 310 and the magnetic member 320, a magnetic flux or a magnetic force generated from the magnetic member 320 may be detected by the detecting sensor 310 or may be detected as larger than or equal to a threshold. When the magnetically permeable member 330 is positioned at a position (e.g., 330B or 330C of FIG. 14) that is not aligned with the detecting sensor 310 and the magnetic member 320, the magnetic flux or magnetic force generated from the magnetic member 320 may not be detected by the detecting sensor 310 or may be detected as less than the threshold.

According to an embodiment, when the magnetic flux is detected by the detecting sensor 310, the electronic device 101 (or the processor 120 of FIG. 1) may be configured to determine that the first housing 210 is positioned at the first position with respect to the second housing 220. The electronic device 101 (or the processor 120 of FIG. 1) may be configured to determine that the first housing 210 is positioned at the second position with respect to the second housing 220 when the magnetic flux is not detected by the detecting sensor 310.

FIG. 15 is a cross-sectional view illustrating a state in which a detecting sensor and a magnetically permeable member are aligned with each other according to an embodiment of the disclosure.

FIG. 16 is a cross-sectional view illustrating a state in which a detecting sensor and a magnetically permeable member are not aligned with each other according to an embodiment of the disclosure.

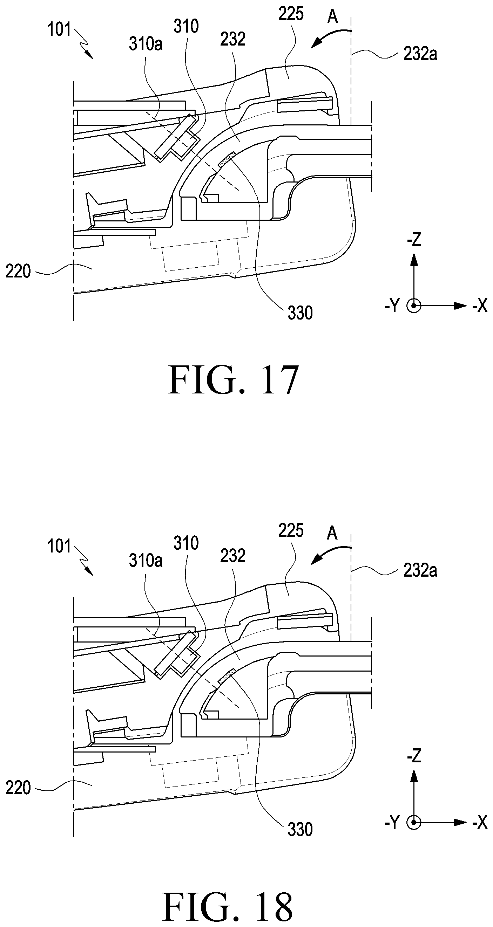

FIG. 17 is a cross-sectional view illustrating a state in which a detecting sensor and a magnetically permeable member are not aligned with each other according to an embodiment of the disclosure;

The embodiments of FIGS. 15 to 17 may be combined with the embodiments of FIGS. 1 to 14, or the embodiments of FIGS. 18 to 45.

Referring to FIGS. 15 to 17, an electronic device 101 (e.g., the electronic device 101 of FIG. 1 or the electronic device 101 of FIGS. 2 to 14) may include a second housing 220, a hinge cover 232, a detecting sensor 310, or a magnetically permeable member 330.

The configuration of the second housing 220, the hinge cover 232, the detecting sensor 310, or the magnetically permeable member 330 of FIGS. 15 to 17 may be identical in whole or part to the configuration of the second housing 220, the hinge cover 232, the detecting sensor 310, or the magnetically permeable member 330 of FIGS. 5 to 14.

According to an embodiment, the second housing 220 may include a second inner portion 225. The second inner portion 225 may be positioned adjacent to the hinge cover 232. The second inner portion 225 may be rotated relative to the hinge cover 232.

According to an embodiment, the second housing 220 may be rotated relative to the hinge cover 232.

Referring to FIG. 15, a state in which the second housing 220 is rotated with respect to the hinge cover 232 is illustrated. FIG. 15 illustrates a state in which the second housing 220 is rotated relative to the hinge cover 232 in a first rotation direction (e.g., the illustrated counterclockwise direction A). For example, the state illustrated in FIG. 15 may be a state in which the second housing 220 is rotated by about 3 degrees in the first rotation direction A in a state in which the electronic device 101 is fully unfolded (e.g., FIG. 2). The rotation angle of the second housing 220 may be an angle with respect to the normal 232a of a portion of the hinge cover 232. Referring to FIG. 15, even if the second housing 220 is rotated within a designated angle range with respect to the hinge cover 232, a state in which the magnetically permeable member 330 is positioned on a virtual line 310a of the detecting sensor 310 is illustrated. In this case, the magnetically permeable member 330 may be positioned to be aligned with a magnetic member (e.g., the magnetic member 320 of FIGS. 5 to 14), and the detecting sensor 310 may detect a magnetic flux concentrated (or enhanced) by the magnetically permeable member 330.

Referring to FIG. 16, a state in which the second housing 220 is rotated with respect to the hinge cover 232 is illustrated. FIG. 16 illustrates a state in which the second housing 220 is rotated relative to the hinge cover 232 in a first rotation direction (e.g., the illustrated counterclockwise direction A). For example, the state illustrated in FIG. 16 may be a state in which the second housing 220 is rotated by about 6 degrees in the first rotation direction A in a state in which the electronic device 101 is fully unfolded (e.g., FIG. 2). The rotation angle of the second housing 220 may be an angle with respect to the normal 232a of a portion of the hinge cover 232. Referring to FIG. 16, a state in which the second housing 220 is rotated in excess of a designated angle range with respect to the hinge cover 232 so that the magnetically permeable member 330 is not positioned on the virtual line 310a of the detecting sensor 310 is illustrated. In this case, the magnetically permeable member 330 may be positioned not to be aligned with the magnetic member (e.g., the magnetic member 320 of FIGS. 5 to 14), and the magnetic flux generated from the magnetic member may not be concentrated or reinforced by the magnetically permeable member 330. Accordingly, the detecting sensor 310 may not detect the magnetic flux. For example, the case where the detecting sensor 310 does not detect the magnetic flux may include a case in which the intensity of the magnetic flux 12 detected by the detecting sensor 310 is less than the threshold set in the detecting sensor 310.

Referring to FIG. 17, a state in which the second housing 220 is rotated with respect to the hinge cover 232 is illustrated. FIG. 17 illustrates a state in which the second housing 220 is rotated relative to the hinge cover 232 in a first rotation direction (e.g., the illustrated counterclockwise direction A). For example, the state illustrated in FIG. 17 may be a state in which the second housing 220 is rotated by about 9 degrees in the first rotation direction A in a state in which the electronic device 101 is fully unfolded (e.g., FIG. 2). The rotation angle of the second housing 220 may be an angle with respect to the normal 232a of a portion of the hinge cover 232. Referring to FIG. 17, a state in which the second housing 220 is rotated in excess of a designated angle range with respect to the hinge cover 232 so that the magnetically permeable member 330 is not positioned on the virtual line 310a of the detecting sensor 310 is illustrated. In this case, the magnetically permeable member 330 may be positioned not to be aligned with the magnetic member (e.g., the magnetic member 320 of FIGS. 5 to 14), and the magnetic flux generated from the magnetic member may not be concentrated or reinforced by the magnetically permeable member 330. Accordingly, the detecting sensor 310 may not detect the magnetic flux. For example, the case where the detecting sensor 310 does not detect the magnetic flux may include a case in which the intensity of the magnetic flux 12 detected by the detecting sensor 310 is less than the threshold set in the detecting sensor 310.

Referring to FIGS. 15 to 17, the magnetically permeable member 330 may or may not be aligned with the detecting sensor 310 depending on the relative position of the second housing 220 with respect to the hinge cover 232. Accordingly, the detecting sensor 310 may or may not detect a magnetic flux. The electronic device 101 (or the processor 120 of FIG. 1) may be configured to determine a relative position of the second housing 220 by detecting a change in magnetic flux detected by the detecting sensor 310. The electronic device 101 (or the processor 120 of FIG. 1) may be configured to determine the relative position change of the second housing 220 as a user input, using the relative position of the second housing 220. For example, when the user folds and unfolds the first housing (e.g., the first housing 210 of FIG. 10) and the second housing 220 at a designated angle or more with respect to each other, the electronic device 101 (or the processor 120 of FIG. 1) may be configured to determine that a user input is input and to provide (or output) a designated user interface. A detailed description of this is described below.

FIG. 18 is a cross-sectional view illustrating a state in which a detecting sensor and a magnetically permeable member are not aligned with each other according to an embodiment of the disclosure.

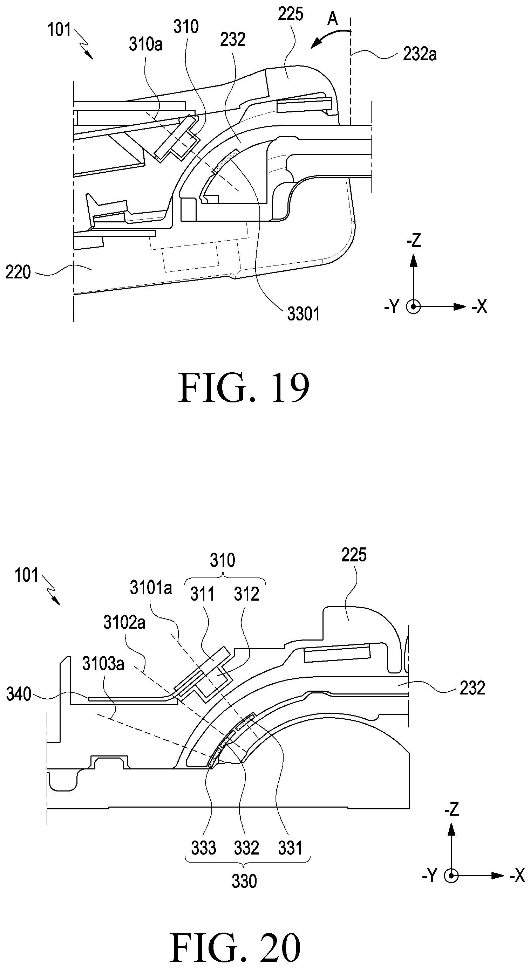

FIG. 19 is a cross-sectional view illustrating a state in which a detecting sensor and a magnetically permeable member are aligned with each other according to an embodiment of the disclosure.

The embodiments of FIGS. 18 to 19 may be combined with the embodiments of FIGS. 1 to 17, or the embodiments of FIGS. 20 to 45.

Referring to FIGS. 18 to 19, an electronic device 101 (e.g., the electronic device 101 of FIG. 1 or the electronic device 101 of FIGS. 2 to 17) may include a second housing 220, a second inner portion 225, a hinge cover 232, a detecting sensor 310, or magnetically permeable member 330 or 3301.

The configuration of the second housing 220, the hinge cover 232, the detecting sensor 310, or the magnetically permeable member 330 or 3301 of FIGS. 18 to 19 may be identical in whole or part to the configuration of the second housing 220, the second inner portion 225, the hinge cover 232, the detecting sensor 310, or the magnetically permeable member 330 of FIGS. 5 to 17.

According to an embodiment, the second housing 220 may be rotated relative to the hinge cover 232.

Referring to FIGS. 18 to 19, even when the second housing 220 is rotated by substantially the same angle with respect to the hinge cover 232, the second housing 220 may or may not be aligned with the magnetically permeable member 330 or 3301. For example, depending on the design of the electronic device 101 or the magnetically permeable member 330 or 3301, the point at which the magnetically permeable member 330 or 3301 is not aligned with the detecting sensor 310 may be changed.

Referring to FIG. 18, a state in which the second housing 220 is rotated with respect to the hinge cover 232 is illustrated. FIG. 18 illustrates a state in which the second housing 220 is rotated relative to the hinge cover 232 in a first rotation direction (e.g., the illustrated counterclockwise direction A). For example, the state illustrated in FIG. 18 may be a state in which the second housing 220 is rotated by about 9 degrees in the first rotation direction A in a state in which the electronic device 101 is fully unfolded (e.g., FIG. 2). The rotation angle of the second housing 220 may be an angle with respect to the normal 232a of a portion of the hinge cover 232. Referring to FIG. 18, a state in which the second housing 220 is rotated by an angle exceeding a designated angle with respect to the hinge cover 232 so that the magnetically permeable member 330 is not positioned on the virtual line 310a of the detecting sensor 310 is illustrated. In this case, the magnetically permeable member 330 may be positioned not to be aligned with the magnetic member (e.g., the magnetic member 320 of FIGS. 5 to 14), and the magnetic flux generated from the magnetic member may not be concentrated or reinforced by the magnetically permeable member 330. Accordingly, the detecting sensor 310 may not detect the magnetic flux. For example, the case where the detecting sensor 310 does not detect the magnetic flux may include a case in which the intensity of the magnetic flux detected by the detecting sensor 310 is less than a threshold set in the detecting sensor 310.

Referring to FIG. 19, a state in which the second housing 220 is rotated with respect to the hinge cover 232 is illustrated. FIG. 19 illustrates a state in which the second housing 220 is rotated relative to the hinge cover 232 in a first rotation direction (e.g., the illustrated counterclockwise direction A). For example, the state illustrated in FIG. 16 may be a state in which the second housing 220 is rotated by about 9 degrees in the first rotation direction A in a state in which the electronic device 101 is fully unfolded (e.g., FIG. 2). The rotation angle of the second housing 220 may be an angle with respect to the normal 232a of a portion of the hinge cover 232. Referring to FIG. 19, the second housing 220 is rotated in a range of a designated angle with respect to the hinge cover 232, and the magnetically permeable member 3301 is positioned on the virtual line 310a of the detecting sensor 310. In this case, the magnetically permeable member 3301 may be positioned to be aligned with the magnetic member (e.g., the magnetic member 320 of FIGS. 5 to 14), and the magnetic flux generated from the magnetic member may be concentrated or reinforced by the magnetically permeable member 3301 and detected by the detecting sensor 310.

FIG. 20 is a cross-sectional view illustrating an electronic device according to an embodiment of the disclosure.

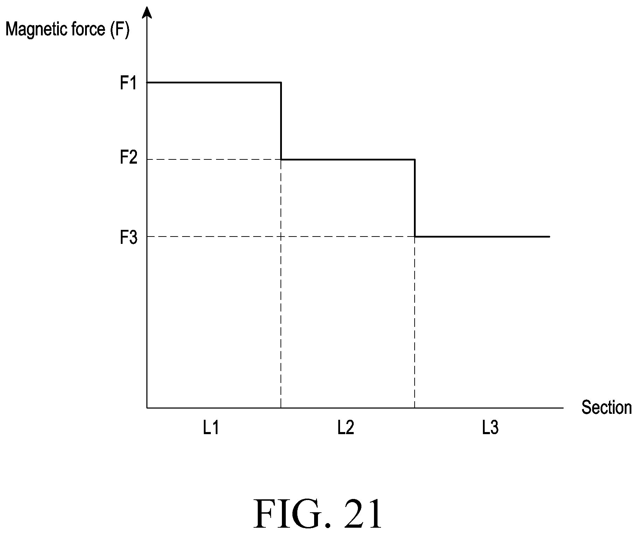

FIG. 21 is a graph illustrating a magnetic force detected by a detecting sensor according to an embodiment of the disclosure.

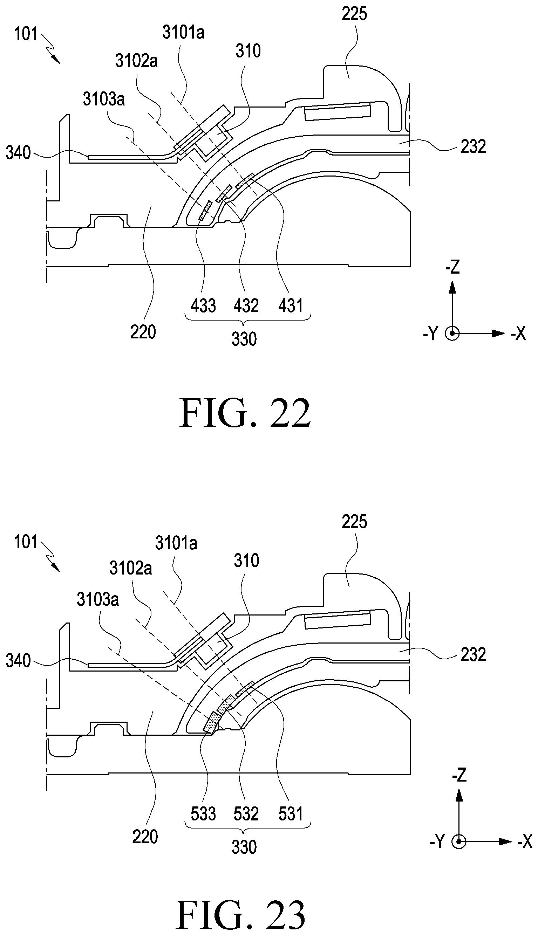

FIG. 22 is a cross-sectional view illustrating an electronic device according to an embodiment of the disclosure.

FIG. 23 is a cross-sectional view illustrating an electronic device according to an embodiment of the disclosure.

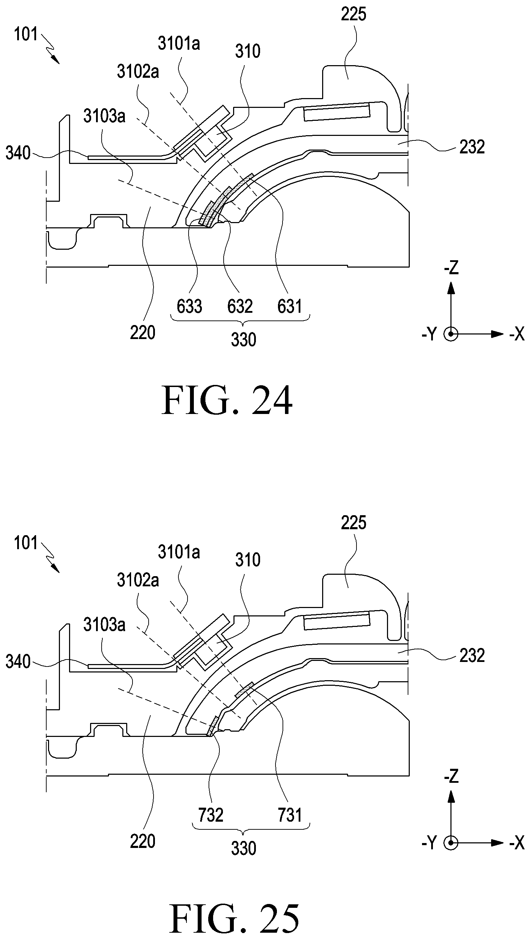

FIG. 24 is a cross-sectional view illustrating an electronic device according to an embodiment of the disclosure.

FIG. 25 is a cross-sectional view illustrating an electronic device according to an embodiment of the disclosure.

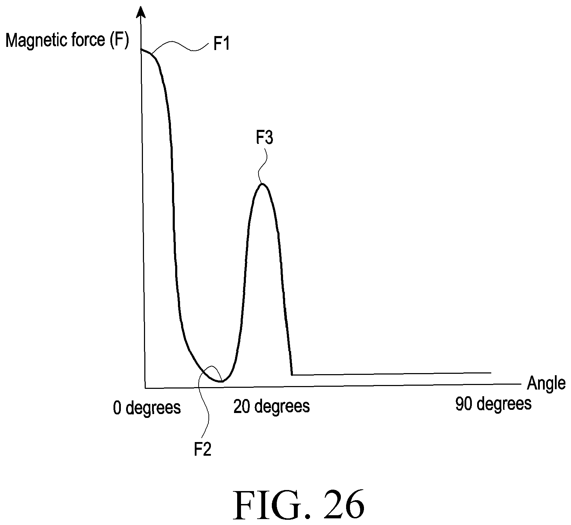

FIG. 26 is a graph illustrating a magnetic force detected by a detecting sensor according to an embodiment of the disclosure.

The embodiments of FIGS. 20 to 26 may be combined with the embodiments of FIGS. 1 to 19, or the embodiments of FIGS. 27 to 45.

Referring to FIGS. 20 to 26, an electronic device 101 (e.g., the electronic device 101 of FIG. 1 or the electronic device 101 of FIGS. 2 to 19) may include a second housing 220, a second inner portion 225, a hinge cover 232, a detecting sensor 310, a board 311, a detecting sensor component 312, a magnetically permeable member 330, or a connection board 340.

The configuration of the second housing 220, the second inner portion 225, the hinge cover 232, the detecting sensor 310, the board 311, the detecting sensor component 312, the magnetically permeable member 330, or the connection board 340 of FIGS. 20 to 26 may be identical in whole or part to the configuration of the second housing 220, the second inner portion 225, the hinge cover 232, the detecting sensor 310, the board 311, the detecting sensor component 312, the magnetically permeable member 330, or the connection board 340 of FIGS. 5 to 19.

According to an embodiment, the second housing 220 may be rotated relative to the hinge cover 232.

Referring to FIGS. 20 to 21, the magnetically permeable member 330 may include a first magnetically permeable member 331, a second magnetically permeable member 332, or a third magnetically permeable member 333. The first magnetically permeable member 331 may be positioned to be aligned with the detecting sensor 310 in a state in which the second housing 220 is not rotated with respect to the hinge cover 232 (3101a). For example, a state in which the second housing 220 is not rotated with respect to the hinge cover 232 may be defined as a state in which the states of the first housing (e.g., the first housing 210 of FIG. 10) and the second housing 220 are unfolded (e.g., FIG. 2). The second magnetically permeable member 332 may be positioned to be aligned with the detecting sensor 310 in a state in which the second housing 220 is rotated in a predetermined range (e.g., a first range) with respect to the hinge cover 232 (3102a). The third magnetically permeable member 333 may be positioned to be aligned with the detecting sensor 310 in a state in which the second housing 220 is rotated with respect to the hinge cover 232 in a second range larger than the first range (3103a). The first magnetically permeable member 331, the second magnetically permeable member 332, and the third magnetically permeable member 333 may have different relative magnetic permeabilities. For example, the relative magnetic permeability of the first magnetically permeable member 331 may be larger than the relative magnetic permeability of the second magnetically permeable member 332, and the relative magnetic permeability of the second magnetically permeable member 332 may be larger than the relative magnetic permeability of the third magnetically permeable member 333. For example, the relative magnetic permeability of the first magnetically permeable member 331 may be less than the relative magnetic permeability of the second magnetically permeable member 332, and the relative magnetic permeability of the second magnetically permeable member 332 may be less than the relative magnetic permeability of the third magnetically permeable member 333.

According to an embodiment, as the magnetically permeable members 331, 332, and 333 have different relative magnetic permeabilities, the magnetic flux detected by the detecting sensor 310 may vary depending on the relative position of the second housing 220.

FIG. 21 illustrates the intensity of the magnetic force detected by the detecting sensor 310 when the relative magnetic permeability of the first magnetically permeable member 331 is larger than the relative magnetic permeability of the second magnetically permeable member 332 and the relative magnetic permeability of the second magnetically permeable member 332 is larger than the relative magnetic permeability of the third magnetically permeable member 333.

According to an embodiment, section L1 of FIG. 21 may be defined as a section in which the detecting sensor 310 is aligned with the first magnetically permeable member 331. The section L2 of FIG. 21 may be defined as a section in which the detecting sensor 310 is aligned with the second magnetically permeable member 332. The section L3 of FIG. 21 may be defined as a section in which the detecting sensor 310 is aligned with the third magnetically permeable member 333.

According to an embodiment, when the second housing 220 is rotated with respect to the hinge cover 232, the detecting sensor 310 may be sequentially aligned with the magnetically permeable members 331, 332, and 333 having different relative magnetic permeabilities. Accordingly, the intensity (e.g., the magnitude of the magnetic flux) of the magnetic force sensed by the detecting sensor 310 may be varied. For example, when the detecting sensor 310 is aligned with the first magnetically permeable member 331, the intensity of the magnetic force detected by the detecting sensor 310 may be the first intensity F1. When the detecting sensor 310 is aligned with the second magnetically permeable member 332, the intensity of the magnetic force detected by the detecting sensor 310 may be the second intensity F2. The second intensity F2 may be smaller than the first intensity F1. When the detecting sensor 310 is aligned with the third magnetically permeable member 333, the intensity of the magnetic force detected by the detecting sensor 310 may be the third intensity F3. The third intensity F3 may be less than the second intensity F2. The electronic device 101 (or the processor 120 of FIG. 1) may be configured to determine the rotation angle of the second housing 220 with respect to the hinge cover 232, based on the intensity of the magnetic force detected by the detecting sensor 310.

Referring to FIG. 22, the magnetically permeable member 330 may include a first magnetically permeable member 431, a second magnetically permeable member 432, or a third magnetically permeable member 433. The first magnetically permeable member 431, the second magnetically permeable member 432, and the third magnetically permeable member 433 may have substantially the same thickness. The first magnetically permeable member 431 may be positioned to be aligned with the detecting sensor 310 in a state in which the second housing 220 is not rotated with respect to the hinge cover 232 (3101a). For example, a state in which the second housing 220 is not rotated with respect to the hinge cover 232 may be defined as a state in which the first housing (e.g., the first housing 210 of FIG. 10) and the second housing 220 are in the unfolded state (e.g., FIG. 2). The second magnetically permeable member 432 may be positioned to be aligned with the detecting sensor 310 in a state in which the second housing 220 is rotated in a predetermined range (e.g., a first range) with respect to the hinge cover 232 (3102a). The third magnetically permeable member 433 may be positioned to be aligned with the detecting sensor 310 in a state in which the second housing 220 is rotated with respect to the hinge cover 232 in a second range larger than the first range (3103a). The first magnetically permeable member 431, the second magnetically permeable member 432, and the third magnetically permeable member 433 may have different distances from the detecting sensor 310 while being aligned with the detecting sensor 310. For example, when the detecting sensor 310 and the first magnetically permeable member 431 are aligned, the distance between the detecting sensor 310 and the first magnetically permeable member 431 may be a first distance. When the detecting sensor 310 and the second magnetically permeable member 432 are aligned, the distance between the detecting sensor 310 and the second magnetically permeable member 432 may be a second distance. The second distance may be smaller than the first distance. When the detecting sensor 310 and the third magnetically permeable member 433 are aligned, the distance between the detecting sensor 310 and the third magnetically permeable member 433 may be a third distance. The third distance may be smaller than the second distance. The relative magnetic permeabilities of the magnetically permeable members 431, 432, and 433 may be substantially the same. According to an embodiment, the relative magnetic permeabilities of the magnetically permeable members 431, 432, and 433 may be different from each other.

According to an embodiment, the relative magnetic permeabilities of the magnetically permeable members 431, 432, and 433 are substantially the same, but as the distances between the magnetically permeable members 431, 432, and 433 and the detecting sensor 310 are different from each other, the magnetic flux detected by the detecting sensor 310 may vary depending on the relative position of the second housing 220.

According to an embodiment, when the second magnetically permeable member 432 is aligned with the detecting sensor 310, the distance between the detecting sensor 310 and the second magnetically permeable member 432 may be smaller than the distance between the detecting sensor 310 and the first magnetically permeable member 431 when the first magnetically permeable member 431 is aligned with the detecting sensor 310. Accordingly, the magnitude of the magnetic flux detected by the detecting sensor 310 when the second magnetically permeable member 432 is aligned with the detecting sensor 310 may be larger than the magnitude of the magnetic flux detected by the detecting sensor 310 when the first magnetically permeable member 431 is aligned with the detecting sensor 310. When the third magnetically permeable member 433 is aligned with the detecting sensor 310, the distance between the detecting sensor 310 and the third magnetically permeable member 433 may be smaller than the distance between the detecting sensor 310 and the second magnetically permeable member 432 when the second magnetically permeable member 432 is aligned with the detecting sensor 310. Accordingly, the magnitude of the magnetic flux detected by the detecting sensor 310 when the third magnetically permeable member 433 is aligned with the detecting sensor 310 may be larger than the magnitude of the magnetic flux detected by the detecting sensor 310 when the second magnetically permeable member 432 is aligned with the detecting sensor 310.

Referring to FIG. 23, the magnetically permeable member 330 may include a first magnetically permeable member 531, a second magnetically permeable member 532, or a third magnetically permeable member 533. The first magnetically permeable member 531, the second magnetically permeable member 532, and the third magnetically permeable member 533 may have different thicknesses. For example, the thickness of the first magnetically permeable member 531 may be smaller than the thickness of the second magnetically permeable member 532. The thickness of the second magnetically permeable member 532 may be smaller than the thickness of the third magnetically permeable member 533. The first magnetically permeable member 531 may be positioned to be aligned with the detecting sensor 310 in a state in which the second housing 220 is not rotated with respect to the hinge cover 232 (3101a). For example, a state in which the second housing 220 is not rotated with respect to the hinge cover 232 may be defined as a state in which the first housing (e.g., the first housing 210 of FIG. 10) and the second housing 220 are in the unfolded state (e.g., FIG. 2). The second magnetically permeable member 532 may be positioned to be aligned with the detecting sensor 310 in a state in which the second housing 220 is rotated in a predetermined range (e.g., a first range) with respect to the hinge cover 232 (3102a). The third magnetically permeable member 533 may be positioned to be aligned with the detecting sensor 310 in a state in which the second housing 220 is rotated with respect to the hinge cover 232 in a second range larger than the first range (3103a). The first magnetically permeable member 531, the second magnetically permeable member 532, and the third magnetically permeable member 533 may have different distances from the detecting sensor 310 while being aligned with the detecting sensor 310. For example, when the detecting sensor 310 and the first magnetically permeable member 531 are aligned, the distance between the detecting sensor 310 and the first magnetically permeable member 531 may be a first distance. When the detecting sensor 310 and the second magnetically permeable member 532 are aligned, the distance between the detecting sensor 310 and the second magnetically permeable member 532 may be a second distance. The second distance may be smaller than the first distance. When the detecting sensor 310 and the third magnetically permeable member 533 are aligned, the distance between the detecting sensor 310 and the third magnetically permeable member 533 may be a third distance. The third distance may be smaller than the second distance.

According to an embodiment, as the distances between the magnetically permeable members 531, 532, and 533 and the detecting sensor 310 are different from each other, the magnetic flux detected by the detecting sensor 310 may vary depending on the relative position of the second housing 220.

According to an embodiment, the thickness of the second magnetically permeable member 532 may be larger than the thickness of the first magnetically permeable member 531. Accordingly, the magnitude of the magnetic flux detected by the detecting sensor 310 when the second magnetically permeable member 532 is aligned with the detecting sensor 310 may be larger than the magnitude of the magnetic flux detected by the detecting sensor 310 when the first magnetically permeable member 531 is aligned with the detecting sensor 310. The thickness of the third magnetically permeable member 533 may be larger than the thickness of the second magnetically permeable member 532. Accordingly, the magnitude of the magnetic flux detected by the detecting sensor 310 when the third magnetically permeable member 533 is aligned with the detecting sensor 310 may be larger than the magnitude of the magnetic flux detected by the detecting sensor 310 when the second magnetically permeable member 532 is aligned with the detecting sensor 310.

Referring to FIG. 24, the magnetically permeable member 330 may include a first magnetically permeable member 631, a second magnetically permeable member 632, or a third magnetically permeable member 633.

The second magnetically permeable member 632 may be stacked on one surface (e.g., a surface facing the detecting sensor 310) of the first magnetically permeable member 631. The third magnetically permeable member 633 may be stacked on one surface (e.g., a surface facing the detecting sensor 310) of the second magnetically permeable member 632. The first magnetically permeable member 631 may be positioned to be aligned with the detecting sensor 310 in a state in which the second housing 220 is not rotated with respect to the hinge cover 232 (3101a). For example, a state in which the second housing 220 is not rotated with respect to the hinge cover 232 may be defined as a state in which the first housing (e.g., the first housing 210 of FIG. 10) and the second housing 220 are in the unfolded state (e.g., FIG. 2). The second magnetically permeable member 632 may be positioned to be aligned with the detecting sensor 310 in a state in which the second housing 220 is rotated in a predetermined range (e.g., a first range) with respect to the hinge cover 232 (3102a). The third magnetically permeable member 633 may be positioned to be aligned with the detecting sensor 310 in a state in which the second housing 220 is rotated with respect to the hinge cover 232 in a second range larger than the first range (3103a). The first magnetically permeable member 631, the second magnetically permeable member 632, and the third magnetically permeable member 633 may have different distances from the detecting sensor 310 while being aligned with the detecting sensor 310. For example, when the detecting sensor 310 and the first magnetically permeable member 631 are aligned, the distance between the detecting sensor 310 and the first magnetically permeable member 631 may be a first distance. When the detecting sensor 310 and the second magnetically permeable member 632 are aligned, the distance between the detecting sensor 310 and the second magnetically permeable member 632 may be a second distance. The second distance may be smaller than the first distance. When the detecting sensor 310 and the third magnetically permeable member 633 are aligned, the distance between the detecting sensor 310 and the third magnetically permeable member 633 may be a third distance. The third distance may be smaller than the second distance.

According to an embodiment, as the distances between the magnetically permeable members 631, 632, and 633 and the detecting sensor 310 are different from each other, the magnetic flux detected by the detecting sensor 310 may vary depending on the relative position of the second housing 220.

According to an embodiment, depending on the position where the detecting sensor 310 is aligned with the magnetically permeable members 631, 632, and 633, the thickness of the magnetically permeable member 330 aligned with the detecting sensor 310 may be different. For example, the detecting sensor 310 may be aligned with one magnetically permeable member 631, may be aligned with two magnetically permeable members 631 and 632, or may be aligned with three magnetically permeable members 631, 632, and 633. As the thickness of the magnetically permeable member 330 aligned with the detecting sensor 310 becomes different, the intensity of the magnetic flux sensed by the detecting sensor 310 may be varied.

According to an embodiment, when the second magnetically permeable member 632 is aligned with the detecting sensor 310, the distance between the detecting sensor 310 and the second magnetically permeable member 632 may be smaller than the distance between the detecting sensor 310 and the first magnetically permeable member 631 when the first magnetically permeable member 631 is aligned with the detecting sensor 310. Accordingly, the magnitude of the magnetic flux detected by the detecting sensor 310 when the second magnetically permeable member 632 is aligned with the detecting sensor 310 may be larger than the magnitude of the magnetic flux detected by the detecting sensor 310 when the first magnetically permeable member 631 is aligned with the detecting sensor 310. When the third magnetically permeable member 633 is aligned with the detecting sensor 310, the distance between the detecting sensor 310 and the third magnetically permeable member 633 may be smaller than the distance between the detecting sensor 310 and the second magnetically permeable member 632 when the second magnetically permeable member 632 is aligned with the detecting sensor 310. Accordingly, the magnitude of the magnetic flux detected by the detecting sensor 310 when the third magnetically permeable member 633 is aligned with the detecting sensor 310 may be larger than the magnitude of the magnetic flux detected by the detecting sensor 310 when the second magnetically permeable member 632 is aligned with the detecting sensor 310.

Referring to FIG. 25, the magnetically permeable member 330 may include a first magnetically permeable member 731 or a second magnetically permeable member 732. The first magnetically permeable member 731 may be spaced apart from the second magnetically permeable member 732. For example, at least a portion of the hinge cover 232 may be positioned between the first magnetically permeable member 731 and the second magnetically permeable member 732. The first magnetically permeable member 731 may be positioned to be aligned with the detecting sensor 310 in a state in which the second housing 220 is not rotated with respect to the hinge cover 232 (3101a). For example, a state in which the second housing 220 is not rotated with respect to the hinge cover 232 may be defined as a state in which the first housing (e.g., the first housing 210 of FIG. 10) and the second housing 220 are in the unfolded state (e.g., FIG. 2). The detecting sensor 310 may be positioned not to be aligned with the magnetically permeable members 731 and 732 in a state in which the second housing 220 is rotated with respect to the hinge cover 232 in a predetermined range (e.g., a first range) (3102a). The second magnetically permeable member 732 may be positioned to be aligned with the detecting sensor 310 in a state in which the second housing 220 is rotated with respect to the hinge cover 232 in a second range larger than the first range (3103a).

According to an embodiment, as the detecting sensor 310 is aligned or not aligned with the magnetically permeable members 731 and 732, the magnetic flux detected by the detecting sensor 310 may vary depending on the relative position of the second housing 220. For example, when the detecting sensor 310 is aligned with the first magnetically permeable member 731 (e.g., 3101a of FIG. 25), the intensity of the magnetic flux detected by the detecting sensor 310 may be larger than the intensity of the magnetic flux detected by the detecting sensor 310 when the detecting sensor 310 is not aligned with the first magnetically permeable member 731 and the second magnetically permeable member 732 (e.g., 3102a of FIG. 25). Further, the intensity of the magnetic flux detected by the detecting sensor 310 when the detecting sensor 310 is aligned with the second magnetically permeable member 732 (e.g., 3103a of FIG. 25) may be larger than the intensity of the magnetic flux detected by the detecting sensor 310 when the detecting sensor 310 is not aligned with the first magnetically permeable member 731 and the second magnetically permeable member 732 (e.g., 3102a of FIG. 25).

According to an embodiment, when the detecting sensor 310 is aligned with the first magnetically permeable member 731 or the second magnetically permeable member 732 (e.g., 3101a or 3103a of FIG. 25), the intensity of the magnetic flux detected by the detecting sensor 310 may be larger than or equal to a threshold. When the detecting sensor 310 is not aligned with the first magnetically permeable member 731 and the second magnetically permeable member 732 (e.g., 3102a of FIG. 25), the intensity of the magnetic flux detected by the detecting sensor 310 may be less than a threshold. Accordingly, the electronic device 101 may be configured so that magnetic fluxes larger than or equal to a threshold are detected by the detecting sensor 310 at two relative positions of the second housing 220 with respect to the hinge cover 232.

FIG. 26 illustrates the intensity of the magnetic force detected by the detecting sensor 310 when the relative magnetic permeability of the first magnetically permeable member 731 is larger than the relative magnetic permeability of the second magnetically permeable member 732. The description made with reference to FIG. 26 may be equally applied and/or understood even when the relative magnetic permeability of the first magnetically permeable member 731 is substantially the same as the relative magnetic permeability of the second magnetically permeable member 732.

According to an embodiment, the horizontal axis (angle) of FIG. 26 represents a relative rotation angle of the second housing 220 with respect to the hinge cover 232, and the vertical axis (magnetic force F) of FIG. 26 represents the intensity of the magnetic force detected by the detecting sensor 310 according to the relative rotation angle of the second housing 220.

According to an embodiment, when the detecting sensor 310 is aligned with the first magnetically permeable member 731, the intensity of the magnetic force detected by the detecting sensor 310 may be the first intensity F1. When the detecting sensor 310 is not aligned with the magnetically permeable members 731 and 732, the intensity of the magnetic force detected by the detecting sensor 310 may be the second intensity F2. The second intensity F2 may be smaller than the first intensity F1. When the detecting sensor 310 is aligned with the second magnetically permeable member 732, the intensity of the magnetic force detected by the detecting sensor 310 may be the third intensity F3. The third intensity F3 may be larger than the second intensity F2. The third intensity F3 may be smaller than the first intensity F1. The electronic device 101 (or the processor 120 of FIG. 1) may be configured to determine the rotation angle of the second housing 220 with respect to the hinge cover 232, based on the intensity of the magnetic force detected by the detecting sensor 310.

Referring to FIGS. 20 to 26, as the magnetically permeable member 330 includes a plurality of magnetically permeable members, the electronic device 101 (or the processor 120 of FIG. 1) may be configured to detect or obtain a change in the intensity of the magnetic force detected by the detecting sensor 310 according to the relative rotation angle of the second housing 220 with respect to the hinge cover 232. When the second housing 220 rotates with respect to the hinge cover 232, the electronic device 101 may have various rotation angles at which the intensity of the magnetic force detected by the detecting sensor 310 is equal to or larger than a threshold according to the rotation angle of the second housing 220. For example, depending on the material or arrangement position of the magnetically permeable member 330, a plurality of specific positions or specific rotation angles of the second housing 220 with respect to the hinge cover 232 may be provided so that the intensity of the magnetic force detected by the detecting sensor 310 is equal to or larger than the threshold. Further, the electronic device 101 may be configured so that a plurality of thresholds are set to determine a plurality of positions or a plurality of rotation angles at which the second housing 220 rotates with respect to the hinge cover 232 as different user inputs, respectively.

FIG. 27 is a cross-sectional view illustrating an electronic device according to an embodiment of the disclosure.

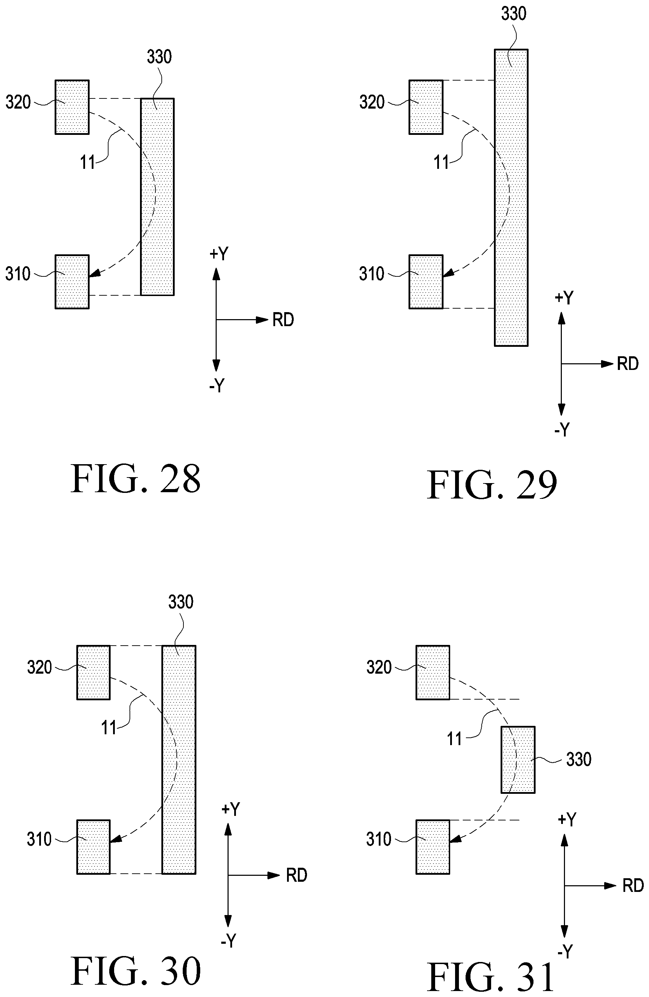

The embodiment of FIG. 27 may be combined with the embodiments of FIGS. 1 to 26, or the embodiments of FIGS. 28 to 45.

Referring to FIG. 27, an electronic device 101 (e.g., the electronic device 101 of FIG. 1 or the electronic device 101 of FIGS. 2 to 26) may include a first housing 210, a first inner portion 215, a second housing 220, a second inner portion 225, a first rotation member 2311, a second rotation member 2312, a hinge bracket 2313, a hinge cover 232, a detecting sensor 310, or a magnetically permeable member 330.

The configuration of the first housing 210, the first inner portion 215, the second housing 220, the second inner portion 225, the first rotation member 2311, the second rotation member 2312, the hinge bracket 2313, the hinge cover 232, the detecting sensor 310, or the magnetically permeable member 330 of FIG. 27 may be identical in whole or part to the configuration of the first housing 210, the first inner portion 215, the second housing 220, the second inner portion 225, the first rotation member 2311, the second rotation member 2312, the hinge bracket 2313, the hinge cover 232, the detecting sensor 310, or the magnetically permeable member 330 of FIGS. 5 to 25.

According to an embodiment, the electronic device 101 may include a detecting sensor 310 and a magnetically permeable member 330 for detecting relative rotation of the second housing 220 with respect to the hinge cover 232. Further, the electronic device 101 may include a magnetic member (e.g., the magnetic member 320 of FIG. 10) disposed in the second housing 220, positioned to correspond to the detecting sensor 310, and positioned to be aligned or not aligned with the magnetically permeable member 330 according to the relative rotation of the second housing 220.

According to an embodiment, the electronic device 101 may include an additional detecting sensor 360 and an additional magnetically permeable member 380 for detecting relative rotation of the first housing 210 with respect to the hinge cover 232. The configuration of the additional detecting sensor 360 may be identical in whole or part to the configuration of the detecting sensor 310. The configuration of the additional magnetically permeable member 380 may be identical in whole or part to the configuration of the magnetically permeable member 330. Further, the electronic device 101 may include an additional magnetic member (e.g., the magnetic member 320 of FIG. 10) disposed in the first housing 210, positioned to correspond to the additional detecting sensor 360, and positioned to be aligned or not aligned with the additional magnetically permeable member 380 according to the relative rotation of the first housing 210. The additional magnetic member may be disposed in the first housing 210. The additional magnetic member may be spaced apart from the additional detecting sensor 360.

According to an embodiment, the additional detecting sensor 360 may be disposed in the first housing 210. The additional magnetically permeable member 380 may be disposed on the hinge cover 232.

According to an embodiment, the detecting sensor 310 may be aligned with the magnetically permeable member 330 in a state in which the second housing 220 is not rotated with respect to the hinge cover 232 (310a). The additional detecting sensor 360 may not be aligned with the additional magnetically permeable member 380 in a state in which the first housing 210 is not rotated with respect to the hinge cover 232 (360a). The additional detecting sensor 360 may be aligned with the additional magnetically permeable member 380 in a state in which the first housing 210 is rotated in a predetermined range with respect to the hinge cover 232.

According to an embodiment, the electronic device 101 (or the processor 120 of FIG. 1) may be configured to determine the rotation angle of the second housing 220 and/or the first housing 210 with respect to the hinge cover 232, based on the intensity of the magnetic force detected by the detecting sensor 310 and/or the additional detecting sensor 360.

FIGS. 28, 29, 30, and 31 are views schematically illustrating a relative positional relationship between a detecting sensor, a magnetic member, and a magnetically permeable member according to an embodiment of the disclosure.

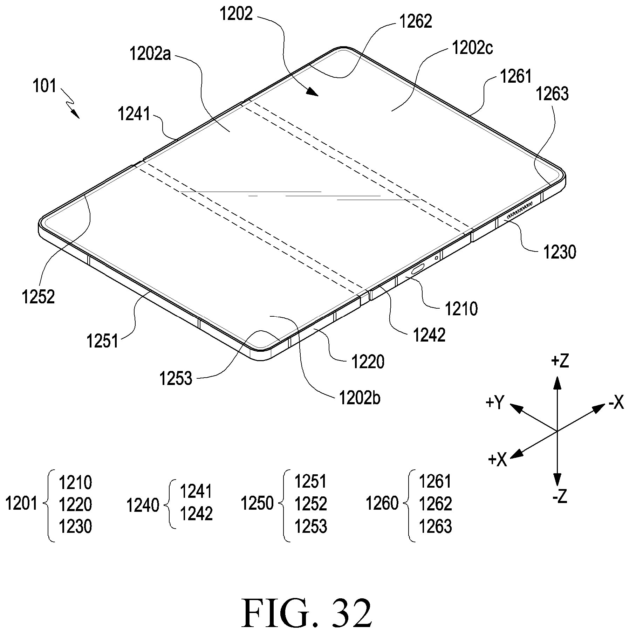

The embodiments of FIGS. 28 to 31 may be combined with the embodiments of FIGS. 1 to 27, or the embodiments of FIGS. 32 to 45.

Referring to FIGS. 28 to 31, the magnetically permeable member 330 (e.g., the magnetically permeable member 330 of FIGS. 5 to 27) may extend in the length direction (e.g., the Y-axis direction of FIGS. 28 to 31) of the electronic device (e.g., the electronic device 101 of FIGS. 5 to 27). The magnetically permeable member 330 may extend in a first direction (e.g., the Y-axis direction of FIGS. 28 to 31). The first direction may be substantially parallel to an axis (e.g., the folding axis A of FIG. 2) of the hinge structure (e.g., the hinge structure 231 of FIG. 4).

According to an embodiment, the detecting sensor 310 (e.g., the detecting sensor 310 of FIGS. 5 to 27) and the magnetic member 320 (e.g., the magnetic member 320 of FIGS. 5 to 27) may be disposed side by side with respect to the magnetically permeable member 330. The magnetic member 320 may be spaced apart from the detecting sensor 310 in the extending direction (e.g., the Y-axis direction of FIGS. 28 to 31) of the magnetically permeable member 330.

According to an embodiment, the detecting sensor 310, the magnetic member 320, and the magnetically permeable member 330 may have various positional relationships (or arrangement relationships) in which the magnetic flux 11 of the magnetic member 320 concentrated by the magnetically permeable member 330 may be detected by the detecting sensor 310 when the magnetically permeable member 330 is aligned with the detecting sensor 310 and the magnetic member 320.

According to an embodiment, the relative size or relative positional relationship of the detecting sensor 310, the magnetic member 320, and the magnetically permeable member 330 is not limited by the embodiments of FIGS. 28 to 31 to be described below, and may be variously changed. For example, the relative sizes of the detecting sensor 310, the magnetic member 320, and the magnetically permeable member 330 may have various sizes in which the intensity of the magnetic flux detected by the detecting sensor 310 is equal to or larger than a designated threshold in a state in which the magnetically permeable member 330 is aligned with the detecting sensor 310 and the magnetic member 320. Further, the magnetic intensity of the magnetic member 320 may have various intensities at which the intensity of the magnetic flux detected by the detecting sensor 310 is equal to or larger than a designated threshold in a state in which the magnetically permeable member 330 is aligned with the detecting sensor 310 and the magnetic member 320. Further, the relative magnetic permeabilities of the magnetically permeable member 330 may have various relative magnetic permeabilities at which the intensity of the magnetic flux detected by the detecting sensor 310 is equal to or larger than a designated threshold in a state in which the magnetically permeable member 330 is aligned with the detecting sensor 310 and the magnetic member 320. Further, the threshold for the magnetic flux set in the detecting sensor 310 may be set to various thresholds that allow the intensity of the magnetic flux detected by the detecting sensor 310 to be equal to or larger than a specific value in a state in which the magnetically permeable member 330 is aligned with the detecting sensor 310 and the magnetic member 320.

Referring to FIG. 28, a length (e.g., a length in the Y-axis direction of FIG. 28) of the magnetically permeable member 330 may be larger than a distance (e.g., a separation distance in the Y-axis direction of FIG. 28) between the detecting sensor 310 and the magnetic member 320. The length of the magnetically permeable member 330 may be smaller than the distance between the outer end (e.g., the end facing the -Y direction in FIG. 28) of the detecting sensor 310 and the outer end (e.g., the end facing the +Y direction in FIG. 28) of the magnetic member 320. At least a portion of the magnetically permeable member 330 may overlap at least a portion of the detecting sensor 310 and/or at least a portion of the magnetic member 320 with respect to a radial direction (e.g., the direction RD of FIG. 28) with respect to the length direction (e.g., the Y-axis direction of FIG. 28) of the magnetically permeable member 330. For example, the magnetically permeable member 330 may extend in the first direction (e.g., the Y-axis direction of FIG. 28), and at least the portion of the magnetically permeable member 330 may overlap at least the portion of the detecting sensor 310 and/or at least the portion of the magnetic member 320 in a second direction (e.g., the direction RD of FIG. 28) different from the first direction. The second direction (e.g., the direction RD of FIG. 28) may be a direction perpendicular to the first direction.

Referring to FIG. 29, the length (e.g., the length in the Y-axis direction of FIG. 29) of the magnetically permeable member 330 may be larger than the distance between the outer end (e.g., the end facing in the -Y direction of FIG. 29) of the detecting sensor 310 and the outer end (e.g., the end facing in the +Y direction of FIG. 29) of the magnetic member 320. At least a portion of the magnetically permeable member 330 may overlap at least a portion of the detecting sensor 310 and/or at least a portion of the magnetic member 320 with respect to a radial direction (e.g., the direction RD of FIG. 29) with respect to the length direction (e.g., the Y-axis direction of FIG. 29) of the magnetically permeable member 330. For example, the magnetically permeable member 330 may extend in the first direction (e.g., the Y-axis direction of FIG. 29), and at least the portion of the magnetically permeable member 330 may overlap at least the portion of the detecting sensor 310 and/or at least the portion of the magnetic member 320 in a second direction (e.g., the direction RD of FIG. 29) different from the first direction. The second direction (e.g., the direction RD of FIG. 29) may be a direction perpendicular to the first direction.

Referring to FIG. 30, the length (e.g., the length in the Y-axis direction of FIG. 30) of the magnetically permeable member 330 may be substantially the same as the distance between the outer end (e.g., the end facing the -Y direction of FIG. 30) of the detecting sensor 310 and the outer end (e.g., the end facing the +Y direction of FIG. 30) of the magnetic member 320. At least a portion of the magnetically permeable member 330 may overlap at least a portion of the detecting sensor 310 and/or at least a portion of the magnetic member 320 with respect to a radial direction (e.g., the direction RD of FIG. 30) with respect to the length direction (e.g., the Y-axis direction of FIG. 30) of the magnetically permeable member 330. For example, the magnetically permeable member 330 may extend in the first direction (e.g., the Y-axis direction of FIG. 30), and at least the portion of the magnetically permeable member 330 may overlap at least the portion of the detecting sensor 310 and/or at least the portion of the magnetic member 320 in a second direction (e.g., the direction RD of FIG. 30) different from the first direction. The second direction (e.g., the direction RD of FIG. 30) may be a direction perpendicular to the first direction.

Referring to FIG. 31, the length (e.g., the length in the Y-axis direction of FIG. 31) of the magnetically permeable member 330 may be smaller than the distance between the outer end (e.g., the end facing the -Y direction of FIG. 31) of the detecting sensor 310 and the outer end (e.g., the end facing the +Y direction of FIG. 31) of the magnetic member 320. At least a portion of the magnetically permeable member 330 may not overlap at least a portion of the detecting sensor 310 and/or at least a portion of the magnetic member 320 with respect to a radial direction (e.g., the direction RD of FIG. 31) with respect to the length direction (e.g., the Y-axis direction of FIG. 31) of the magnetically permeable member 330. For example, the magnetically permeable member 330 may extend in the first direction (e.g., the Y-axis direction of FIG. 31), and at least a portion of the magnetically permeable member 330 may not overlap at least a portion of the detecting sensor 310 and/or at least a portion of the magnetic member 320 in the second direction (e.g., the direction RD of FIG. 31) different from the first direction. The second direction (e.g., the direction RD of FIG. 31) may be a direction perpendicular to the first direction.

FIG. 32 is a perspective view illustrating an unfolded state of an electronic device according to an embodiment of the disclosure.

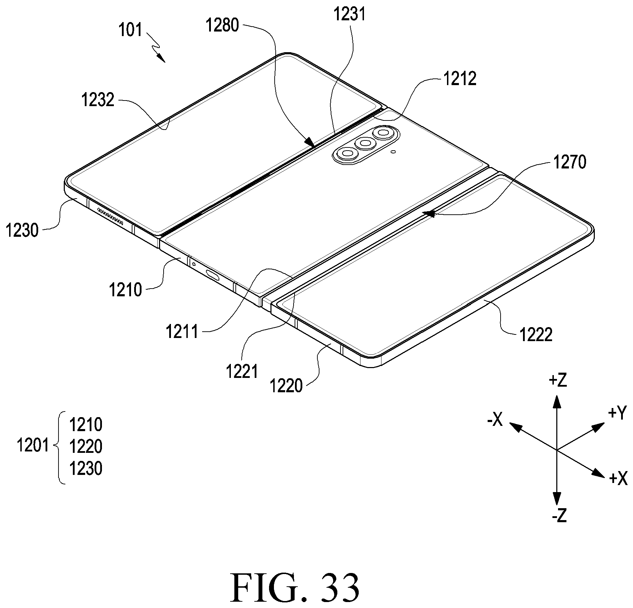

FIG. 33 is a perspective view illustrating an unfolded state of an electronic device according to an embodiment of the disclosure.

FIG. 32 may be a view of one side surface (e.g., front surface) of the electronic device as obliquely viewed. FIG. 33 may be a view of the other side surface (e.g., rear surface) of the electronic device as obliquely viewed. The components described with reference to FIGS. 32 and 33 may be identical in whole or part to the components described with reference to FIG. 1.

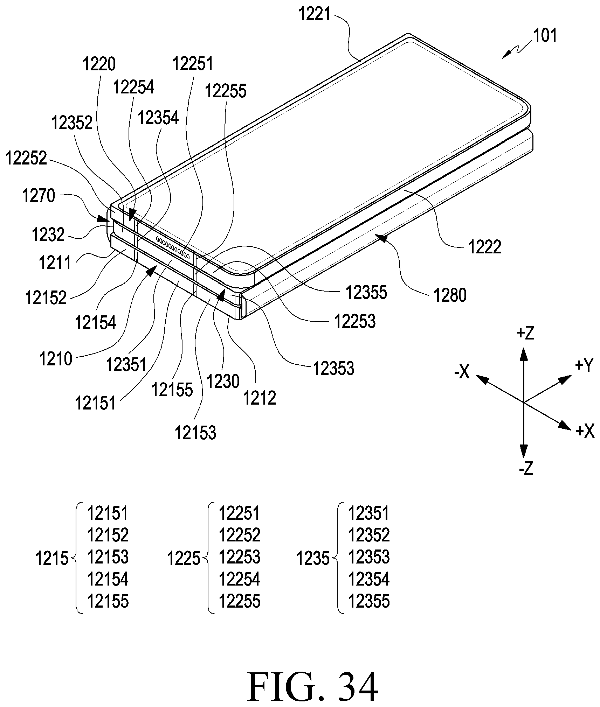

The embodiments of FIGS. 32 and 33 may be combined with the embodiments of FIGS. 1 to 31, or the embodiments of FIGS. 34 to 45.

According to an embodiment, the electronic device 101 may include a housing 1201. The electronic device 101 may include a display 1202. The housing 1201 may form a space where the display 1202 is disposed. The display 1202 may be a flexible display 1202. At least a portion of the display 1202 may be folded or unfolded. The housing 1201 may be defined and/or referred to as a multi-foldable housing or a deformable housing.

According to an embodiment, the housing 1201 may include a first housing 1210. The housing 1201 may include a second housing 1220. The housing 1201 may include a third housing 1230. The first housing 1210 may be disposed between the second housing 1220 and the third housing 1230. The second housing 1220 may be rotatably coupled to the first housing 1210. The third housing 1230 may be rotatably coupled to the first housing 1210. The display 1202 may include a first display area 1202a corresponding to the first housing 1210, a second display area 1202b corresponding to the second housing 1220, and a third display area 1202c corresponding to the third housing 1230.

According to an embodiment, the electronic device 101 may include supports 1240, 1250, and 1260. The supports 1240, 1250, and 1260 may be disposed between the housing 1201 and the display 1202. The supports 1240, 1250, and 1260 may be coupled to the housing 1201 and may support the display 1202. The supports 1240, 1250, and 1260 may be disposed to surround edges of the display 1202. The supports 1240, 1250, and 1260 may extend along the circumference of the housing 1201. The supports 1240, 1250, and 1260 may include a first support 1240 disposed in the first housing 1210, a second support 1250 disposed in the second housing 1220, and a third support 1260 disposed in the third housing 1230. The support 1240, 1250, or 1260 may be referred to as a "body". The support 1240, 1250, or 1260 may be referred to as a "frame". The support 1240, 1250, or 1260 may be referred to as a "sealing member". The support 1240, 1250, or 1260 may be referred to as a "peripheral part". The support 1240, 1250, or 1260 may be referred to as a "circumferential part". The support 1240, 1250, or 1260 may be referred to as a "peripheral structure". The support 1240, 1250, or 1260 may be referred to as a "circumferential structure". The supports 1240, 1250, and 1260 may be disposed between the housings 1210, 1220, and 1230 and the display 1202. The supports 1240, 1250, and 1260 may be disposed between the housings 1210, 1220, and 1230 and the display 1202. The support 1240, 1250, or 1260 may be referred to as a "cushioning member".

According to an embodiment, the supports 1240, 1250, and 1260 may include a first support 1240. The first support 1240 may be disposed between the first housing 1210 and the display 1202. The first support 1240 may be disposed along an edge of the first housing 1210. The first support 1240 may include a 1-1th support 1241 and a 1-2th support 1242. At least a portion of the display 1202 may be disposed between the 1-1th support 1241 and the 1-2th support 1242. The 1-1th support 1241 may be disposed at one end portion of the first housing 1210, and the 1-2th support 1242 may be disposed at the other end portion of the first housing 1210. Each of the first, second, and third supports 1240, 1250, and 1260 may be referred to as a "support". The support 1240, 1250, or 1260 may be referred to as a "deco," "finishing member," or "non-conductive member."

According to an embodiment, the supports 1240, 1250, and 1260 may include a second support 1250. The second support 1250 may be disposed between the second housing 1220 and the display 1202. The second support 1250 may be disposed along an edge of the second housing 1220. The second support 1250 may include a 2-1th support 1251, a 2-2th support 1252, and a 2-3th support 1253. At least a portion of the display 1202 may be disposed between the 2-2th support 1252 and the 2-3th support 1253. The 2-1th support 1251 may connect the 2-2th support 1252 and the 2-3th support 1253. The 2-1th support 1251 may extend along an edge (e.g., the edge 1222 of FIG. 3) of the second housing 1220. The 2-1th support 1251 may be disposed between the edge 1222 of the second housing 1220 and the display 1202. The 2-1th support 1251 may be referred to as a "support frame" or a "first support frame". Each of the 2-2th support 1252 and the 2-3th support 1253 may be referred to as a "second support frame".

According to an embodiment, the supports 1240, 1250, and 1260 may include a third support 1260. The third support 1260 may be disposed between the third housing 1230 and the display 1202. The third support 1260 may be disposed along an edge of the third housing 1230. The third support 1260 may include a 3-1th support 1261, a 3-2th support 1262, and a 3-3th support 1263. At least a portion of the display 1202 may be disposed between the 3-2th support 1262 and the 3-3th support 1263. The 3-1th support 1261 may connect the 3-2th support 1262 and the 3-3th support 1263. The 3-1th support 1261 may extend along an edge (e.g., the edge 1232 of FIG. 3) of the third housing 1230. The 3-1th support 1261 may be disposed between the edge 1232 of the third housing 1230 and the display 1202. The 3-1th support 1261 may be referred to as a "support frame" or a "first support frame". Each of the 3-2th support 1262 and the 3-3th support 1263 may be referred to as a "second support frame".

According to an embodiment, the first housing 1210 may include a 1-1th side portion 1211 and a 1-2th side portion 1212. The 1-1th side portion 1211 and the 1-2th side portion 1212 may form two opposite side surfaces, respectively, of the first housing 1210. The second housing 1220 may be coupled to the 1-1th side portion 1211. The third housing 1230 may be coupled to the 1-2th side portion 1212. The 1-1th side portion 1211 may be referred to as a "first coupling portion". The 1-2th side portion 1212 may be referred to as a "second coupling portion". The 1-1th side portion 1211 may be referred to as a "first portion". The 1-2th side portion 1212 may be referred to as a "second portion".

According to an embodiment, the second housing 1220 may include a 2-1th side portion 1221 and a 2-2th side portion 1222. The 2-1th side portion 1221 and the 2-2th side portion 1222 may form two opposite side surfaces, respectively, of the second housing 1220. The 2-1th side portion 1221 may be coupled to the first housing 1210. The 2-2th side portion 1222 may form a side surface of the housing 1201. The 2-2th side portion 1222 may be referred to as an "edge". The 2-1th side portion 1221 may be referred to as a "third side portion". The 2-2th side portion 1222 may be referred to as a "fourth side portion".

According to an embodiment, the third housing 1230 may include a 3-1th side portion 1231 and a 3-2th side portion 1232. The 3-1th side portion 1231 and the 3-2th side portion 1232 may form two opposite side surfaces, respectively, of the third housing 1230. The 3-1th side portion 1231 may be coupled to the first housing 1210. The 3-2th side portion 1232 may form a side surface of the housing 1201. The 3-2th side portion 1232 may be referred to as an "edge". The 3-1th side portion 1231 may be referred to as a "fifth side portion". The 3-2th side portion 1232 may be referred to as a "sixth side portion".

According to an embodiment, the electronic device 101 may include a first hinge assembly 1270 and a second hinge assembly 1280. The first hinge assembly 1270 may be disposed between the first housing 1210 and the second housing 1220. The first hinge assembly 1270 may be disposed between the 1-1th side portion 1211 and the 2-1th side portion 1221. The first hinge assembly 1270 may rotatably connect the first housing 1210 and the second housing 1220. The second hinge assembly 1280 may be disposed between the first housing 1210 and the third housing 1230. The second hinge assembly 1280 may be disposed between the 1-2th side portion 1212 and the 3-1th side portion 1231. The second hinge assembly 1280 may rotatably connect the first housing 1210 and the third housing 1230.

FIG. 34 is a perspective view illustrating a folded state of an electronic device according to an embodiment of the disclosure.

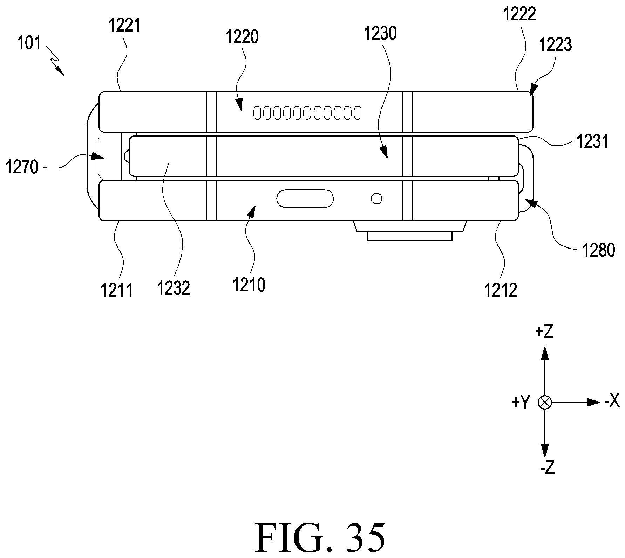

FIG. 35 is a side view illustrating the electronic device of FIG. 34 viewed from one direction (e.g., -Y direction) to another direction (e.g., +Y direction).

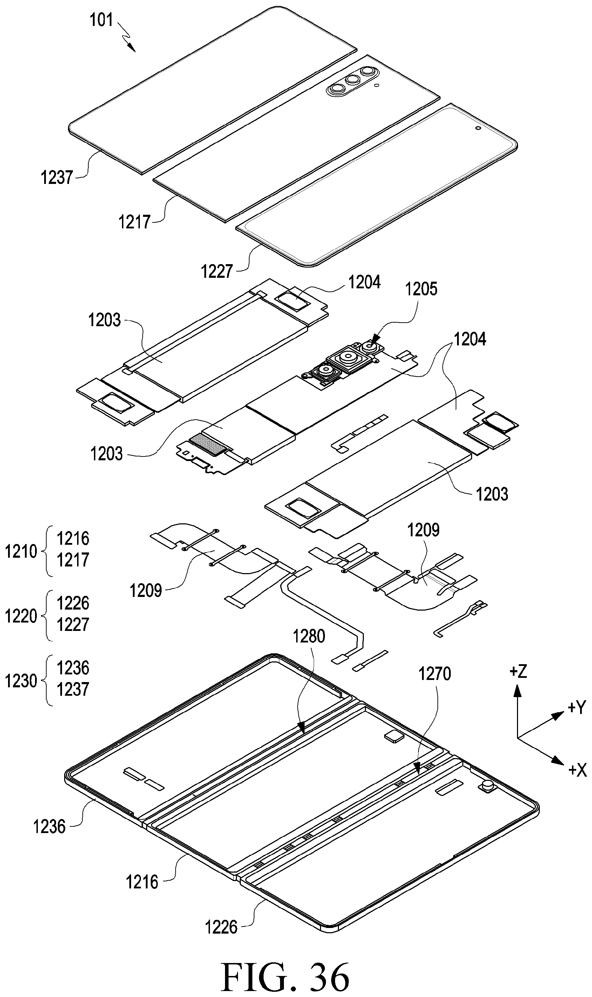

The embodiments of FIGS. 34 and 35 may be combined with the embodiments of FIGS. 1 to 33, or the embodiments of FIGS. 36 to 45.

Some or all of the components described with reference to FIGS. 34 and 35 may be the same as those described with reference to FIGS. 1 to 33.

According to an embodiment, the second housing 1220 may be rotated with respect to the first housing 1210. The first hinge assembly 1270 may provide a center of rotation to the second housing 1220. The first hinge assembly 1270 may connect the 1-1th side portion 1211 and the 2-1th side portion 1221. The third housing 1230 may be rotated with respect to the first housing 1210. The second hinge assembly 1280 may provide a center of rotation to the third housing 1230. The second hinge assembly 1280 may connect the 1-2th side portion 1212 and the 3-1th side portion 1231.

According to an embodiment, in the folded state of the electronic device 101, each of the first, second, and third housings 1210, 1220, and 1230 may be arranged in one direction (e.g., the +Y direction). For example, the third housing 1230 may be disposed above the first housing 1210, and the second housing 1220 may be disposed above the third housing 1230. For example, the third housing 1230 may be disposed between the first housing 1210 and the second housing 1220.

According to an embodiment, the electronic device 101 may include an antenna 1223. The antenna 1223 may be formed at an edge 1222 of the second housing 1220. The antenna 1223 may be integrated with the second housing 1220 and may be a portion of the edge 1222. The antenna 1223 may be manufactured separately from the second housing 1220 and may be coupled to the edge 1222 of the second housing 1220. The antenna 1223 may be referred to as a "first conductive portion". The antenna 1223 may include a metallic material. According to an embodiment, the edge 1222 of the second housing 1220 may be an area of the second housing 1220 which overlaps an area in which the screen of the flexible display 1202 is not visible from the outside of the housing (e.g., the second housing 1220) when the flexible display 1202 is viewed from the screen display direction (e.g., the +Z direction). For example, the edge 1222 of the second housing 1220 may include a bezel portion (e.g., the second support portion 1257 of FIG. 8) of the second housing 1220 and an antenna 1223.

According to an embodiment, in the folded state of the electronic device 101, the antenna 1223 may be spaced apart from the second hinge assembly 1280. One surface of the antenna 1223 may face the second hinge assembly 1280. The width of the first hinge assembly 1270 may be larger than the width of the second hinge assembly 1280. For example, with reference to FIG. 35, the length of the first hinge assembly 1270 extending in the +Z direction may be larger than the length of the second hinge assembly 1280 extending in the +Z direction.

According to an embodiment, the antenna 1223 may include a first antenna portion 12231, a second antenna portion 12232, and a third antenna portion 12233. The first, second, and third antenna portions 12231, 12232, and 12233 may be spaced apart from each other along the edge 1222 of the second housing 1220. Each of the first, second, and third antenna portions 12231, 12232, and 12233 may include a conductive material. The antenna 1223 may include a first segmented portion 12234 and a second segmented portion 12235. The first segmented portion 12234 may be disposed between the first antenna portion 12231 and the second antenna portion 12232. The second segmented portion 12235 may be disposed between the first antenna portion 12231 and the third antenna portion 12233.

According to an embodiment, the electronic device 101 may include a first antenna 1215, a second antenna 1225, and a third antenna 1235. The first antenna 1215 may form a portion of the first housing 1210. The first antenna 1215 may form at least a portion of the surface of the first housing 1210. The second antenna 1225 may form a portion of the second housing 1220. The second antenna 1225 may form at least a portion of the surface of the second housing 1220. The third antenna 1235 may form a portion of the third housing 1230. The third antenna 1235 may form at least a portion of the surface of the third housing 1230.

According to an embodiment, the first antenna 1215 may include a 1-1th antenna portion 12151, a 1-2th antenna portion 12152, and a 1-3th antenna portion 12153. The 1-1th antenna portion 12151 may be disposed between the 1-2th antenna portion 12152 and the 1-3th antenna portion 12153. The first antenna 1215 may include a 1-1th segmenter 12154 and a 1-2th segmenter 12155. The 1-1th antenna portion 12151 and the 1-2th antenna portion 12152 may be spaced apart from each other, and the 1-1th segmented portion 12154 may be disposed between the 1-1th antenna portion 12151 and the 1-2th antenna portion 12152. The 1-1th antenna portion 12151 and the 1-3th antenna portion 12153 may be spaced apart from each other, and the 1-2th segmented portion 12155 may be disposed between the 1-1th antenna portion 12151 and the 1-3th antenna portion 12153.

According to an embodiment, the second antenna 1225 may include a 2-1th antenna portion 12251, a 2-2th antenna portion 12252, and a 2-3th antenna portion 1253. The 2-1st antenna portion 12251 may be disposed between the 2-2th antenna portion 12252 and the 2-3th antenna portion 12253. The second antenna 1225 may include a 2-1th segmented portion 12254 and a 2-2th segmented portion 12255. The 2-1th antenna portion 12251 and the 2-2th antenna portion 12252 may be spaced apart from each other, and the 2-1th segmented portion 12254 may be disposed between the 2-1th antenna portion 12251 and the 2-2th antenna portion 12252. The 2-1th antenna portion 12251 and the 2-3th antenna portion 12253 may be spaced apart from each other, and the 2-2th segmented portion 12255 may be disposed between the 2-1th antenna portion 12251 and the 2-3th antenna portion 12253.

According to an embodiment, the third antenna 1235 may include a 3-1st antenna portion 12351, a 3-2th antenna portion 12352, and a 3-3th antenna portion 12353. The 3-1st antenna portion 12351 may be disposed between the 3-2th antenna portion 12352 and the 3-3th antenna portion 12353. The third antenna 1235 may include a 3-1st segmented portion 12354 and a 3-2th segmented portion 12355. The 3-1th antenna portion 12351 and the 3-2th antenna portion 12352 may be spaced apart from each other, and the 3-1th segmented portion 12354 may be disposed between the 3-1th antenna portion 12351 and the 3-2th antenna portion 12352. The 3-1th antenna portion 12351 and the 3-3th antenna portion 12353 may be spaced apart from each other, and the 3-2th segmented portion 12355 may be disposed between the 3-1th antenna portion 12351 and the 3-3th antenna portion 12353.

According to an embodiment, in the folded state of the electronic device 101, the first housing 1210, the second housing 1220, and the third housing 1230 may be aligned with each other. For example, in the folded state of the electronic device 101, the first housing 1210, the third housing 1230, and the second housing 1220 may be aligned in one direction (e.g., the +Z direction) in the described order. In the folded state of the electronic device 101, the first antenna 1215, the second antenna 1225, and the third antenna 1235 may be aligned with each other. For example, in the folded state of the electronic device 101, the first antenna 1215, the third antenna 1235, and the second antenna 1225 may be aligned in one direction (e.g., the +Z direction) in the described order. In the folded state of the electronic device 101, the first antenna 1215, the second antenna 1225, and the third antenna 1235 may be aligned with each other in a direction (e.g., +Z direction) in which the housings 1210, 1220, and 1230 are stacked. For example, in the folded state of the electronic device 101, the 1-1th antenna portion 12151, the 2-1th antenna portion 12251, and the 3-1th antenna portion 12351 may be aligned in the first direction (e.g., the +Z direction). For example, in the folded state of the electronic device 101, the 1-2th antenna portion 12152, the 2-2th antenna portion 12252, and the 3-2th antenna portion 12352 may be aligned in the first direction (e.g., the +Z direction). For example, in the folded state of the electronic device 101, the 1-3th antenna portion 12153, the 2-3th antenna portion 12253, and the 3-3th antenna portion 12353 may be aligned in the first direction (e.g., the +Z direction). For example, in the folded state of the electronic device 101, the 1-1th segmented portion 12154, the 2-1th segmented portion 12254, and the 3-1th segmented portion 12354 may be aligned in the first direction (e.g., the +Z direction). For example, in the folded state of the electronic device 101, the 1-2th segmented portion 12155, the 2-2th segmented portion 12255, and the 3-2th segmented portion 12355 may be aligned in the first direction (e.g., the +Z direction).

According to an embodiment, when the electronic device 101 is in the folded state (e.g., FIG. 34), at least a portion of the third housing 1230 may be positioned between the first housing 1210 and the second housing 1220. For example, when the state of the electronic device 101 is changed from the unfolded state to the folded state, the direction in which the second housing 1220 rotates with respect to the first housing 1210 may be opposite to the direction in which the third housing 1230 rotates with respect to the first housing 1210. The relative positional relationship between the detecting sensor, the magnetic member, and the magnetically permeable member described with reference to FIGS. 5 to 31 may be designed considering that the direction in which the second housing 1220 rotates with respect to the first housing 1210 is opposite to the direction in which the third housing 1230 rotates with respect to the first housing 1210. For example, the relative positional relationship between the detecting sensor, the magnetic member, and the magnetically permeable member for detecting the folding angle between the first housing 1210 and the second housing 1220 may be the same as and/or similar to or different from the relative positional relationship between the detecting sensor, the magnetic member, and the magnetically permeable member for detecting the folding angle between the first housing 1210 and the third housing 1230. The description of the detecting sensor, the magnetic member, and the magnetically permeable member described with reference to FIGS. 5 to 31 may be applied and/or applied mutatis mutandis to the type of electronic device in which at least a portion of the third housing 1230 is positioned between the first housing 1210 and the second housing 1220 in a state in which the electronic device 101 is folded as illustrated in FIG. 34. Although not illustrated, when the electronic device 101 is in the folded state, at least a portion of the first housing 1210 may be positioned between the second housing 1220 and the third housing 1230. For example, when the state of the electronic device 101 is changed from the unfolded state to the folded state, the second housing 1220 may be rotated to cover the front surface (e.g., the surface facing in the +Z direction of FIG. 34) of the first housing 1210, and the third housing 1230 may be rotated to cover the rear surface (e.g., the surface facing in the -Z direction of FIG. 34) of the first housing 1210. For example, when the state of the electronic device 101 changes from the unfolded state to the folded state, the direction in which the second housing 1220 rotates with respect to the first housing 1210 may be substantially the same as the direction in which the third housing 1230 rotates with respect to the first housing 1210. The relative positional relationship between the detecting sensor, the magnetic member, and the magnetically permeable member described with reference to FIGS. 5 to 31 may be designed considering that the direction in which the second housing 1220 rotates with respect to the first housing 1210 is substantially the same as the direction in which the third housing 1230 rotates with respect to the first housing 1210. For example, the relative positional relationship between the detecting sensor, the magnetic member, and the magnetically permeable member for detecting the folding angle between the first housing 1210 and the second housing 1220 may be the same as and/or similar to or different from the relative positional relationship between the detecting sensor, the magnetic member, and the magnetically permeable member for detecting the folding angle between the first housing 1210 and the third housing 1230. The description of the detecting sensor, the magnetic member, and the magnetically permeable member described with reference to FIGS. 5 to 31 may be applied and/or applied mutatis mutandis to a type of electronic device in which at least a portion of the first housing 1210 is positioned between the second housing 1220 and the third housing 1230 in a state in which the electronic device 101 is folded.

FIG. 36 is a partially exploded view illustrating an electronic device according to an embodiment of the disclosure.

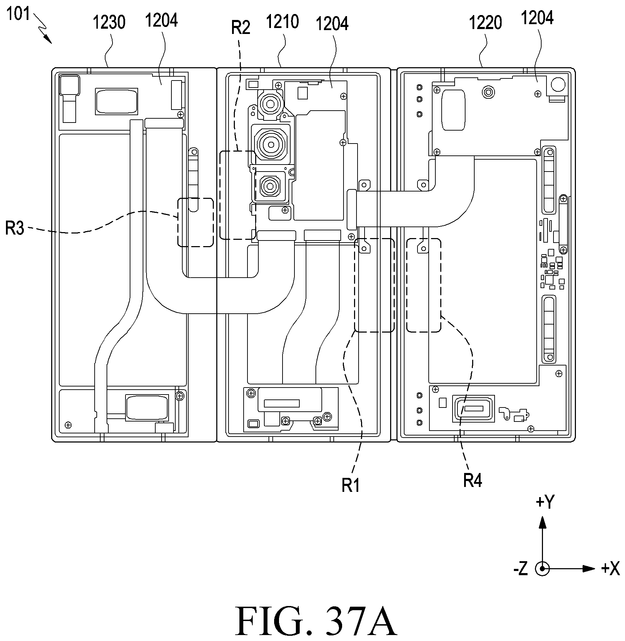

The embodiment of FIG. 36 may be combined with the embodiments of FIGS. 1 to 35 or the embodiments of FIGS. 37A to 45.

According to an embodiment, the first housing 1210 may include a first housing body 1216. The first housing 1210 may include a first cover 1217. The first housing body 1216 and the first cover 1217 may be coupled to each other. At least a portion of the display (e.g., the display 1202 of FIG. 32) may be seated on the first housing body 1216.

According to an embodiment, the second housing 1220 may include a second housing body 1226. The second housing 1220 may include a second cover 1227. The second housing body 1226 and the second cover 1227 may be coupled to each other. At least a portion of the display (e.g., the display 1202 of FIG. 2) may be seated on the second housing body 1226. An antenna (e.g., the antenna 1223 of FIG. 35) may be a portion of the second housing body 1226.

According to an embodiment, the third housing 1230 may include a third housing body 1236. The third housing 1230 may include a third cover 1237. The third housing body 1236 and the third cover 1237 may be coupled to each other. At least a portion of the display (e.g., the display 1202 of FIG. 2) may be seated on the third housing body 1236.

According to an embodiment, the first hinge assembly 1270 may rotatably connect the first housing body 1216 and the second housing body 1226. The second hinge assembly 1280 may rotatably connect the first housing body 1216 and the third housing body 1236.

According to an embodiment, the electronic device 101 may include a battery 1203. The battery 1203 may supply power to electrical components (e.g., the display 1202, the second display 1206, and the circuit board 1204) of the electronic device 101. The battery 1203 may be disposed between the housing bodies 1216, 1226, and 1236 and the covers 1217, 1227, and 1237. The electronic device 101 may include a circuit board 1204. The circuit board 1204 may be electrically connected to electrical components (e.g., the display 1202, the second display 1206, the antenna circuit 1236, and the battery 1203) of the electronic device 101. The circuit board 1204 may be disposed between the housing bodies 1216, 1226, and 1236 and the covers 1217, 1227, and 1237. The electronic device 101 may include a camera assembly 1205. The camera assembly 1205 may be disposed between the housing bodies 1216, 1226, and 1236 and the covers 1217, 1227, and 1237. The electronic device 101 may include a flexible circuit board 1209. The flexible circuit board 1209 may be connected to the circuit board 1204.

According to an embodiment, the electronic device 101 may include a second conductive portion 1233. The second conductive portion 1233 may be a portion of the third housing 1230. The second conductive portion 1233 may be disposed between the first housing 1210 and the second housing 1220 in the folded state of the electronic device 101. The second conductive portion 1233 may face the first hinge assembly 1270 in the folded state of the electronic device 101.

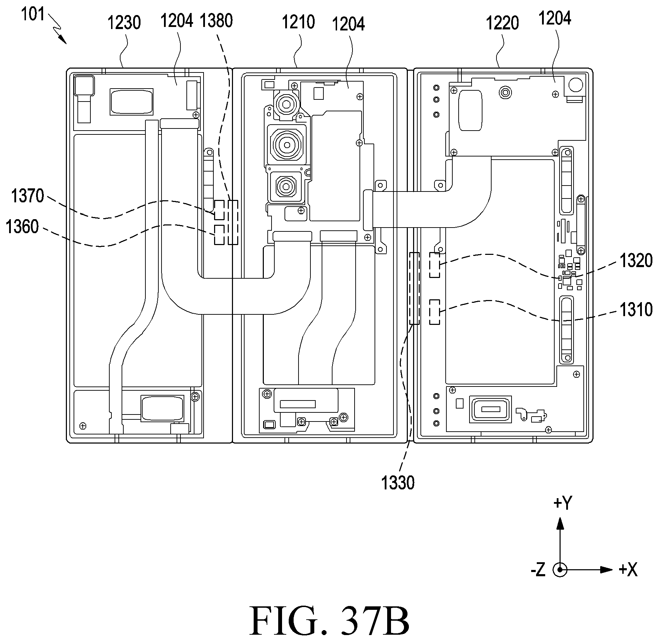

FIGS. 37A and 37B are plan views illustrating an electronic device according to an embodiment of the disclosure.

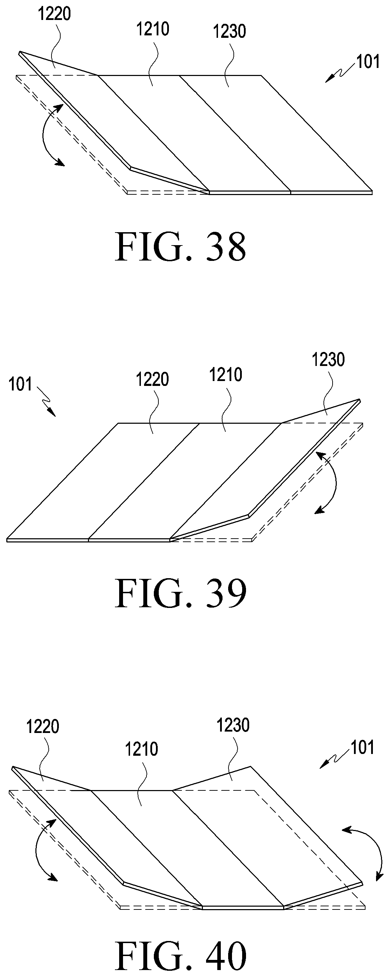

The embodiments of FIGS. 37A and 37B may be combined with the embodiments of FIGS. 1 to 36 or the embodiments of FIGS. 38 to 45.

Referring to FIGS. 37A and 37B, the electronic device 101 may include a first housing 1210, a second housing 1220, a third housing 1230, or a circuit board 1204.

According to an embodiment, the first housing 1210 may be rotatably connected to the second housing 1220. The first housing 1210 may be rotatably connected to the third housing 1230.

According to an embodiment, the circuit board 1204 may be disposed inside the electronic device 101.

According to an embodiment, the electronic device 101 may include a first detecting sensor 1310 (e.g., the detecting sensor 310 of FIGS. 5 to 31) for detecting a folding angle, a folding degree, or a folding state between the first housing 1210 and the second housing 1220, a first magnetic member 1320 (e.g., the magnetic member 320 of FIGS. 5 to 31), or a first magnetically permeable member 1330 (e.g., the magnetically permeable member 330 of FIGS. 5 to 31).

According to an embodiment, the first magnetically permeable member 1330 may be disposed on a hinge cover of a first hinge assembly (e.g., the first hinge assembly 1270 of FIG. 34). The first detecting sensor 1310 and/or the first magnetic member 1320 may be positioned on a fourth area (e.g., the fourth area R4 of FIG. 37A) of the second housing 1220 adjacent to the first hinge assembly 1270. Although not illustrated, the first detecting sensor 1310 and/or the first magnetic member 1320 may be positioned on a first area (e.g., the first area R1 of FIG. 37A) of the first housing 1210 adjacent to the first hinge assembly 1270.

According to an embodiment, the electronic device 101 may include a second detecting sensor 1360 (e.g., the detecting sensor 310 of FIGS. 5 to 31) for detecting a folding angle, a folding degree, or a folding state between the first housing 1210 and the third housing 1230, a second magnetic member 1370 (e.g., the magnetic member 320 of FIGS. 5 to 31), or a second magnetically permeable member 1380 (e.g., the magnetically permeable member 330 of FIGS. 5 to 31).

According to an embodiment, the second magnetically permeable member 1380 may be disposed on the hinge cover of the second hinge assembly (e.g., the second hinge assembly 1280 of FIG. 34). The second detecting sensor 1360 and/or the second magnetic member 1370 may be positioned on a third area (e.g., the third area R3 of FIG. 37A) of the third housing 1230 adjacent to the second hinge assembly 1280. Although not illustrated, the second sensor 1360 and/or the second magnetic member 1370 may be positioned on a second area (e.g., the second area R4 of FIG. 37A) of the first housing 1210 adjacent to the second hinge assembly 1280.

According to an embodiment, the magnetic strength of the first magnetic member 1320 positioned on the first area R1 and/or the fourth area R4 adjacent to the first hinge assembly 1270 may be different from the magnetic strength of the second magnetic member 1370 positioned on the second area R2 and/or the third area R3 adjacent to the second hinge assembly 1280. For example, the magnetic strength of the first magnetic member 1320 positioned on the first area R1 and/or the fourth area R4 may be larger than the magnetic strength of the second magnetic member 1370 positioned on the second area R2 and/or the third area R3.

According to an embodiment, the set threshold of the first detecting sensor 1310 positioned on the first area R1 and/or the fourth area R4 adjacent to the first hinge assembly 1270 may be different from the set threshold of the second detecting sensor 1360 positioned on the second area R2 and/or the third area R3 adjacent to the second hinge assembly 1280. For example, the set threshold of the first detecting sensor 1310 positioned on the first area R1 and/or the fourth area R4 may be larger than the set threshold of the second detecting sensor 1360 positioned on the second area R2 and/or the third area R3.

According to an embodiment, the relative magnetic permeability of the first magnetically permeable member 1330 disposed on the hinge cover of the first hinge assembly 1270 may be different from the relative magnetic permeability of the second magnetically permeable member 1380 disposed on the hinge cover of the second hinge assembly 1280. For example, the relative magnetic permeability of the first magnetically permeable member 1330 disposed on the hinge cover of the first hinge assembly 1270 may be larger than the relative magnetic permeability of the second magnetically permeable member 1380 disposed on the hinge cover of the second hinge assembly 1280. For example, the first magnetically permeable member 1330 disposed on the hinge cover of the first hinge assembly 1270 may have a material having a relative magnetic permeability larger than that of the second magnetically permeable member 1380 disposed on the hinge cover of the second hinge assembly 1280, may have a larger thickness, or may have a larger size.

FIGS. 38, 39, and 40 are views schematically illustrating a user input is input as a housing of an electronic device is folded according to an embodiment of the disclosure.

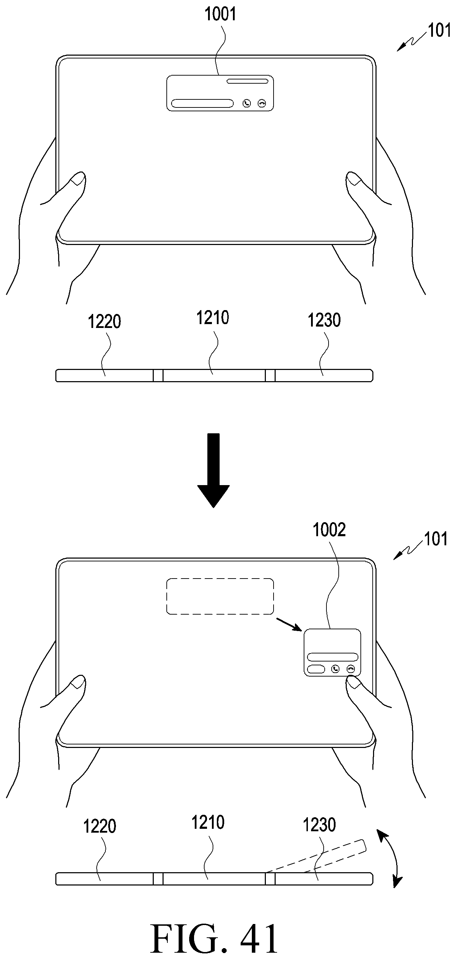

The embodiments of FIGS. 38 to 40 may be combined with the embodiments of FIGS. 1 to 37B or the embodiments of FIGS. 41 to 45.

Referring to FIGS. 38 to 40, the electronic device 101 may include a first housing 1210, a second housing 1220, or a third housing 1230.

According to an embodiment, the first housing 1210 may be rotatably connected to the second housing 1220. The first housing 1210 may be rotatably connected to the third housing 1230.

Referring to FIG. 38, an operation in which the second housing 1220 is folded or unfolded relative to the first housing 1210 is illustrated. For example, in the unfolded state (e.g., FIG. 32) of the electronic device 101, the second housing 1220 may be positioned to be folded about the first housing 1210 within a predetermined range and then unfolded again by the user. In this case, the intensity of the magnetic flux detected by the detecting sensor corresponding to the first hinge assembly (e.g., the first hinge assembly 1270 of FIG. 32) may vary depending on a relative position change between the magnetic member and the magnetically permeable member. The electronic device 101 (or the processor 120 of FIG. 1) may identify that the second housing 1220 is folded and then unfolded with respect to the first housing 1210 within a predetermined range, based on the intensity of the magnetic force detected by the detecting sensor. The electronic device 101 (or the processor 120 of FIG. 1) may be configured to determine that folding and then unfolding of the second housing 1220 with respect to the first housing 1210 within a predetermined range is a user input (e.g., a first user input). According to an embodiment, the electronic device 101 (or the processor 120 of FIG. 1) may be configured to determine repeated folding and then unfolding of the second housing 1220 with respect to the first housing 1210 a designated number of times or more within a designated time, as the user input (e.g., the first user input). When it is determined that the user input is input, the electronic device 101 (or the processor 120 of FIG. 1) may perform an operation of providing a designated function. For example, the designated function may be a function of changing a visual object of a visual image provided through a display (e.g., the display 1202 of FIG. 32), but is not limited thereto.

Referring to FIG. 39, an operation in which the third housing 1230 is folded or unfolded relative to the first housing 1210 is illustrated. For example, in the unfolded state (e.g., FIG. 32) of the electronic device 101, the third housing 1230 may be positioned to be folded about the first housing 1210 within a predetermined range and then unfolded again by the user. In this case, the intensity of the magnetic flux detected by the detecting sensor corresponding to the second hinge assembly (e.g., the second hinge assembly 1280 of FIG. 32) may vary depending on a relative position change between the magnetic member and the magnetically permeable member. The electronic device 101 (or the processor 120 of FIG. 1) may identify that the third housing 1230 is folded and then unfolded with respect to the first housing 1210 within a predetermined range, based on the intensity of the magnetic force detected by the detecting sensor. The electronic device 101 (or the processor 120 of FIG. 1) may be configured to determine that folding and then unfolding of the third housing 1230 with respect to the first housing 1210 within a predetermined range is a user input (e.g., a second user input). According to an embodiment, the electronic device 101 (or the processor 120 of FIG. 1) may be configured to determine repeated folding and then unfolding of the third housing 1230 with respect to the first housing 1210 a designated number of times or more within a designated time as the user input (e.g., second user input). When it is determined that the user input is input, the electronic device 101 (or the processor 120 of FIG. 1) may perform an operation of providing a designated function. For example, the designated function may be a function of changing a visual object of a visual image provided through a display (e.g., the display 1202 of FIG. 32), but is not limited thereto.

Referring to FIG. 40, an operation in which the second housing 1220 and the third housing 1230 are folded or unfolded relative to the first housing 1210 is illustrated. For example, in the unfolded state (e.g., FIG. 32) of the electronic device 101, the second housing 1220 and the third housing 1230 may be positioned to be folded with respect to the first housing 1210 within a predetermined range and then unfolded again by the user. In this case, the intensity of the magnetic flux detected by the respective detecting sensors corresponding to the first hinge assembly (e.g., the first hinge assembly 1270 of FIG. 32) and the second hinge assembly (e.g., the second hinge assembly 1280 of FIG. 32) may vary depending on a relative position change between the magnetic member and the magnetically permeable member. The electronic device 101 (or the processor 120 of FIG. 1) may identify that the second housing 1220 and the third housing 1230 are folded and then unfolded with respect to the first housing 1210 within a predetermined range, based on the intensity of the magnetic force detected by the detecting sensor. The electronic device 101 (or the processor 120 of FIG. 1) may be configured to determine folding and then unfolding of the second housing 1220 and the third housing 1230 with respect to the first housing 1210 within a predetermined range as a user input (e.g., a third user input). According to an embodiment, the electronic device 101 (or the processor 120 of FIG. 1) may be configured to determine repeated folding and then unfolding of the second housing 1220 and the third housing 1230 with respect to the first housing 1210 a designated number of times or more within a designated time, as the user input (e.g., the third user input). When it is determined that the user input is input, the electronic device 101 (or the processor 120 of FIG. 1) may perform an operation of providing a designated function. For example, the designated function may be a function of changing a visual object of a visual image provided through a display (e.g., the display 1202 of FIG. 32), but is not limited thereto.

FIG. 41 is a view schematically illustrating a change in user interface according to a user input according to an embodiment of the disclosure.

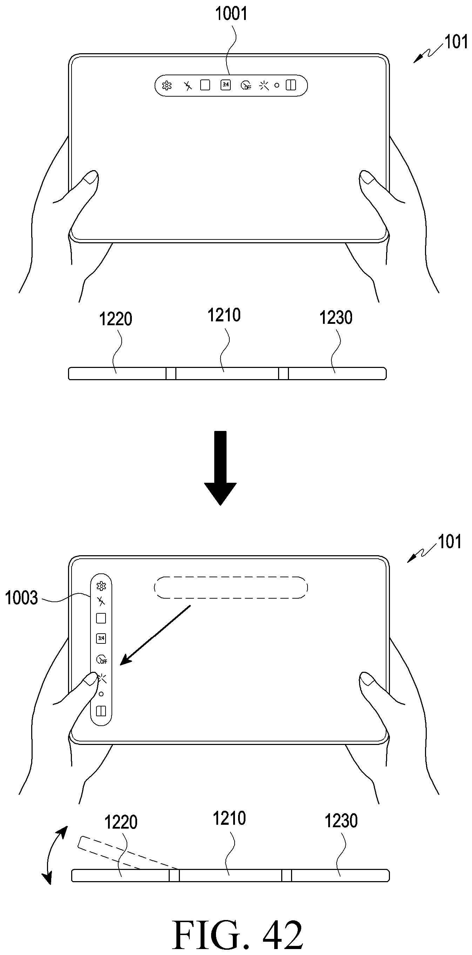

FIG. 42 is a view schematically illustrating a change in user interface according to a user input according to an embodiment of the disclosure.

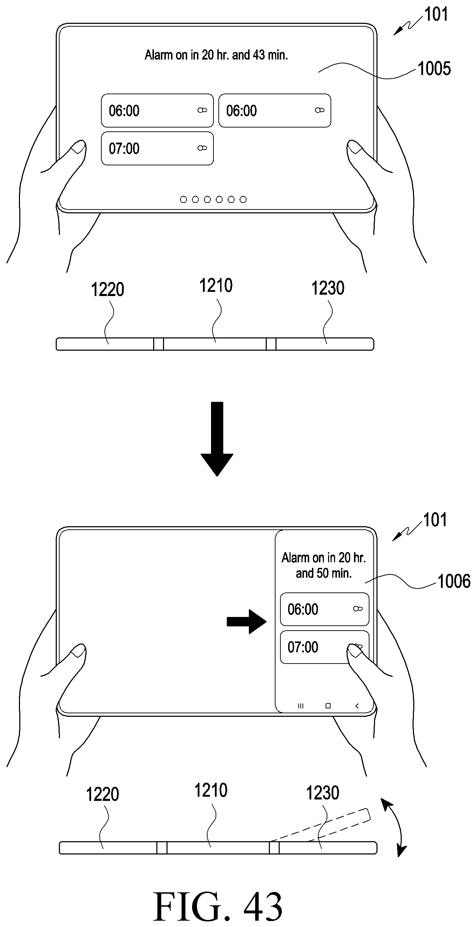

FIG. 43 is a view schematically illustrating a change in user interface according to a user input according to an embodiment of the disclosure.

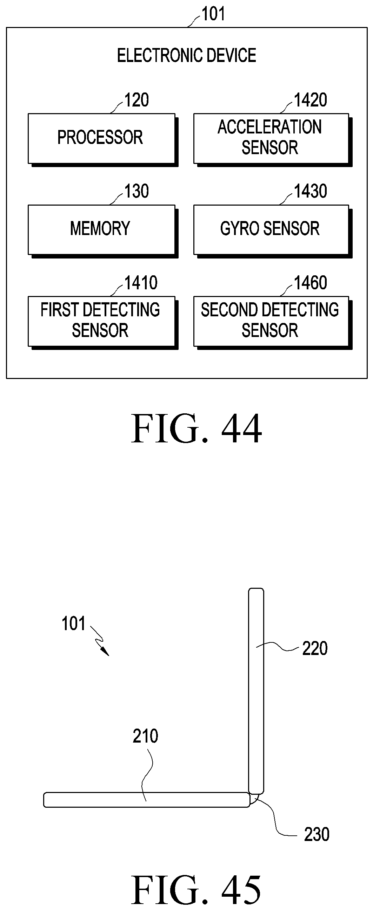

The embodiments of FIGS. 41 to 43 may be combined with the embodiments of FIGS. 1 to 40, or the embodiments of FIGS. 44 to 45.

Referring to FIGS. 41 to 43, the electronic device 101 may include a first housing 1210, a second housing 1220, or a third housing 1230. The second housing 1220 may be rotatably connected to the first housing 1210. The third housing 1230 may be rotatably connected to the first housing 1210.

Referring to FIG. 41, an operation in which the third housing 1230 is folded or unfolded relative to the first housing 1210 is illustrated. For example, in the unfolded state (e.g., FIG. 32) of the electronic device 101, the first user interface 1001 may be output in a first display area (e.g., the first display area 1202a of FIG. 32) of the display (e.g., the display 1202 of FIG. 32). When a user input (e.g., a second user input) in which the third housing 1230 is folded and then unfolded with respect to the first housing 1210 is input, the electronic device 101 (or the processor 120 of FIG. 1) may output the second user interface 1002 in a third display area (e.g., the third display area 1202c of FIG. 32) of the display. For example, when a user input is input, the position at which the user interface is output from the display may be changed. The user interfaces 1001 and 1002 illustrated in FIG. 41 may be button user interfaces such as a soft key capable of controlling the operation of the electronic device 101 or an application when touched by the user, but the user interfaces of the disclosure are not limited thereto.

Referring to FIG. 42, an operation in which the second housing 1220 is folded or unfolded relative to the first housing 1210 is illustrated. For example, in the unfolded state (e.g., FIG. 32) of the electronic device 101, the first user interface 1001 may be output in a first display area (e.g., the first display area 1202a of FIG. 32) of the display (e.g., the display 1202 of FIG. 32). When a user input (e.g., a first user input) in which the second housing 1220 is folded and then unfolded with respect to the first housing 1210 is input, the electronic device 101 (or the processor 120 of FIG. 1) may output the second user interface 1003 in a second display area (e.g., the second display area 1202b of FIG. 32) of the display. For example, when a user input is input, the position at which the user interface is output from the display may be changed. The user interfaces 1001 and 1003 illustrated in FIG. 42 may be button user interfaces such as a soft key capable of controlling the operation of the electronic device 101 or an application when touched by the user, but the user interfaces of the disclosure are not limited thereto.

Referring to FIG. 43, an operation in which the third housing 1230 is folded or unfolded relative to the first housing 1210 is illustrated. For example, in the unfolded state (e.g., FIG. 32) of the electronic device 101, the first user interface 1005 may be output in display areas (e.g., the display areas 1202a, 1202b, and 1202c of FIG. 32) of the display (e.g., the display 1202 of FIG. 32). The electronic device 101 (or the processor 120 of FIG. 1) may output the second user interface 1006 to the second display area (e.g., the second display area 1202b of FIG. 32) of the display when a user input (e.g., the second user input) to fold and then unfold the third housing 1230 with respect to the first housing 1210 is input. For example, when a user input is input, the user interface output in the entire area of the display may be changed to be output in a partial area of the display. The user interfaces 1005 and 1006 illustrated in FIG. 43 may be user interfaces that provide information (e.g., alarm information, but is not limited thereto) to the user, or user interfaces that provide a screen for the user to change settings of the electronic device 101 or the application, but are not limited thereto.

FIG. 44 is a block diagram illustrating an electronic device according to an embodiment of the disclosure.

FIG. 45 is a cross-sectional view illustrating an electronic device according to an embodiment of the disclosure.

The embodiments of FIGS. 44 to 45 may be combined with the embodiments of FIGS. 1 to 43.

Referring to FIG. 44, the electronic device 101 may include a processor 120 (e.g., the processor 120 of FIG. 1), memory (e.g., the memory 130 of FIG. 1), a first detecting sensor 1410, an acceleration sensor 1420, a gyro sensor 1430, or a second detecting sensor 1460. According to an embodiment, the electronic device 101 may include one or more processors 120. For example, the processor 120 may correspond to a plurality of processors that divide a plurality of operations between processors and collectively perform the operations. According to an embodiment, the memory 130 may store instructions related to the operation of the electronic device 101.

Referring to FIGS. 44 and 45, the first detecting sensor 1410 (e.g., the detecting sensor 310 of FIG. 6) may be configured to detect the folding angle, the folding degree, or the folding state of the first housing 210 and the second housing 220. For example, the first detecting sensor 1410 (e.g., the detecting sensor 310 of FIG. 6) may be configured to detect the folding angle, the folding degree, or the folding state of the first housing 210 and the second housing 220 through the magnetic member (e.g., the magnetic member 320 of FIG. 6) and the magnetically permeable member (e.g., the magnetically permeable member 330 of FIG. 6).

According to an embodiment, the acceleration sensor 1420 and/or the gyro sensor 1430 may be configured to detect the current position of the second housing 220 with respect to the first housing 210. For example, the acceleration sensor 1420 and/or the gyro sensor 1430 may be configured to detect whether an angle formed by the second housing 220 with respect to the first housing 210 is smaller than or equal to a specific angle. For example, when the angle formed by the first housing 210 and the second housing 220 is smaller than or equal to a specific angle (e.g., FIG. 45), the electronic device 101 (e.g., the processor 120) may output a visual screen only in the second display area (e.g., the second display area 252 of FIG. 2) disposed on the second housing 220.

According to an embodiment, the second detecting sensor 1460 may include a hall sensor. The second detecting sensor 1460 may be a hall sensor different from the first detecting sensor 1410. The second detecting sensor 1460 may be provided in any one of the first housing 210 or the second housing 220. A magnet corresponding to the second detecting sensor 1460 may be provided in the other one of the first housing 210 or the second housing 220. The magnet may be a member different from a magnetic member corresponding to the first detecting sensor 1410. The second detecting sensor 1460 may detect a magnetic flux generated by the magnet when the first housing 210 and the second housing 220 are in the folded state. When the first housing 210 and the second housing 220 are in the unfolded state, the second detecting sensor 1460 may be positioned relatively far from the magnet, and thus may not detect the magnetic flux generated by the magnet. The electronic device 101 (e.g., the processor 120) may determine the states (e.g., the folded state or the unfolded state) of the first housing 210 and the second housing 220, based on the intensity of the magnetic force detected by the second detecting sensor 1460.

In order to provide a large-area display screen, an electronic device including a flexible display configured to be at least partially folded or unfolded has been proposed. Further, the electronic device including the flexible display may include a plurality of housings connected to be foldable with respect to each other.

The electronic device may include a plurality of sensors for detecting a state in which the housings are folded or unfolded. However, the multiple sensors may detect only that the housings of the electronic device are folded or unfolded at a specific angle or more, and may not detect that the housings of the electronic device are folded or unfolded at a low angle.

According to an embodiment of the disclosure, there may be provided a detecting sensor for detecting that housings rotate relative to each other within a range of a designated angle or less, and an electronic device including the sensor.

The disclosure is not limited to the foregoing embodiments but various modifications or changes may rather be made thereto without departing from the scope of the disclosure.

According to an embodiment of the disclosure, there may be provided a detecting sensor with enhanced accuracy of detecting the folding angle of the housing and an electronic device including the same.

Effects obtainable from the disclosure are not limited to the above-mentioned effects, and other effects not mentioned may be clearly understood by those skilled in the art from the following description.

According to an embodiment of the disclosure, an electronic device 101 comprises a first housing 210, a second housing 220, a hinge structure 231, a hinge cover 232, a magnetically permeable member 330, a detecting sensor 310, or a magnetic member 320. The hinge structure 231 may be connected to the first housing 210 and the second housing 220. The hinge cover 232 may cover the hinge structure 231. The magnetically permeable member 330 may be disposed on the hinge cover 232. The magnetically permeable member 330 may include a magnetically permeable material. The magnetic member 320 may be disposed on the second housing 220. The magnetic member 320 may be spaced apart from the detecting sensor 310. When the first housing 210 is positioned at a first position with respect to the second housing 220, the magnetically permeable member 330 is located to be aligned with the detecting sensor 310 and the magnetic member 320. When the first housing 210 is positioned at a second position different from the first position with respect to the second housing 220, the magnetically permeable member 330 is located to be not aligned with the detecting sensor 310 and the magnetic member 320. According to the present invention, the relative position between housings of the electronic device, e.g., the folding angle, can be accurately detected using the detecting sensor. Further, the detectable range of the folding angle may be advantageously expanded.

According to an embodiment, the electronic device 101 may further comprise at least one processor 120 or memory 130. The at least one processor 120 may include a processing circuitry. The memory 130 may store instructions. The instructions, when executed by the at least one processor 120 individually or collectively, may cause the electronic device 101 to obtain an angle between the first housing 210 and the second housing 220 based on an intensity of magnet flux detected by the detecting sensor 310.

According to an embodiment, a computer-readable non-transitory recording medium (e.g., the memory 130 of FIG. 1) may comprise instructions that may perform an operation of obtaining an angle between the first housing 210 and the second housing 220 based on an intensity of magnetic flux sensed or detected by the detecting sensor 310.

According to an embodiment, a relative magnetic permeability of the magnetically permeable member 330 may be larger than a relative magnetic permeability of each of the first housing 210, the second housing 220 the hinge cover 232.

According to an embodiment, the magnetically permeable member 330 may include a metallic material having a relative magnetic permeability of 1000 or more.

According to an embodiment, when the magnetically permeable member 330 is located to be aligned with the detecting sensor 310 and the magnetic member 320, an intensity of magnet flux detected by the detecting sensor 310 may be a designated threshold or more. A distance between the detecting sensor 310 and the magnetic member 320 may be a distance at which the intensity of magnetic flux detected by the detecting sensor 310 is the designated threshold or more when the magnetically permeable member 330 may be located to be aligned with the detecting sensor 310 and the magnetic member 320.

According to an embodiment, the magnetically permeable member 330 may extend in a first direction substantially parallel to an axis of the hinge structure 231. At least part of the magnetically permeable member 330 may overlap at least part of the detecting sensor 310 and at least part of the magnetic member 320 in a second direction different from the first direction.

According to an embodiment, the magnetically permeable member 330 may extend in a first direction substantially parallel to an axis of the hinge structure 231. At least part of the magnetically permeable member 330 may not overlap at least part of the detecting sensor and at least part of the magnetic member in a second direction different from the first direction.

According to an embodiment, the electronic device 101 may further comprise a flexible display 250. The flexible display 250 may include a first display area 251, a second display area 252, or a folding area 253. The first display area 251 may be disposed on the first housing 210. The second display area 252 may be disposed on the second housing 220. The folding area 253 may be connected to the first display area 251 and the second display area 252. The detecting sensor 310 and the magnetic member 320 may be disposed below the folding area 253 when a state of the first housing 210 and the second housing 220 is an unfolded state.

According to an embodiment, a direction in which the detecting sensor 310 and the magnetic member (320) face may be inclined with respect to a second display area.

According to an embodiment, when the magnetically permeable member 330 may be located to be aligned with the detecting sensor 310 and the magnetic member 320, one surface of the detecting sensor 310 and one surface of the magnetic member 320 may face at least part of the magnetically permeable member 330. When the magnetically permeable member 330 may be located to be not aligned with the detecting sensor 310 and the magnetic member 320, the one surface of the detecting sensor 310 and the one surface of the magnetic member 320 may not face the at least part of the magnetically permeable member 330.

According to an embodiment, the magnetically permeable member 330 may include a first magnetically permeable member 331 or a second magnetically permeable member 332. The second magnetically permeable member 332 may have a relative magnetic permeability smaller than a relative permeability of the first magnetically permeable member 331. The magnetically permeable member 330 may further include a third magnetically permeable member 333. The third magnetically permeable member 333 may have a relative magnetic permeability smaller than the relative magnetic permeability of the second magnetically permeable member 332.

According to an embodiment, the magnetically permeable member 330 may include a first magnetically permeable 431 or 531 or a second magnetically permeable member 432 or 532. When the first magnetically permeable member 431 or 531 is located to be aligned with the detecting sensor 310 and the magnetic member 320, the first magnetically permeable member 431 or 531 may be spaced apart from the detecting sensor 310 by a first distance. When the second magnetically permeable member 432 or 532 is located to be aligned with the detecting sensor 310 and the magnetic member 320, the second magnetically permeable member 432 or 532 may be spaced apart from the detecting sensor 310 by a second distance smaller than the first distance. The magnetically permeable member 330 may further include a third magnetically permeable member 433 or 533. When the third magnetically permeable member 433 or 533 is located to be aligned with the detecting sensor 310 and the magnetic member 320, the third magnetically permeable member 433 or 533 may be spaced apart from the detecting sensor 310 by a third distance smaller than the second distance.

According to an embodiment, the first magnetically permeable member 531 may have a first thickness. The second magnetically permeable member 532 may have a second thickness smaller than the first thickness. The third magnetically permeable member 533 may have a third thickness larger than the second thickness.

According to an embodiment, the magnetically permeable member 330 may include a first magnetically permeable member 631 or a second magnetically permeable member 632. The second magnetically permeable member 632 may be stacked on one surface of the first magnetically permeable member 631. The magnetically permeable member 330 may further include a third magnetically permeable member 633. The third magnetically permeable member 633 may be stacked on one surface of the second magnetically permeable member 632.

According to an embodiment of the disclosure, an electronic device 101 comprises a foldable housing 201, a hinge structure 231, a flexible display 250, a hinge cover 232, a magnetic permeable member 330, a detecting sensor 310, or a magnetic member 320. The foldable housing 201 may include a first housing 210 or a second housing 220. The hinge structure 231 may be connected to the first housing 210 and the second housing 220. The hinge structure 231 may be at least partially positioned between the first housing 210 and the second housing 220. The flexible display 250 may be disposed on the foldable housing 201. The flexible display 250 may include a first display area 251, a second display area 252, or a folding area 253. The first display area 251 may be disposed on the first housing 210. The second display area 252 may be disposed on the second housing 220. The folding area 253 may be connected to the first display area 251 and the second display area 252. The hinge cover 232 may cover at least a portion of the hinge structure 231. The magnetically permeable member 330 may be disposed on the hinge cover 232. The magnetically permeable member 330 may include a magnetically permeable material. The detecting sensor 310 may be disposed on the second housing 220. The magnetic member 320 may be disposed on the second housing 220. The magnetic member 320 may be spaced apart from the detecting sensor 310. When the first housing 210 is positioned at a first position with respect to the second housing 220, an intensity of magnetic flux detected by the detecting sensor 310 is a designated threshold or more. When the first housing 210 is positioned at a second position different from the first position with respect to the second housing 220, the intensity of the magnetic flux detected by the detecting sensor 310 is less than the designated threshold. According to the present invention, the relative position between housings of the electronic device, e.g., the folding angle, can be accurately detected using the detecting sensor. Further, the detectable range of the folding angle may be advantageously expanded.

According to an embodiment, the electronic device 101 may further comprise at least one processor 120 or memory 130. The at least one processor 120 may include a processing circuitry. The memory 130 may include instructions. The instructions, when executed by the at least one processor 120 individually or collectively, may cause the electronic device 101 to provide a first user interface and switch the first user interface to a second user interface based on the first housing 210 moving from the first position to the second position.

According to an embodiment, a computer-readable non-transitory recording medium (e.g., the memory 130 of FIG. 1) may comprise instructions that may perform an operation of providing a first user interface and an operation of switching the first user interface to a second user interface based on the first housing 210 moving from a first position to a second position.

According to an embodiment, the first user interface may be configured to display a visual object through the first display area, the second display area, and the folding area, and the second user interface may be configured to display the visual object through the first display area.

According to an embodiment, the instructions, when executed by the at least one processor 120 individually or collectively, may switch the first user interface to the second user interface based on a time during which the first housing 210 moves from the first position to the second position and then returns to the first position.

According to an embodiment, a computer-readable non-transitory recording medium (e.g., the memory 130 of FIG. 1) may comprise instructions that may perform an operation of switching the first user interface to the second user interface based on a time during which the first housing 210 moves from the first position to the second position and then returns to the first position.

According to an embodiment, the electronic device 101 may further comprise an additional magnetically permeable member 380, an additional detecting sensor 360, or an additional magnetic member. The additional magnetically permeable member 380 may be disposed on the hinge cover 232. The additional magnetically permeable member 380 may include a magnetically permeable material. The additional detecting sensor 360 may be disposed on the first housing 210. The additional magnetic member may be disposed on the first housing 210. The additional magnetic member may be spaced apart from the additional detecting sensor 360.

According to an embodiment of the disclosure, an electronic device 101 comprises a multi-foldable housing 1201, a first hinge assembly 1270, a second hinge assembly 1280, a flexible display 1202, a first detecting sensor 1310, a first magnetic member 1320, or a first magnetically permeable member 1330. The multi-foldable housing 1201 may include a first housing 1210, a second housing 1220, or a third housing 1230. The second housing 1220 may be connected to be rotatable with respect to the first housing 1210. The third housing 1230 may be connected to be rotatable with respect the first housing 1210. The first hinge assembly 1270 may be connected to the first housing 1210 and the second housing 1220. The first hinge assembly 1270 may be at least partially positioned on the first housing 1210 and the second housing 1220. The second hinge assembly 1280 may be connected to the first housing 1210 and the third housing 1230. The second hinge assembly 1280 may be at least partially positioned on the second housing 1220 and the third housing 1230. The flexible display 1202 may be disposed on the multi-foldable housing 1201. The first detecting sensor 1310 may be disposed in an area adjacent to the first hinge assembly 1270. The first magnetic member 1320 may be disposed in an area adjacent to the first hinge assembly 1270. The first magnetically permeable member 1330 may be disposed on the first hinge assembly 1270. When the second housing 1220 is positioned at a first position with respect to the first housing 1210, an intensity of magnetic flux detected by the first detecting sensor 1310 is a designated threshold or more. When the second housing 1220 is positioned at a second position different from the first position with respect to the first housing 1210, the intensity of the magnetic flux detected by the first detecting sensor 1310 is less than the designated threshold. According to the present invention, the relative position between housings of the electronic device, e.g., the associated folding angle, can be accurately detected using the detecting sensor(s). Further, the detectable range of the folding angle may be advantageously expanded.

According to an embodiment, the electronic device 101 may further comprise a second detecting sensor 1360, a second magnetic member 1370, or a second magnetically permeable member 1380. The second detecting sensor 1360 may be disposed in an area adjacent to the second hinge assembly 1280. The second magnetic member 1370 may be disposed in an area adjacent to the second hinge assembly 1280. The second magnetically permeable member 1380 may be disposed on the second hinge assembly 1280.

While the disclosure has been shown and described with reference to exemplary embodiments thereof, it will be apparent to those of ordinary skill in the art that various changes in form and detail may be made thereto without departing from the scope of the disclosure as defined by the following claims.

## Claims

1. An electronic device (101), comprising:
a first housing (210);
a second housing (220);
a hinge structure (231) connected to the first housing (210) and the second housing (220);
a hinge cover (232) covering the hinge structure (231);
a magnetically permeable member (330) disposed on the hinge cover (232) and including a magnetically permeable material;
a detecting sensor (310) disposed on the second housing (310); and
a magnetic member (320) disposed on the second housing (220) and spaced apart from the detecting sensor (310),
wherein when the first housing (210) is positioned at a first position with respect to the second housing (220), the magnetically permeable member (330) is located to be aligned with the detecting sensor (310) and the magnetic member (320), and
wherein when the first housing (210) is positioned at a second position different from the first position with respect to the second housing (220), the magnetically permeable member (330) is located to be not aligned with the detecting sensor (310) and the magnetic member (320).

2. The electronic device (101) of claim 1, further comprising:
at least one processor (120) including a processing circuitry; and
memory (130) storing instructions,
wherein the instructions, when executed by the at least one processor (120) individually or collectively, cause the electronic device (101) to:
obtain an angle between the first housing (210) and the second housing (220) based on an intensity of magnet flux detected by the detecting sensor (310).

3. The electronic device (101) of claim 1 or 2,
wherein a relative magnetic permeability of the magnetically permeable member (330) is larger than a relative magnetic permeability of each of the first housing (210), the second housing (220), and the hinge cover (232).

4. The electronic device (101) of claim 1 or 2,
wherein the magnetically permeable member (330) includes a metallic material having a relative magnetic permeability of 1000 or more.

5. The electronic device (101) of any one of claims 1 to 4,
wherein when the magnetically permeable member (330) is located to be aligned with the detecting sensor (310) and the magnetic member (320), an intensity of magnet flux detected by the detecting sensor (310) is a designated threshold or more, and
wherein a distance between the detecting sensor (310) and the magnetic member (320) is a distance at which the intensity of magnetic flux detected by the detecting sensor (310) is the designated threshold or more when the magnetically permeable member (330) is located to be aligned with the detecting sensor (310) and the magnetic member (320).

6. The electronic device (101) of any one of claims 1 to 5,
wherein the magnetically permeable member (330) extends in a first direction substantially parallel to an axis of the hinge structure (231), and
wherein at least part of the magnetically permeable member (330) overlaps at least part of the detecting sensor (310) and at least part of the magnetic member (320) in a second direction different from the first direction.

7. The electronic device (101) of any one of claims 1 to 5,
wherein the magnetically permeable member (330) extends in a first direction substantially parallel to an axis of the hinge structure (231), and
wherein at least part of the magnetically permeable member (330) does not overlap at least part of the detecting sensor (310) and at least part of the magnetic member (320) in a second direction different from the first direction.

8. The electronic device (101) of any one of claims 1 to 7, further comprising a flexible display (250) including a first display area (251) disposed on the first housing (210), a second display area (252) disposed on the second housing (220) and a folding area (253) connected to the first display area (251) and the second display area (252),
wherein the detecting sensor (310) and the magnetic member (320) are disposed below the folding area (253) when a state of the first housing (210) and the second housing (220) is an unfolded state, and/or
wherein a direction in which the detecting sensor (310) and the magnetic member (320) face is inclined with respect to the second display area (252).

9. The electronic device (101) of any one of claims 1 to 8,
wherein when the magnetically permeable member (330) is located to be aligned with the detecting sensor (310) and the magnetic member (320), one surface of the detecting sensor (310) and one surface of the magnetic member (320) face at least part of the magnetically permeable member (330), and
wherein when the magnetically permeable member (330) is located to be not aligned with the detecting sensor (310) and the magnetic member (320), the one surface of the detecting sensor (310) and the one surface of the magnetic member (320) do not face the at least part of the magnetically permeable member (330).

10. The electronic device (101) of any one of claims 1 to 9,
wherein the magnetically permeable member (330) includes:
a first magnetically permeable member (331); and
a second magnetically permeable member (332) having a relative magnetic permeability smaller than a relative magnetic permeability of the first magnetically permeable member (331).

11. The electronic device (101) of any one of claims 1 to 10,
wherein the magnetically permeable member (330) includes a first magnetically permeable (431, 531), and a second magnetically permeable member (432, 532),
wherein when the first magnetically permeable member (431, 531) is located to be aligned with the detecting sensor (310) and the magnetic member (320), the first magnetically permeable member (431, 531) is spaced apart from the detecting sensor (310) by a first distance, and
wherein when the second magnetically permeable member (432, 532) is located to be aligned with the detecting sensor (310) and the magnetic member (320), the second magnetically permeable member (432, 532) is spaced apart from the detecting sensor (310) by a second distance smaller than the first distance.

12. The electronic device (101) of any one of claims 1 to 11,
wherein the first magnetically permeable member (531) has a first thickness, and
wherein the second magnetically permeable member (532) has a second thickness smaller than the first thickness, and/or
wherein the second magnetically permeable member (632) is stacked on one surface of the first magnetically permeable member (631).

13. The electronic device (101) of claim 8, further comprising:
at least one processor (120) including a processing circuitry; and
memory (130) storing instructions,
wherein the instructions, when executed by the at least one processor (120) individually or collectively, cause the electronic device (101) to:
provide a first user interface and switch the first user interface to a second user interface based on the first housing (210) moving from the first position to the second position, and/or
wherein the first user interface is configured to display a visual object through the first display area, the second display area, and the folding area, and/or
wherein the second user interface is configured to display the visual object through the first display area, and/or
wherein the instructions, when executed by the at least one processor (120) individually or collectively, cause the electronic device (101) to:
switch the first user interface to the second user interface based on a time during which the first housing (210) moves from the first position to the second position and then returns to the first position.

14. An electronic device (101), comprising:
a multi-foldable housing (1201) including a first housing (1210), a second housing (1220) connected to be rotatable with respect to the first housing (1210), and a third housing (1230) connected to be rotatable with respect to the first housing (1210);
a first hinge assembly (1270) connected to the first housing (1210) and the second housing (1220) and at least partially positioned between the first housing (1210) and the second housing (1220);
a second hinge structure (1280) connected to the first housing (1210) and the third housing (1230) and at least partially positioned between the first housing (1210) and the third housing (1230);
a flexible display (1202) disposed on the multi-foldable housing (1201);
a first detecting sensor (1310) disposed in an area adjacent to the first hinge assembly (1270);
a first magnetic member (1320) disposed in an area adjacent to the first hinge assembly (1270); and
a first magnetically permeable member (1330) disposed on the first hinge assembly (1270),
wherein when the second housing (1220) is positioned at a first position with respect to the first housing (1210), an intensity of magnetic flux detected by the first detecting sensor (1310) is a designated threshold or more, and
wherein when the second housing (1220) is positioned at a second position different from the first position with respect to the first housing (1210), the intensity of the magnetic flux detected by the first detecting sensor (1310) is less than the designated threshold.

15. The electronic device (101) of claim 14, further comprising:
a second detecting sensor (1360) disposed in an area adjacent to the second hinge assembly (1280);
a second magnetic member (1370) disposed in an area adjacent to the second hinge assembly (1280); and
a second magnetically permeable member (1380) disposed on the second hinge assembly (1280).
